# EUROPÄISCHE PATENTSCHRIFT

(11) **EP 4 413 863 B1**
(45) Veröffentlichungstag und Bekanntmachung des Hinweises auf die Patenterteilung: **09.04.2025**
(21) Anmeldenummer: 23000018.4
(22) Anmeldetag: 07.02.2023
(51) Int. Cl.: A21D 2/02, A21D 2/04, A21D 2/26, A21D 6/00, A21D 13/066, A21D 13/50, A23P 30/20

(54) **VERFAHREN ZUM KOMBINIERTEN, KONTINUIERLICHEN MISCHEN UND DOSIEREN VON UNTER STATISCHEM DRUCK GASANGEREICHERTEN TEIGEN ODER PASTEN, STEUER- UND/ODER REGELUNGSVORRICHTUNG FÜR DIE DURCHFÜHRUNG EINES DERARTIGEN VERFAHRENS, VORRICHTUNG ZUM DURCHFÜHREN DES VERFAHRENS UND NACH DIESEM VERFAHREN HERGESTELLTE PRODUKTE SOWIE VERWENDUNG SOLCHER PRODUKTE**
PROCESS FOR THE COMBINED, CONTINUOUS MIXING AND METERING OF DOUGHT OR PASTES, FOR THE COMBINED, CONTINUOUS MIXING AND METERING OF DOUGHS OR PASTES, CONTROL AND/OR REGULATING DEVICE FOR REGULTING THE PROCESS, APARATUS FOR CARRYING OUT THE PROCESS, PRODUCTS OBTAINED BY THIS PROCESS AND USE OF THE PRODUCT
PROCÉDÉ DE MÉLANGE ET DE DOSAGE EN CONTINU DE PÂTES OU DE PÂTES ENRICHIES EN GAZ À PRESSION STATIQUE, DISPOSITIF DE COMMANDE ET/OU DE RÉGULATION POUR LA MISE EN OEUVRE D'UN TEL PROCÉDÉ, APPAREIL POUR LA MISE EN OEUVRE DU PROCEDE, PRODUITS OBTENUS PAR CE PROCEDE ET UTILISATION DU PRODUIT

(43) Veröffentlichungstag der Anmeldung: 14.08.2024
(73) Patentinhaber: Roland Murten AG, 3280 Murten (CH); Windhab, Erich, 8261 Hemishofen (CH)
(72) Erfinder: Windhab, Erich, CH-8261 Hemishofen (CH); Zink, Joel, CH-8038 Zürich (CH); Kiechl, Daniel, CH-8102 Oberengstringen (CH)
(74) Vertreter: Maiwald GmbH

(56) Entgegenhaltungen:
- WO-A1-2017/081271
- DANA ELGETI ET AL: "Strategies for the aeration of gluten-free bread – A review", TRENDS IN FOOD SCIENCE & TECHNOLOGY, vol. 46, no. 1, 1 November 2015 (2015-11-01), GB, pages 75 - 84, XP055326605, ISSN: 0924-2244, DOI: 10.1016/j.tifs.2015.07.010
- LIEKE E VAN RIEMSDIJK ET AL: "Preparation of gluten-free bread using a meso-structured whey protein particle system", JOURNAL OF CEREAL SCIENCE, ACADEMIC PRESS LTD, GB, vol. 53, no. 3, 20 February 2011 (2011-02-20), pages 355 - 361, XP028223929, ISSN: 0733-5210, [retrieved on 20110316], DOI: 10.1016/J.JCS.2011.02.006

## Beschreibung

Die Erfindung betrifft ein Verfahren zum gekoppelten Mischen und Dosieren von geschäumten Teigen oder Pasten für die Herstellung von Lebensmitteln, bevorzugt von Backwaren.

Des Weiteren betrifft die Erfindung eine Steuer- und/oder Regelungsvorrichtung für ein Verfahren zur gekoppelten Mischung und Dosierung von Backwaren aus aufgeschäumten Teigen oder Pasten.

Außerdem betrifft die Erfindung eine Vorrichtung zum Durchführen des erfindungsgemäßen Verfahrens.

Weiterhin betrifft die Erfindung nach dem erfindungsgemäßen Verfahren hergestellte Produkte.

Schließlich betrifft die Erfindung die Verwendung solcher geschäumten, teig- oder pastenbasierten Produkte, die nach dem erfindungsgemäßen Verfahren hergestellt wurden.

### Stand der Technik

Konventionellerweise erhalten Backwaren ihre typische schaum-/schwammartige Struktur durch Dampfblasenbildung während eines Backprozesses, wobei Wasserdampfblasen bevorzugt an vorab eingeschlossenen oder durch Gärung gebildeten Mikrogasblasen nukleieren und durch fortschreitende Wasserdampfbildung infolge thermischem Energieeintrag vergrößert werden und gleichzeitig eine Verfestigung des Teigschaumgerüstes durch Proteindenaturierung und Teiltrocknung erfolgt.

In einer Vielzahl von Backwarenprodukten wird die Schaumbildung im Backprozess durch die Zugabe von Treibmitteln (meist Natriumhydrogencarbonat oder Kaliumhydrogenkarbonat) verstärkt. Das gilt auch für den Einsatz von Backhefe, welche durch den Gärprozess CO₂ in Teigen bereits vor dem Backprozess erzeugt und damit insbesondere die weitere Schaumbildung durch Wasserdampf im Backprozess verbessert, nukleiert und unterstützt.

Traditionellerweise erfolgt keine Kontrolle der sich im Backprozess ausbildenden Backwaren-Schaumstruktur, womit sich Schwankungen in der Rezepturzusammensetzung sowie von Prozessparametern auf die resultierende Schaumblasengrößenverteilung mit gegebenenfalls deutlich unregelmäßigen, zum Teil übergroßen Gaseinschlüssen, auswirken. Dies gilt umso mehr, wenn bestimmte Rezepturkomponenten, wie zum Beispiel Getreideproteine, insbesondere Gluten, infolge ihres allergenen Potenzials in sogenannten glutenfreien Backwaren für die Verwendung ausgeschlossen werden sollen. Das Fehlen des hochelastischen Getreideproteins führt zur eingeschränkten Ausbildung eines Proteinnetzwerkes bei der Teigbildung und dessen unterstützender Stabilitätsverbesserung im Backprozess. Dies hat zur Konsequenz, dass Gas-/Wasserdampf-Blasen koaleszieren und damit deutlich vergrößerte Gasblasen bzw. unerwünschte Gaseinschlüsse im Backprodukt entstehen lassen. Ferner führt das Fehlen des Gerüstproteins zur "Entgasung" des Produktes in die Umgebung und somit zum in aller Regel deutlichen Volumenverlust des resultierenden Backproduktes. Für sogenannte glutenfreie Backwaren, welche für ca. 1,5% bis 2% der mitteleuropäischen und nordamerikanischen Bevölkerung infolge allergischer Reaktion auf Gluten (Zöliakie) von Wichtigkeit sind, hat sich darüber hinaus ein Markttrend entwickelt, da regionenabhängig mehr als 20% der Bevölkerung in geschäumten Teigen oder Pasten unterschiedlichen Graden Glutenunverträglichkeit empfinden. Infolgedessen wurde die Entwicklung von glutenfreien Produkten bereits Ende der 1980er Jahre beginnend zu einem marktrelevanten Entwicklungstrend im Backwarenbereich. Demgemäß erfolgte die Patentierung, insbesondere von Rezepturen für Backwaren, welche das langkettige netzwerkbildende Getreidekleberprotein (Gluten) durch Mischungen anderer Pflanzenproteine und/oder Polysaccharid-Mischungen ersetzen, mit dem Ergebnis, dass meist lange Ingredienzien-Listen mit vielen Zusatzstoffen resultierten /1-4/.

In diesem Kontext erfolgte auch die Entwicklung neuer Verfahren, welche die aktive Einbringung von Gasfraktionen in Backwaren mittels physikalischer Methoden (zum Beispiel Hochdruck-Aufschäumverfahren) und nachgeschalteter Teigexpansion unter überkritischen bzw. unterkritischen Gaszustandsbedingungen realisierten /5-14/.

Derartigen, bisherigen in der Literatur (inklusive Patentliteratur) beschriebenen Aufschäumverfahren für Teigsysteme ist gemein, dass die Schaumerzeugung entweder durch Gasdispergierung oder durch Gaslösung mit nachgeschalteter Gasblasenexpansion in Prozessräumen/Apparaten erfolgt, aus welchen nach erfolgter Schaumbildung der Schaumtransport, gegebenenfalls über eine Dosiervorrichtung in die atmosphärische Umgebung zum Zwecke der Abfüllung in Behältnisse und/oder zur Ausformung, zum Beispiel auf Förderbändern, erfolgt. Beim hierbei stattfindenden Schaumtransport durch Rohrleitungen in die Zuführung zu Dosiervorrichtungen bzw. durch Ventile in diesen Dosiervorrichtungen, findet in aller Regel eine ausgeprägte Scherbeanspruchung der erzeugten Schaumstruktur statt. Dies führt häufig zu Schädigungen der Schaumstruktur durch Schaumlamellenbruch und Koaleszenz von Schaumblasen zu größeren Gaszellen. Derartige Schaumblasenvergrößerungen bedingen Strukturinstabilitäten in resultierenden Schaumprodukten. Diese ziehen in nachgeschalteten Behandlungsprozessen (z.B. Formgebungs- und Backprozessen) Volumenverlust und Strukturfehler nach sich /14-18/.

Fehlstrukturentwicklungen treten umso verstärkt auf, je größer die ursprünglichen Gasblasen direkt nach deren Entstehung im Schaumbildungsprozess sind. Typischerweise lassen Dispergierprozesse, welche größere Gasanteile in Fluiden durch Aufprägung von Dispergierströmungen in kleinere Gasblasen zerteilen lassen, weniger feindisperse Schaumstrukturen resultieren, als dies durch eine möglichst vollständige Gaslösung mit nachgeschalteter Renukleation von Mikrogasblasen durch Druckabsenkung über eine heterogene Nukleation erreicht werden kann, sofern eine hinreichend hohe Anzahldichte von Gasblasen-Nukleatoren vorhanden ist /19/.

Die WO 2017/081271 A1 beschreibt eine Möglichkeit nach Gaslösung und definierter Druckentspannung möglichst kleine Gasblasen mit enger Gasblasengrößenverteilung zu erzeugen und diese möglichst umgehend mit einem nachgeschalteten Erhitzungsprozess (Backprozess) durch Proteindenaturierung zu stabilisieren. Der dabei erzeugte Schaum bleibt dennoch in seiner Zuleitungsströmung zu einer Dosiereinheit sowie in der Durchströmung des in dieser agierenden Dosierventils ausgeprägten Strömungskräften ausgesetzt und erleidet damit eine Vergröberung und Verungleichmäßigung der Gasblasengrößenverteilung bis zu seinem Eintritt in eine Backform bzw. seiner Ausformung auf einem Backförderband. Bislang wurde keine Möglichkeit beschrieben, die weitgehende bis vollständige Gaslösung in der Teigmatrix bzw. in der in der Teigmatrix befindlichen Fluidfraktion (in der Regel einer wässrigen kontinuierlichen Fluidphase) in einem gekoppelten Misch- und Dosierprozess für aus aufgeschäumten Teigsystemen hergestellten Lebensmittelsystemen zu kontrollieren und geregelt einzustellen.

Die zunehmende Popularität von proteinreichen Diäten hat die Nachfrage nach proteinreichen und gleichzeitig kohlenhydratarmen Lebensmitteln, insbesondere Backwaren, die bislang einen beträchtlichen Mengenanteil an Kohlenhydraten enthielten, deutlich erhöht. Somit wurden zahlreiche Entwicklungen unternommen, den Kohlenhydratgehalt in derartigen Backprodukten über den Ersatz von Mehl in der Produktformulierung durch eine Proteinquelle zu senken. Während dieser Ansatz das Problem der Bereitstellung eines proteinreichen, kohlenhydratarmen Produkts hinsichtlich einer Rezepturanpassung weitgehend gelöst hat, weisen die resultierenden Produkte im Allgemeinen jedoch nicht die Teighandhabungseigenschaften, das Backvolumen, die Krumenstruktur, die Textur oder den Geschmack eines entsprechenden traditionellen Backproduktes auf, was ihren Markterfolg bislang maßgeblich einschränkt.

Der US-amerikanische Nutrition Labelling and Education Act (NLEA) von 1990 erlaubt die Angabe des Nährstoffgehalts "high protein" auf Lebensmitteletiketten /20/. Die FDA genehmigt diese Angabe, wenn 20% oder mehr des Tageswertes (DV) an Protein in der üblicherweise konsumierten Referenzmenge (RACC) gefunden werden /21/. Basierend auf einer 2000-Kalorien-Diät beträgt der DV von Protein 50 Gramm pro Tag /22/.

Die Referenz "Amounts Customarily Consumed" (RACC) für Backwaren pro Verzehr liegen laut FDA zwischen ca. 50g für Brote, Croissants, leichte Kuchen oder weiche Brezeln bis ca. 110g für Toast, Muffins, Crêpes oder Gemüsekuchen /23/.

Es besteht somit zunehmender Bedarf an Bäckerei-Produkten, die einerseits glutenfrei sind und andererseits hohen Pflanzenproteingehalt und niedrigen Kohlenhydratgehalt besitzen, sowie gleichzeitig die typischen Qualitätskriterien vergleichbarer traditioneller Backwaren umfänglich erfüllen. Diese Qualitätskriterien betreffen (i) Teighandhabung/Bearbeitbarkeit, (ii) Backvolumen, (iii) Krumenstruktur/-textur und (iv) Geschmacks-/Aromaeigenschaften.

Vor diesem Hintergrund besteht das Bedürfnis, eine Technologie bereitzustellen, die diese Forderungen verbessert erfüllen lässt.

Ein erhöhter Anteil an Pflanzenproteinen bei gleichzeitig reduziertem Kohlenhydratanteil ist ernährungsphysiologisch bevorzugt und wirtschaftlich relevant im Hinblick auf die permanent steigende Konsumentennachfrage nach pflanzenproteinreichen Lebensmittelprodukten. Erfindungsgemäß bevorzugte Pflanzenproteinquellen sind Erbsen- und andere Leguminosenproteine (zum Beispiel Soja, Lupine, Ackerbohne), nicht-glutenhaltige Getreide (zum Beispiel Hafer) sowie Algen- und Insektenproteine. Bei Proteingehalten von bis 50 Gew.% (bezogen auf Trockenmasse) resultieren zunehmend anspruchsvolle Anforderungen an den Herstellungsprozess, um insbesondere ein optimales Backvolumen mit damit verbunden minimalen Verlusten an eingeschlossenen Gasblasen sowie eine homogene enge Größenverteilung letzterer zu erzielen.

Hohe Gehalte an anderen Pflanzenproteinen als Gluten können bei Anwendung traditioneller Technologie den Geschmack der Produkte nachteilig beeinflussen sowie inakzeptable Volumen- und Krumenstruktureigenschaften resultieren lassen.

Daher ist es wünschenswert, ein Verfahren zur Herstellung von proteinreichen, kohlenhydratarmen und glutenfreien Backprodukten bereitzustellen, mit welchen sich die Qualitätseigenschaften traditioneller Backprodukte in Bezug auf Teighandhabung, Bearbeitbarkeit, Backvolumen, Krumen-Struktur/Textur und Geschmackseigenschaften kontrollierbar einstellen lassen.

### Aufgaben

Der Erfindung liegt die Aufgabe zugrunde, ein kontinuierliches Verfahren zum gekoppelten Mischen und Dosieren von unter erhöhtem statischem Druck mit Gas angereichertem Teig oder einer Paste für die Herstellung von hinsichtlich Schäumungsgrad und Schaumstruktur kontrolliert aufgeschäumten glutenfreien Backwarenprodukten mit vorbestimmten Pflanzenproteingehalten bereitzustellen.

Des Weiteren liegt der Erfindung die Aufgabe zugrunde, eine Steuer- und/oder Regelungsvorrichtung für ein derartiges Verfahren bereitzustellen.

Außerdem liegt der Erfindung die Aufgabe zugrunde, eine Vorrichtung zum Durchführen des erfindungsgemäßen Verfahrens bereitzustellen.

Weiterhin liegt der Erfindung die Aufgabe zugrunde, Produkte mit eingestellten Schäumungsgrad und Schaumstruktur bereitzustellen.

Schließlich liegt der Erfindung die Aufgabe zugrunde, eine geeignete Verwendung für nach dem erfindungsgemäßen Verfahren hergestellte Produkte bereitzustellen.

### Lösung der Aufgabe betreffend das Verfahren

Diese Aufgabe wird gemäß **Patentanspruch 1** durch ein Verfahren zum kombinierten, kontinuierlichen Mischen und Dosieren von unter statischem Druck gasangereicherten Teigen oder Pasten zur Herstellung aufgeschäumter Produkte, insbesondere Backwaren, bevorzugt glutenfreien Backwaren, gelöst, bei dem eine fließfähige oder rieselfähige, trockene Pulvermischung für Teige oder Pasten mit einem Gehalt an Pflanzenprotein im Bereich von 5 bis 70 Gew. %, bezogen auf die Trockensubstanz, in einen langgestreckten Prozessraum eines motorisch angetriebenen Extruders eingebracht wird, in welchem
(i) durch eine als Fluidzuführvorrichtung-1 zur Herstellung eines hochviskosen Teiges oder einer hochviskosen Paste Fluid zugesetzt und so ein sich kontinuierlich aufbauender, gegen Rückströmungseffekte von Fluid oder Gas dichtender Teig- oder Pastenpfropfen gebildet wird,
(ii) die Viskosität des hochviskosen Teig- oder Pastenpfropfens durch Zudosieren einer zusätzlichen fluiden Komponentenfraktion an mindestens einer weiteren in Förderrichtung von der ersten Fluidzuführvorrichtung-1 beabstandeten Fluidzufuhrstelle deutlich reduziert wird,
(iii) wonach durch eine in axialer Förderrichtung angeordnete Druckgaszuführvorrichtung eine Gaskomponente unter Druck zugeführt und in der Teig- oder Pastenfluidphase feindispergiert und/oder gelöst wird, und
(iv) wobei auf der Austragsseite des als Prozessraum ausgebildeten Verarbeitungsraums mindestens ein als Dosierventilvorrichtung ausgebildetes Teig- oder Pastenaustrags- und Dosierelement angeordnet ist,
(v) dessen Austrittsöffnung in ihrem Querschnitt geregelt oder gesteuert wird, um den für die Gaslösung im Prozessraum erforderlichen statischen Druck aufrechtzuerhalten, und wobei
(vi) eine Messvorrichtung den Gaslösungsgrad zwischen der Druckgaszuführvorrichtung und der Dosierventilvorrichtung kontinuierlich misst,
(vii) und aufgrund einer Druckregelung bis zum Ende der Dosierventilvorrichtung das im Teig oder in der Paste enthaltene Gas in Lösung bzw. Feindispersion gehalten und erst beim Austritt aus einem Ventilauslasskanal der Dosierventilvorrichtung unterstützt durch Stärkepartikeln, welche eine sekundäre, heterogene Gasblasennukleation initiieren, unter Druckabsenkung die Schaumbildung eingeleitet wird, und
(viii) wobei die anschließende Teig- oder Pastenschaumexpansion zu mindestens ≥ 20 %, bevorzugt ≥ 50%, unterstützt durch die angepasste Teig- oder Pastenviskosität erst nach Austritt des Teiges oder der Paste aus der Dosierventilvorrichtung erfolgt.

### Einige Vorteile

Das erfindungsgemäße Verfahren ermöglicht die schonende Dosierung einer viskosen unter Druck mit Gas angereicherten viskosen Teig- oder Pastenmasse unter kontrollierter störungsfreier Ausbildung der Mikroschaumstruktur in der dosierten Teig- oder Pastenmasse. Der glutenfreien, geschäumten Backware können Anteile an Pflanzenproteinen im Bereich 5 bis 70 Gew.%, jeweils bezogen auf die Trockenmasse, zugesetzt sein. Die kontrollierte Schaumstruktureinstellung lässt für glutenfreie und/oder mit Pflanzenproteinen angereicherte Teige/Pasten/Backwaren die Produktqualitätsanforderung hinsichtlich Teighandhabungseigenschaften, Produktvolumen, Krumenstruktur, Textur und Aroma vergleichbar zu konventionellen Backwaren und darüber hinaus verbessert erzielen.

Durch das gekoppelte Misch- und Dosierverfahren gemäß der Erfindung wird eine Technologie bereitgestellt, bei welcher über die Gasanreicherung der Teige oder Pasten unter hohem Druck und die Druckführung über den gesamten Herstellungs- und Dosierprozess sowie unter Nutzung der abgestimmt eingestellten Teig- oder Pastenviskosität eine verzögerte Schaumbildung erst unmittelbar bei Dosierung erreicht wird. Dies gewährleistet auch bei hoher Teig- oder Pastenviskosität/-viskoelastizität die Einstellung einer schaum-/schwammartigen Struktur mit geringer Dichte bzw. hohem Backvolumen sowie bevorzugter Texturkonsistenz ohne Inkaufnahme in herkömmlichen Dosierprozessen erfolgender teilweiser bis vollständiger Schaumstrukturzerstörung.

Das erfindungsgemäße Misch- und Dosierverfahren ermöglicht somit durch Vermeidung einer Strömungsbeanspruchung eines bereits in Herstellungs- und Dosierprozess vorliegenden Teig- oder Pastenschaumes eine teilweise bis vollständige Schaumstrukturzerstörung. Damit wird eine maßgebliche Voraussetzung für die optimal homogene Produktschaumstrukturbildung mit gleichmäßiger, enger Gasblasengrößenverteilung bei definiert eingestelltem Aufschäumungsgrad erfüllt. Dies gewährleistet eine Verbesserung der Schaumstabilität infolge Reduktion von Ostwalt-Reifungseffekten (= fortschreitende Disproportionierung von Gasblasenstrukturen infolge unterschiedlicher blaseninterner Laplace-Drucke aufgrund unterschiedlicher Blasengröße). Gleichmäßigkeit und Stabilität der Schaumstruktur werden ferner dadurch unterstützt, dass gemäß dem erfindungsgemäßen Verfahren die Gasblasennukleation durch entsprechende Kontrolle des lokalen statischen Druckes sowie die Gewährleistung hoher Anzahl-Konzentration und homogener Verteilung von Gasblasen nukleierenden Partikeln, durch heterogene Nukleation am Ende des Dosierdüsenaustritts und somit der maßgebliche Anteil der Gasblasenexpansion infolge Druckentspannung erst außerhalb der Dosierdüse, das heißt in der Backform bzw. auf dem Backförderband erfolgt. Damit entstehen in der Größe eng verteilte Gasblasen in Kugelform, da diese während ihres Expansionsvorganges keine überlagerten Strömungskräfte erfahren. Schließlich ist davon auszugehen, dass die Gleichmäßigkeit der erfindungsgemäß eingestellten Teig- oder Pastenstruktur ein verbessert homogenes Backen unter verkürzter Backzeit, insbesondere für den Fall des erfindungsgemäß bevorzugten, kombinierten Mikrowellen-Konvektionsbackens, ermöglicht.

Darüber hinaus erlaubt die geregelte Einstellung des gelösten Gasanteiles im Teig- oder Pastenprodukt mit einhergehender, wie vorab beschriebener gleichmäßiger Erzeugung einer mikrogeschäumten Teig- oder Pasten- und Backproduktstruktur eine infolge nicht erforderlicher Hefegährung deutlich verkürzte Führung des gesamten Produktionsprozesses für entsprechend erzeugte Backwaren mit einhergehender deutlicher Reduktion von Produktfehlern und somit maßgeblich gesteigerter Produktionseffizienz.

### Weitere erfinderische Ausgestaltung

Weitere erfinderische Ausgestaltungen sind in den **Patentansprüchen 2** bis **6** beschrieben.

**Patentanspruch 2** ist dadurch gekennzeichnet, dass der Teig, die Paste oder das Pulver in einem oder mehreren Extrudern mit jeweils mindestens einer, bevorzugt zwei motorisch angetriebenen, zonenweise unterschiedlich mit Förder- und/oder Misch- und/oder Dispergierelementen bestückten Extruderschnecke(n) transportiert wird, wobei der/die betreffende(n) Extruder während des Förderprozesses an beiden Enden gasdicht verschlossen wird/werden, sodass durch die Zugabe von Gas in den Prozessraum zur Gasdispergierung und/oder Gaslösung ausgebildeten Teil des Innenraumes des betreffenden Extruderschneckenkanals unter Druck kein Gasverlust auftritt, und das Gas im Teig oder in der Paste innerhalb des betreffenden Teilbereiches des Extruderschneckenkanals unter erhöhtem statischen Druck kontrolliert vollständig fein dispergiert und/oder gelöst wird und keine Schaumbildung bis unmittelbar vor der Austrittsöffnung der Dosierventilvorrichtung initiiert wird.

Die Verfahrensweise nach **Patentanspruch 3** ist dadurch gekennzeichnet, dass ein rieselfähiges, trockenes Pulver oder eine rieselfähige Pulvermischung zur Herstellung eines Teiges oder einer Paste in den Extruderschneckenkanal mindestens einer oder mehrerer, motorisch angetriebenen Extruderschnecke(n) eingebracht und dieser rieselfähigen Pulvermischung oder dem rieselfähigen Pulver am Anfang des Extruderschneckenkanals ein bevorzugt wässriges Fluidsystem zugesetzt wird zur Herstellung eines hinreichend hochviskosen Teigs oder einer hochviskosen Paste, der bzw. die im vorderen Bereich des Extruderschneckenkanals als fluid- und gasdichter Verschlusspfropfen verwendet wird, und im Abstand davon im Extruderschneckenkanal zur Herstellung eines deutlich verdünnten, niedrig viskosen Teiges oder einer niedrig viskosen Paste diesem bzw. dieser ein weiterer Anteil eines bevorzugt wässrigen Fluidsystems zugesetzt wird, und diesem niedrig viskosen Teig oder dieser niedrig viskosen Paste anschließend Gas unter Druck zugesetzt wird, und dieses Gas unter überlagerter Scherung im Extruderschneckenkanal insbesondere im Spalt zwischen co-rotierenden Förderschnecken bevorzugt erzeugten dünnen Strömungsschichten in einen Lösungs- bzw. Mikrodispersionszustand mit Gasbläschen im Durchmesserbereich ≤ 10 Mikrometer, bevorzugt ≤ 4 Mikrometer im Teig- oder Pastensystem überführt wird, sowie unter Vermeidung von Schaumbildung dieser Lösungs-/Dispersionszustand erhalten bleibt, bis in dem gashaltigen Teig oder in der gashaltigen Paste kurz vor Austritt aus einer oder mehreren Austrags-/Dosiervorrichtungen durch sekundäre, heterogene Gasblasennukleation und Druckabsenkung die Blasenkeimbildung gezielt eingeleitet und verstärkt wird.

Nach den Verfahrensweisen gemäß den Patentansprüchen 2 und 3 werden die Rahmenbedingungen für die kontrollierte Einstellung definierter statischer Druckverhältnisse in der Gaslösezone VI des Prozesses festgelegt. Dabei spielen die erfindungsgemäße Ausbildung eines "Teigpfropfes" zur Abdichtung des Prozessraumes in Gegenrichtung zur kontinuierlichen Transportrichtung, ebenso wie die dafür erforderliche erfindungsgemäß abgestimmte Fluiddosierung in Abhängigkeit des einzustellen statischen Gaslösungsdruckes unter vorgegebenen Temperatur- und Verweilzeitbedingungen eine maßgebliche Rolle.

**Patentanspruch 4** beschreibt ein Verfahren, bei welchem die Regelung der Fluidzufuhr an den zwei oder mehreren Fluidzuführvorrichtungen im Extruderschneckenkanal in Abhängigkeit der Teig- oder Pastenviskosität vorgenommen wird, wobei in einer Mischzone Dichtungsbedingungen gegen Fluid- und Gasrückströmungen aus den in Strömungsrichtung der Mischzone nachgeordneten Fluidzuführzone-2 sowie insbesondere der Druckgaszuführzone durch die Ausbildung eines den Extruderschneckenkanal dynamisch abdichtenden Teig- oder Pastenpfropfens hoher Viskosität realisiert werden, wodurch in Folge dieser dynamischen Abdichtung statische Drucke in der als Gasdispergier- und -lösezone ausgebildeten Gaslösungsmess- und Extruderaustrittszone zwischen 5 bis 100 bar und damit optimale Gaslösungs- und/oder Mikro-Dispergierbedingungen für die Gasphase in dem Teig oder in der Paste bei Verweilzeiten in dieser als Gasdispergier- und -lösezone ausgebildeten Gaslösungsmess- und Extruderaustrittszone zwischen 10 bis 120 Sekunden, bevorzugt zwischen 30 bis 60 Sekunden, bereitgestellt werden, wobei der axiale Abstand zwischen den Fluidzuführvorrichtungen stufenlos eingestellt sowie letztere in jeweils vorbestimmten, ggf. auf die Teig- oder Pastenrezeptur abgestimmten Positionen arretiert werden, und der mit Gas angereicherte Teig oder die Paste in einen Behälter, eine Gieß- oder Backform, eine Verpackung oder auf ein Förderband über ein oder mehrere als Dosierventilvorrichtung(en) ausgebildete Austrags-/Dosierelemente ausgetragen werden, wobei eine statische Drucksteuerung/Druckführung die Einstellung des Grades an Gas-Mikrodispergierung und/oder Gaslösung im Teig oder in der Paste bewirkt, sowie für den gelösten Gasanteil die Gasblasenkeimbildung oder die Einleitung der Blasenexpansion an das Austrittsende der als Dosierventilvorrichtung(en) ausgebildeten Austrags-/Dosierelemente verlegt und die weitere Blasenexpansion und Schaumbildung zu mindestens ≥ 20 %, bevorzugt ≥ 50% in dem bereits dosierten Teig oder in der Paste vollzogen wird, womit eine strömungsmechanisch ungestörte räumlich gleichmäßige Gasblasenexpansion mit resultierender enger Blasengrößenverteilung beschrieben durch charakteristische SPAN-Werte (SPAN = (x_{90,3}-x_{10,3})/x_{50,3},) für den dosierten, geschäumten Teig oder die geschäumte Paste im Bereich von ≤ 1.5, vorzugsweise ≤ 1.2, am meisten bevorzugt von ≤ 1, sowie Schaumblasen- bzw. Porendurchmesser x_{50,3} (A) von 4 bis 200 Mikrometern, bevorzugt von 20 bis 100 Mikrometern, für den frisch extrudierten, aufgeschäumten Teig oder die Paste, sowie (B) von 10 bis 250, bevorzugt von 20 bis 150 Mikrometern für den aus geschäumtem Teig oder der Paste durch Nachbehandlung mit optimierten Backprozessen erzeugte Produkte, erzielt werden, und wobei zur quantitativen Einstellung der mittleren Blasen-/Porendurchmesser (x50,3) sowie deren Größenverteilungsbreite (SPAM) eine oder mehrere der folgenden Systemparameter als Stellgrößen verwendet werden:
(a) Teig- oder Pastenviskosität,
(b) Anzahldichte der dem Teigsystem hinzugefügten Blasenkeimbildungs-Nukleator-Partikeln,
(c) Teig- oder Pasten Massenstrom,
(d) eingetragener, Gesamtmasse-bezogener Gasanteil
(e) Drehzahl der Extruderschnecken,
(f) Öffnungsquerschnittsflächen der Dosierventile, welche in Abhängigkeit von (a) bis (e) die räumlichen und zeitlichen Druckentspannungsgradienten festlegen, wobei letztere mit den entsprechenden räumlichen und zeitlichen Gasblasen-Nukleations- und Expansionsgradienten direkt korrelieren.

**Patentanspruch 5** ist dadurch gekennzeichnet, dass die Zufuhr von Fluid, bevorzugt wässriger Basis, und Gas in Abhängigkeit von der Teig- oder Pastenrezeptur gesteuert oder geregelt eingestellt wird, wobei (A) die erste Fluiddosierung mittels der Fluidzuführvorrichtung-1 bei einer in Förderrichtung gemessenen axialen Extruderschneckenlänge L1 erfolgt, die dem 2- bis 8-fachen des Extruderschneckendurchmessers D entspricht (L/D = 2 bis 8), und dass die zweite Fluiddosierung mittels der Fluidzuführvorrichtung-2 bei einer axialen Extruderschneckenlänge L2 aufgebracht wird, die mindestens dem 10- bis 14-fachen des Extruderschneckendurchmessers D entspricht (L/D = 10 bis 14), und (B) die Dosierung des Schäumungsgases über die Druckgaszuführvorrichtung in Form von CO₂ oder N₂ oder N₂O₂ oder Luft oder Mischungen daraus unter einem statischen Druck von 5 bis 100 bar, vorzugsweise unter einem Druck von 15 bis 35 bar, mit einem Gasvolumenanteil zwischen 5 bis 70 Vol.-%, bezogen auf den druckentspannten Umgebungszustand des Teiges bzw. der Paste, im Extruder bei einer axialen Extruderschneckenlänge L3 erfolgt, die mindestens dem 12- bis 16-fachen des Extruderschneckendurchmessers D (L/D = 12 bis 16) entspricht, während für den Längenbereich der Gasdispergier- und -lösungszone mindestens 12 ≤ L/D < 20, vorzugsweise 14 ≤ L/D < 26, bei Verwendung eines Extruders mit einer Gesamtlänge von 28D gilt, wohingegen diese und alle zuvor angegebenen L/D-Längenskalen mit dem Faktor (L/D)ₘₐₓ/28 multipliziert werden bei Verwendung eines Extruders mit (L/D)ₘₐₓ verschieden von 28.

In **Patentanspruch 6** ist ein Verfahren beschrieben, dass dadurch gekennzeichnet ist, dass bei einer Temperatur unter 160°C, vorzugsweise unter 100°C und weitergehend bevorzugt unter 60°C durchgeführt wird, und der geschäumte Teig oder die geschäumte Paste nach dem Austragen in einen Behälter, eine Gieß- oder Backform, ein Verpackungsmittel oder auf ein Förderband entweder gebacken wird mittels Konvektionsbackprozess oder vorzugsweise mittels eines kombinierten Mikrowellen-Konvektionsbackprozesses oder im frisch extrudierten oder teilweise gebackenen Zustand gekühlt oder eingefroren wird.

### Lösung der Aufgabe betreffend die Steuerung und/oder Regelungsvorrichtung

Diese Aufgabe wird durch eine Steuer- und/oder Regelungsvorrichtung gemäß **Patentanspruch 7** gelöst, mit einer oder mehreren motorisch angetriebenen Extruderschnecke(n), die durch eine zum Beispiel als Trichter mit Austragsorgan ausgebildeten Pulver- oder Schüttgutdosiervorrichtung beschickt werden, wobei in einer Fluidzuführzone-1 mittels Fluidzuführvorrichtung-1 einer rieselfähigen Teig- oder Pasten- oder Pulvermischung eine rezeptspezifisch festgelegte Menge einer Flüssigkeit, bevorzugt auf wässriger Basis, zugeführt wird, um in einer nachgeschalteten Mischzone einen Teig oder eine Paste bestimmter, hoher Viskosität η₁ zu erzielen und wobei diesem Teig oder dieser Paste in einer Fluidzuführzone-2 mittels Fluidzuführvorrichtung-2 rezeptspezifisch eine zusätzliche Fluidmenge zudosiert wird, um den Teig oder die Paste bei einer bestimmten erniedrigten Viskosität η₂ < η₁ einzustellen, und ferner Gas nachfolgend in einer Druckgaszuführzone mittels Druckgaszuführvorrichtung stromaufwärts im axialen Abstand von der Fluidzuführvorrichtung-2 unter Druck kontrolliert zudosiert wird, um im Endprodukt eine bestimmte Schaumdichte zu erzielen, wobei anschließend das eingebrachte Gas unter kontrolliert eingestelltem, erhöhten statischen Druck gelöst oder homogen mikrodispergiert wird, während ein die elektrische Leitfähigkeit messender Sensor den Lösungs- bzw. Mikrodispersionsgrad dieses Gases in der wässrigen Teig- oder Pastenphase ermittelt, um den Grad der Erreichung eines Gleichgewichtswertes der Gaslösung/Mikrodispergierung während einer vorgegebenen Teig- oder Pastenverweilzeit am Ende der Gasdispergier- und -lösezone VI in dem als Gaslösungsmess- und Extruderaustrittszone VII bezeichneten Bereich der Vorrichtung anzuzeigen, wobei auf dieser Messung basierend die geregelte Einstellung des Anteils an dispergiertem bzw. gelösten Gases mittels einer Feedback-Schleifen-Regelung unter Einsatz von Stellgliedern erreicht wird, welche entweder (a) eine als Bypass-Gegendruckventil ausgebildete Gegendruckventilvorrichtung in einer Vorbereitungsphase des Dosierprozesses oder (b) mindestens eine Dosierventilvorrichtung in der aktivierten Dosierphase des Prozesses sind, und wobei der Öffnungsgrad dieser Ventile den statischen Druck in der Gasdispergier- und -lösezone VI bestimmt, und somit die Dispergier- und/oder Lösungskinetik und die Anteile des gelösten bzw. mikrodispergierten Gases bzw. Gasgemisches im Teig- oder in der Paste regelt, was durch Erreichen eines entsprechend in-line gemessenen Leitfähigkeitswertes κ bestätigt wird.

Eine weitere Ausführungsform ist gemäß **Patentanspruch 8** dadurch gekennzeichnet, dass die kontrollierte Einstellung der Teig- oder Pastenscherviskosität
A: in der Fluidzuführzone-1 auf einen Wert von 10 ≤ η₁ < 1000 Pas, bevorzugt 50 ≤ η₁ < 200 Pas, erfolgt, der die Abdichtung durch den Teig oder die Paste im Extruderschneckenkanal gegenüber Gas oder Fluidrückfluss aus der Fluidzuführzone-2 IV bzw. der Druckgaszuführzone V stromaufwärts gewährleistet, wobei die Viskosität η₁ das nicht-Newtonsche Fließverhalten des Teigs berücksichtigt, indem sie sich auf eine mittlere Schergeschwindigkeit von 100 s⁻¹ bezieht, die vorzugsweise in der Mischzone III wirkt und die zugehörige Viskositätsfunktion η(γ.) offline durch Teig- oder Pastenrheometrie vorzugsweise mittels Hochdruckkapillarrheometer oder Rotationsrheometrie bestimmt wird, - sowie:
   B: in der Fluidzuführzone-2 auf einen Wert von 1 Pas ≤ η₂ < 20 Pas, bevorzugt 5 Pas ≤ η₂ < 10 Pas, erfolgt und in der somit viskositätserniedrigten fluiden Teig- oder Pastenphase nach Druckgaszufuhr in der Druckgaszuführzone in der zu dieser nachfolgend angeordneten Gasdispergier- und -lösezone VI innerhalb einer charakteristischen Verweilzeit von 30 bis 300 s, bevorzugt 50 bis 120 s, hinreichend Gas mikrodispergiert und/oder gelöst wird, um einen Schäumungsgrad im Endprodukt, ausgedrückt als Gasvolumenanteil φ_{G,v} am Gesamtproduktvolumen, im Bereich 10 ≤ φ_{G,v} < 75 Vol.-%, bevorzugt 20 ≤ φ_{G,v} < 50 Vol.-%, und damit verbunden eine entsprechend reduzierte Dichte im Endprodukt zu erzielen, wobei die Viskosität η₂ das nicht-Newtonsche Fließverhalten des Teigs oder der Paste berücksichtigt, indem sie sich vorzugsweise auf eine durchschnittliche Schergeschwindigkeit von 200 s⁻¹ bezieht, welche in der Gasdispergier- und -lösezone VI vorzugsweise wirkt, wobei die relevante, zugehörige Viskositätsfunktion η(γ.) offline mittels Hochdruckkapillarrheometrie oder Rotationsrheometrie bestimmt wird.

In **Patentanspruch 9** ist eine Steuer- und/oder Regelungsvorrichtung beschrieben, die dadurch gekennzeichnet ist, dass die Einstellung des statischen Druckes in der Gasdispergier- und -lösezone VI in Abhängigkeit des in der anschließenden Gaslösungsmess- und Extruderaustrittszone VII gemessenen elektrischen Leitfähigkeitswertes κ erfolgt, wobei der Grad der Erreichung eines druckabhängigen Gleichgewichtswertes für die elektrische Leitfähigkeit κ_{equ} (pₛₜₐₜ.) Maß für den Grad des Gas-Teig-Stoffüberganges ist, welcher während der Teig- oder Pastenverweilzeit im Extruderschneckenkanal innerhalb der Gasdispergier- und -lösezone VI erreicht wird, und somit die Konzentration des feindispergierten und/oder gelösten Gases im Teig oder in der Paste c_{GAS} nach Maßgabe des in-line gemessenen Leitfähigkeitswertes κ rezepturspezifisch eingestellt wird, wobei die relevante Kombination aus Verweilzeit t_{V(30)} bzw. Teig- oder Pastenvolumenstrom (dV/dt)_{Produkt} und statischem Druck pₛₜₐₜ₍₃₀₎ in der Gasdispergier- und -lösezone VI auf Basis einer Kalibrierfunktion κ = f(pₛₜₐₜ₍₃₀₎, tv) eingestellt wird, welche in einem Vorversuch mittels Extruder / Gegendruckventilvorrichtung - Kopplung ermittelt wird, und wobei in diesem Vorversuch unter Variation der freien Strömungsquerschnittsfläche A_{GDV} in der Gegendruckventilvorrichtung für gewählte Extruderschneckendrehzahl n_{S} und Teig- oder Pastenmassenstrom (dm/dt)_{Produkt}, der statische Druck Pₛₜₐₜ₍₃₀₎ am Ende der Gasdispergier- und -lösezone VI, sowie die elektrische Leitfähigkeit κ in der anschließenden Gaslösungsmess- und Extruderaustrittszone VII ermittelt werden, woraus für die reguläre Prozessführung mit kontinuierlicher Dosierung übertragbare Optimalkombinationen der genannten Prozessgrößen nach Maßgabe des im dosierten Teiges zu erreichenden Aufschäumgrades abgeleitet und in einer Datenbank gespeichert werden.

Gemäß **Patentanspruch 10** ist eine Steuer- und/oder Regelungsvorrichtung dadurch gekennzeichnet, dass bei vorgegebenem Teig- oder Pastenmassenstrom (dm/dt)_{Produkt} und rezepturbedingter Teig- oder Pastenviskosität eine Feedbackschleifen-Regelung mit einer vorgegebenen elektrischen Leitfähigkeit κₛₑₜₚₒᵢₙₜ als Führungsgröße w angewendet wird, wobei der statische Druck pₛₜₐₜ₍₃₀₎ in der Gasdispergier- und -lösezone VI als indirekte Stellgröße y sowie die in der Gaslösungsmess- und Extruderaustrittszone VII gemessene elektrische Leitfähigkeit κ als Regelgröße einbezogen werden, und wobei ferner als Stellglieder entweder eine Gegendruckventilvorrichtung in einer BypassLeitung, oder mindestens eine Dosierventilvorrichtung, und/oder eine Druckgaszuführvorrichtung und/oder eine mit dem Extruderschnecken-Antriebsmotor gekoppelte Drehzahlverstelleinrichtung für die Extruderschneckendrehzahl ns verwendet werden, um den statischen Druck in der Gasdispergier- und -lösezone definiert einzuregeln, wobei eine Gegendruckventilvorrichtung in einer Bypassleitung in einem Vorbereitungslauf (A) zum regulären Dosierprozess eingesetzt wird zur Ermittlung des statischen Druckes pₛₜₐₜ₍₃₀₎ in der Gasdispergier- und -lösezone VI, welcher unter den bestimmten hinsichtlich Teig- oder Pastenmassenstrom (dm/dt)_{Produkt}, Gasmassenstrom (dm/dt)_{Gas} und Schneckendrehzahl ns eingestellten Prozessbedingungen unter Vorgabe von Produktrezeptur und Schneckengeometrien erzielt wird, und welcher Gaslösungs- bzw. Mikrodispersionsgrad (dm/dt)_{Gas(L,D)} / (dm/dt)_{Gas}, gemessenen über die elektrische Leitfähigkeit κ [(dm/dt)_{Gas(L,D)} / (dm/dt)_{Gas}], bestimmt, welche sich in der zugeordnet realisierten Verweilzeit tv(30) in der Gasdispergier- und -lösezone VI, einstellt, wobei (dm/dt)_{Gas} den Gesamtmassenstron an zudosiertem Gas und (dm/dt)_{Gas(L,D)} die Massenströme des in Lösung gegangenen (dm/dt)_{Gas(L)} bzw. des micro-dispergierten nicht in Lösung gegangenen Gasanteils (dm/dt)_{Gas(D)} bezeichnen, wobei letztere beiden Größen zusätzlich von der verwendeten Gasart abhängen, und wobei beim Umschalten von diesem im Bypass mit Gegendruckventilvorrichtung vorgenommenem Vorbereitungslauf (A) auf den regulären Dosierprozess (B), bei welchem ein oder mehrere angeschlossene Dosierventilvorrichtungen aktiviert werden, diese durch Einstellung der (des) Dosierventil-Öffnungsgrade(s) gewährleisten, dass der statische Druck und der damit eingestellte, über die elektrische Leitfähigkeit des Teiges oder der Paste gemessene, Gaslösungs- bzw. Gasdispergierungsgrad in der Gasdispergier- und -lösezone VI auf gleichem Niveau wie im Vorbereitungstestlauf mittels Gegendruckventilvorrichtung in der Bypassleitung, vorliegen, und dass für den regulären Verlauf des Dosierprozesses (B) 2n Dosierventilvorrichtungen mit n = 1 bis 20, n die halbe Anzahl der eingesetzten Dosierventilvorrichtungen bezeichnend, in zwei Gruppen mit jeweils n Dosierventilvorrichtungen alternierend dosieren, und damit das statische Druckniveau in der Gasdispergier- und -lösezone VI beim Umschalten zwischen den zwei hinsichtlich Strömungsdruckverlusten gleichartig ausgelegten Dosierventilvorrichtungs-Halbgruppen, abgesehen von vernachlässigbar kurzzeitigen (< 0.5 s) Druckschwankungen beim Umschaltvorgang, konstant bleibt.

### Einige Vorteile

Grundsätzlich werden in den vorerwähnten Steuer- und/oder Regelungsansprüchen die erfindungsgemäßen technischen Rahmenbedingungen für das Wechselspiel zwischen einzustellendem statischen Druck, zu lösender Gasmenge, Gasart und zugeordneten geometrischen Verhältnissen des Reaktionsraumes in der beispielhaften Ausführung eines Doppelwellenextrudersystems weitergehend beschrieben. Die Lösungskinetik des zu lösenden Gases wird durch den statischen Druck, die Temperatur und das spezifische Gaslösungsverhalten (abhängig von der Gasart) in der vorgegebenen Teigrezeptur bestimmt. Da je nach Teigrezeptur unterschiedliche Wassergehalte und in der Wasserphase gelöste Stoffe vorliegen, werden zur Verfahrensauslegung erforderliche Gaslöslichkeitskinetiken unter Einstellung entsprechend relevanter Rahmenbedingungen in einer Labormessapparatur bestimmt. Dabei werden erfindungsgemäß in dieser Apparatur auch Strömungsverhältnisse der Teig- oder Pastenmasse eingestellt, welche typische Scherbeanspruchungen, wie sie in den verwendeten Extruderschneckengeometrien auftreten, nachgestellt. Damit werden erfindungsgemäß ermittelte Gaslöslichkeitskinetiken zur Auslegung von Strömungsverhältnissen und Verweilzeiten im Prozessraum, in welchem die Gaslösung erfolgt, bestimmt.

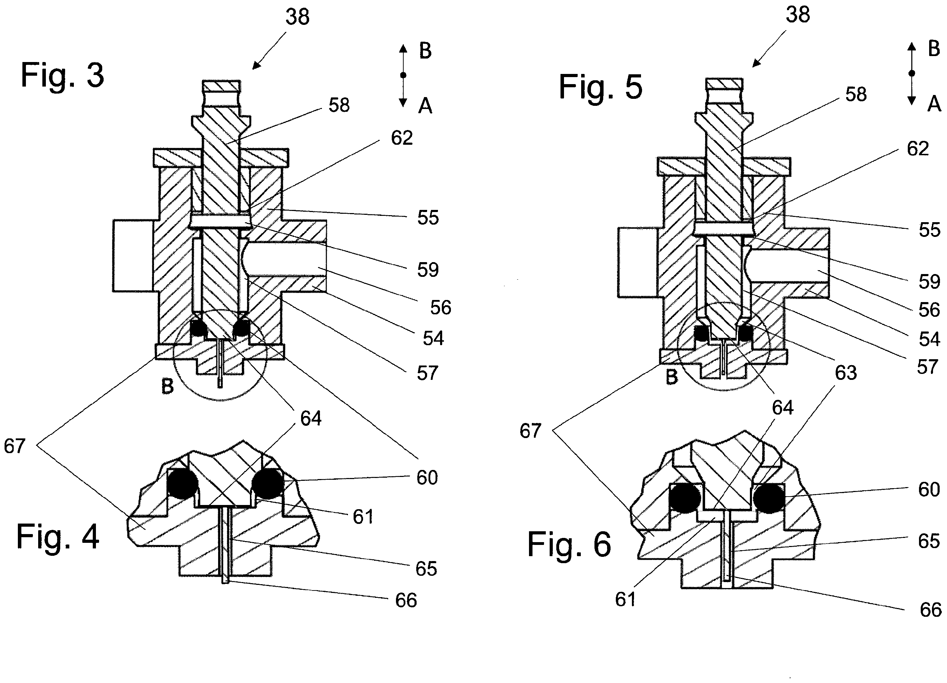

Am Ende der erfindungsgemäßen Gasdispergier und -lösezone werden durch einen installierten Leitfähigkeitssensor die Anteile der gelösten oder ungelösten Gasanteile erfasst. Bei Verwendung von zum Beispiel Kohlendioxid (CO₂) als Schäumungsgas wird erfindungsgemäß die Dissoziation des CO₂ in der Teig/Pasten-Wasser-Phase als entscheidende Einflussgröße auf die Leitfähigkeit des Teig- oder Pastensystems bzw. deren Veränderung bestimmt. Für andere zur Aufschäumung zu verwendende Gase (zum Beispiel N₂, N₂O₂), die in wässriger Lösung keine Dissoziation und damit verbundene elektrochemische Veränderungen im System verursachen, wird der ungelöste, feindispergierte Gasanteil, der zu einer Verringerung der Leitfähigkeit führt, erfindungsgemäß als Maß für den Grad der Gasanreicherung/Gasfeindispergierung im Teig- oder Pastensystem verwendet. In Kombination mit dem Leitfähigkeitssensor wird erfindungsgemäß ein Gegendruckventil in einer Extruderausgangsbypassleitung installiert, um den grundlegenden Regelkreis zu vervollständigen. Die freie Querschnittsfläche des Gegendruckventils wird in Abhängigkeit von der Teig- oder Pastenfördermenge (Massenstrom dm_{Teig}/dt) und der zudosierten Gasmenge erfindungsgemäß so eingestellt, dass an einer gewählten Position im Extruderschneckenkanal (typischerweise am Ende der Gasdispergier- und -lösezone (30); in Fig. 3 bei L/D = 42) ein statischer Druck erreicht wird, bei dem die Leitfähigkeit einen Gleichgewichtswert annimmt (s. Fig. 3: Zum Beispiel Leitfähigkeitswert von 4.35 S/m für 0.7 Gew.-% CO₂ bei 30 bar), der einer definierten Masse an gelöstem Gas und einem zugeordneten Gasvolumenanteil φ_{G} im Produkt (hier zum Beispiel: 0.7 Gew.-% CO₂ => φ_{G} = 0.75) entspricht. Unterhalb dieses zugehörigen Gasgewichtsanteils an Gas (hier: CO₂), der unter Umgebungsdruck einem Gasvolumenanteil von ca. φ_{G} = 75% (= Overrun von ca. 300%) entspricht kann somit durch die erfindungsgemäße Regelung die Einstellung eines bestimmten Gasanteils (bzw. Aufschäumgrades = Overrun) im resultierenden geschäumten Produkt realisiert werden. Die statische Druckeinstellung mittels Staudruckventil im Extrusionsversuch ist zusätzlich abhängig vom Teig- oder Pastenmassenstrom und der Teig- oder Pastenviskosität, da diese maßgeblichen Einfluss auf die wirkenden Strömungskräfte im Staudruckventil haben. Diese Zusammenhänge werden in Kalibrierungsversuchsführungen teigrezepturspezifisch ermittelt und dem entsprechenden Regelalgorithmus zu Grunde gelegt.

Bei Aktivierung der Regelung wird der statische Druck in der Gasdispergier- und -lösezone kontrolliert über das Gegendruckventil eingestellt und der Leitfähigkeitssensor aktiviert, um den möglichst vollständigen Lösungsgrad des hinzugefügten Gases unter den gegebenen Druck-, Temperatur- und Verweilzeitbedingungen zu detektieren. In Abwandlung des hier beschriebenen "normalen Regelfalles" kann der Gaslöslichkeitssensor auch eine definierte Teillöslichkeit des Gases erfassen und eine entsprechende Anpassung des statischen Druckes ermöglichen.

Der maßgebliche Vorteil einer vollständigen Lösung des zugefügten Gasanteiles besteht darin, dass verbessert determinierte Rahmenbedingungen für die Einstellung der Dosierventilvorrichtung zur Vermeidung von Schaumbildung in den Dosierleitungen bzw. im Dosierventil gegeben sind, was die optimale Voraussetzung zur homogenen Teig- oder Pastenschaumerzeugung nach Dosierdüsenaustritt ohne lokale mechanische Strukturschädigung darstellt. Aufgrund natürlicher Produktbestandteile, welche in Teig- oder Pastenrezepturen Verwendung finden, sind im erfindungsgemäßen Prozessablauf veränderte/schwankende Gaslöslichkeitsbedingungen zu erwarten. Diese können durch die erfindungsgemäße Regelung unter Verwendung des Leitfähigkeitssensors und des Gegendruckregelventils ausgeglichen werden und lassen damit auch unter schwankenden Rohstoffbedingungen vergleichbare Schaumstrukturen erzielen.

### Lösung der Aufgabe betreffend die Vorrichtung

Diese Aufgabe wird durch eine Vorrichtung zum Durchführen des Verfahrens nach **Patentanspruch 11** gelöst. Zur kombinierten, kontinuierlichen Mischung und Dosierung von unter statischem Druck gasangereicherten Teigen oder Pasten, zur Herstellung aufgeschäumter Produkte, insbesondere Backwaren, bevorzugt glutenfreier Backwaren unter Verwendung einer oder mehrerer motorisch angetriebener Extruderschnecken, jeweils mit einem Einfülltrichter für rieselfähiges, trockenes Pulver oder rieselfähigen trockenen Schüttgutmischungen, mindestens zwei in Längsachsrichtung des betreffenden Extruders angeordneten Fluidzuführvorrichtungen, mittels derer über Ventile gesteuert oder geregelt unterschiedliche Fluidmengen dem Extruderschneckenkanal zugeführt werden, einer Druckgaszuführvorrichtung, über die Gas unter Druck von 5 bis 100 bar in den Extruderschneckenkanal eingeleitet wird und in Förderrichtung (X) dem Extruderschneckenkanal in prozesspezifischen Zonen I bis VII zugeordneten Mess- oder Sensorvorrichtungen, die den statischen Druck bzw. die statische Druckentwicklung entlang des Extrusions-Prozessraumes und den gelösten bzw. mikrodispergierten Gasanteil im Teig oder in einer Paste nach der Gasdispergier- und -lösezone VI messen, sowie einem in einer Bypassleitung angeordneten, als Gegendruckventilvorrichtung ausgebildeten Teig- oder Pastenaustrags-Staudruckventilelement, dessen Austrittsquerschnitt zum Aufbauen eines statischen Gegendrucks im Extruderschneckenkanal in Folge Verwendung eines mittels zweier Verstellkolben in seinem Querschnitt einstellbaren flexiblen Hochdruckschlauches stufenlos veränderbar und in der jeweiligen Einstellposition arretierbar ist, sowie mindestens einer als Teig- oder Pastenaustrags-Dosierventilelement ausgebildeten Dosierventilvorrichtung, welche eine oder mehrere Dosierdüsen aufweist, letztere gegebenenfalls angeordnet in Gruppen mit auswechselbarer oder auf Dosierdruck, Fluidviskosität und Dosiermassenstrom abgestimmt einstellbaren Düsenendausströmquerschnitten.

### Einige Vorteile

Wichtige Teile der erfindungsgemäßen Vorrichtung sind (a) die kontinuierliche Misch- und Fördervorrichtung, welche erfindungsgemäß bevorzugt als co-rotierender Doppelwellenextruder ausgeführt ist, (b) die Zuleitungs- und Dosiervorrichtungen mit an festgelegten Positionen der Misch-/Fördervorrichtung (Extruder) platzierten Anschlussstellen für die Flüssigkeitskomponenten (bevorzugt Wasser/wässrige Lösungen) und das Schäumungsgas (typischerweise CO₂, N₂, N₂O₂), (c) die Bypass-Produktleitung mit integriertem Staudruckventil (Gegendruckventilvorrichtung) zur statischen Druckeinstellung sowie (d) die Dosierventilvorrichtung mit integriertem Dosierventil bzw. Dosierventilen. Letztere besitzen optimierte Kanal/Spalt-Geometrien um die Entspannungsstrecke des zu dosierenden Teigsystems mit unter Druck gelöstem Gasanteil erfindungsgemäß extrem kurz zu halten.

Auswahl, Arrangement und erfindungsgemäße Ausführung der vorab beschriebenen Vorrichtungselemente bedingen: (i) Die Einstellung eines definierten statischen Druckes in der Gasdispergier- und -lösezone, (ii) die Messbarkeit des gelösten Gasanteils in der Teigmasse in der Gaslösungsmess- und Extruderaustrittszone, (iii) die Einstellbarkeit des statischen Druckes über den Öffnungsgrad der Bypass-Gegendruckventilvorrichtung bei geschlossenem Dosierventil, d.h. vor Aktivierung des Dosiervorganges, sowie (iv) nach Aktivierung des Dosiervorganges die definierte Dosierung einer Teig- oder Pastenmenge mit gelöstem Gasanteil vor dessen maßgeblicher Expansion durch Schaumbildung über das Dosierventil.

### Weitere erfinderische Ausgestaltungen

Weitere erfinderische Ausgestaltungen sind in den **Patentansprüchen 12** bis **13** beschrieben, die eine optimale Ausgestaltung einer unter Produktionsbedingungen arbeitenden Vorrichtung beschreiben, mit der sich das erfindungsgemäße Verfahren zum Herstellen großer Mengen (t/h) an Produkten aus aufgeschäumten Teigsystemen einsetzen lässt.

Gemäß **Patentanspruch 12** ist eine vorteilhafte Vorrichtung gemäß der Erfindung dadurch gekennzeichnet mit mindestens einer als Austrags-Dosierventil-Element ausgebildeten Dosierventilvorrichtung (38), die durch einen Verstellkolben (48) verschließbar ist, welcher im geöffneten Zustand dieser Dosierventilvorrichtung den Austrittsdüsenquerschnitt frei gibt und eine große Strömungsquerschnittsfläche A1 bis zur Ventilauslasskammer (61) aufweist sowie nachfolgend auf kurzer Länge von 1 bis 40 mm, bevorzugt 5 bis 15 mm im Ventilauslasskanal (67) einen deutlich verengten Strömungskanalquerschnitt mit Querschnittsfläche A2 aufweist, wobei bevorzugt A2 ≤ 0.01 bis 0.5 A1 und weitergehend bevorzugt A2 ≤ 0.05 bis 0.3 A1 gilt, und im Dosierfalle (a) einerseits ein hinreichend hoher Gegendruck von ≥ 2 bar, bevorzugt ≥ 5 bar und weitergehend bevorzugt ≥ 10 bar vor der Dosierventilvorrichtung (38) aufgebaut wird, welcher bis in die Gasdispergier- und -lösezone (30) rückwirkt, und dort ein eingestelltes Maß an Gas-Lösung und/oder Gas-Mikrodispergierung erzielt sowie (b) andererseits erst im Dosierdüsenaustrittskanal (65) eine statische Druckabsenkung auftritt, welche zu Gasblasennukleation und beginnender Gasblasenexpansion führt, und wobei der mittels Verstellkolben (48) dichtend verschließbare Austrittsquerschnitt bevorzugt einen sich konisch verengenden Ringquerschnitt des Strömungskanals aufweist, der Hub dieses Verstellkolbens manuell oder motorisch kontrolliert einstellbar ist, und bei vergrößertem Hub somit ein in der Querschnittsfläche vergrößerter ringförmiger sich konisch verjüngender Strömungsquerschnitt für die zu dosierende Teig- oder Pastenmasse freigebbar ist, wobei die mittlere Strömungsquerschnittsfläche dieses konischen Ringkanals über den gesamten Bereich der verstellbaren Hublänge des Ventilstempels um den Faktor ≤ 2, bevorzugt um den Faktor ≤ 10, veränderbar, vorzugsweise stufenlos, einstellbar ist.

**Patentanspruch 13** beschreibt eine Vorrichtung, die dadurch gekennzeichnet ist, dass für den kontrollierten Druckaufbau und die Gaslösung im Teig oder in der Paste ein Extruderschneckenkanal, bevorzugt eines co-rotierenden Doppelschneckenextruders, mit einer Länge von L/D = 14 bis 50 (mit L = Schneckenkanallänge und D = Schneckendurchmesser), vorgesehen ist und die Extruderlänge in sieben hinsichtlich strömungsmechanisch optimierter Funktion mit Schneckenelementen unterschiedlicher Geometrie bestückten Längensegmentzonen von jeweiliger Segmentlänge zwischen L/D = 2 und L/D = 10 unterteilt ist und diesen sieben Längensegmentzonen folgende spezifischen Funktionen zugeordnet sind:

| | |
|---|---|
| Zone I: | Pulveraufnahme- und Verdichtungszone; Dosierung und Verdichtung der Pulvermischung; |
| Zone II: | Fluidzuführzone-1; erste Fluidzuführung |
| Zone III; | Mischzone; Mischen/Kneten und Bildung eines hochviskosen den Extruderschneckenkanal gegen Zonen IV und V abdichtenden Teig- oder Pastenpfropfen |
| Zone IV: | Fluidzuführzone-2; Fluideinmischung und Teig- oder Pastenviskositätsabsenkung |
| Zone V: | Druckgaszuführzone; Einleitung des Gasanteils unter statischem Druck bis 100 bar. |
| Zone VI: | Gasdispergier- und -lösezone; Mikrodispergierung und/oder Lösung des zudosierten Gasanteils |
| Zone VII: | Gaslösungsmess- und Extruderaustrittszone; Annäherung an Gasdispergierungs- und/oder Gaslösungsgleichgewichtszustand, Messung von statischem Druck und elektrischer Leitfähigkeit sowie Einlauf in Bypass- oder Dosierdüsenzuleitungen. |

und gemäß den funktionalen Zuordnungen der Zonen I-VII die Bestückung der Extruderschnecken mit Elementen erfolgt, welche die zugeordneten Funktionen (i) strömungstechnisch, (ii) verweilzeitbezogen und (iii) leistungseintragsbezogen optimiert unterstützen, wobei in Abhängigkeit von Rezepturzusammensetzung und teig- oder pastensystemspezifischer Gaslösungs- bzw. Dispergierkinetik eine Veränderung der Extruderzonenlängen (24 bis 31) für die vorgenannten zugeordneten Funktionen um ca. ± 1 bis 2 L/D Segmentlängen derart erfolgt, dass eine möglichst weitgehende Annäherung eines Mikro-Gasdispergier bzw. Gaslöse-Gleichgewichtszustandes in der Zone VI erreicht wird.

### Lösung der Aufgabe betreffend das Produkt

Diese Aufgabe wird gemäß **Patentanspruch 14** 'durch ein Produkt gelöst, welches glutenfrei ist, einen nicht glutenhaltigen Anteil an Pflanzenproteinen zwischen 5 bis 70 Gew.%, bevorzugt zwischen 5 bis 40 Gew.%, bezogen auf Trockensubstanz, und eine Gasvolumenfraktion im nicht nachbehandelten Teig oder in der Paste von 0.1 bis 0.75, bevorzugt 0.25 bis 0.5 sowie im nachbehandelten oder gebackenen Produkt von 0.2 bis 0.9, bevorzugt 0.3 bis 0.7 aufweist, wobei (A) die derart aufgeschäumten Teige bzw. Pasten mittlere Schaumblasen- bzw. Porendurchmesser x_{50,3} von 4 bis 200 Mikrometern, bevorzugt von 20 bis 100 Mikrometern, sowie charakteristische SPAN-Werte ((x_{90,3}-x_{10,3})/x_{50,3} mit x_{10,3}, x_{50,3}, x_{90,3} als 10%-, 50%- 90%-Perzentilen der Blasen-/Porendurchmesser Volumenverteilung) zur Charakterisierung der Blasen- bzw. Porendurchmesser-Verteilungsbreite von ≤ 2, vorzugsweise ≤ 1.5, am meisten bevorzugt von ≤ 1, aufweisen, sowie (B) für die aus derartigen Teig- oder Pastensystemen durch Nachbehandlung mit optimierten Backprozessen erzielte Schaumstrukturen bevorzugt mittlere Blasen- bzw. Porendurchmesser von x_{50,3} = 10 bis 250, bevorzugt von 20 bis 150 Mikrometern und resultierende SPAN-Werte ≤ 2.5, bevorzugt ≤ 1.5, am meisten bevorzugt von ≤ 1, aufweisen.

### Einige Vorteile

Die erfindungsgemäß beschriebenen Produkte ermöglichen eine sensorisch bevorzugte lockere Produktstruktur, welche auch für hochviskose Teigsysteme realisiert werden kann, deren Aufschäumungsverhalten bislang nur unzureichend ausgestaltet werden konnte. Dies ist insbesondere dann der Fall, wenn zum Beispiel glutenfreie Backmischungen Verwendung finden, welche in Ermangelung netzwerkbildender die Schaumbildung und Schaumstabilität unterstützender Komponenten nur suboptimal formuliert werden können. Damit sind erfindungsgemäße Produkte vorteilhaft für ein erweitertes Spektrum an Teigsystemen mit sensorisch und nutritiv optimiert abgestimmten Rezepturen in einer bisher für den Verbraucher nicht bekannten Schaumstrukturqualität und damit verbundenen optimierten sensorischen Eigenschaften (Verarbeitungsverhalten, Aussehen, Konsistenz, Geschmacks-/Aromaentfaltung), zu realisieren.

### Weitere erfinderische Ausgestaltungen

Eine weitere erfinderische Ausgestaltung ist in **Patentanspruch 15** beschrieben, der **dadurch gekennzeichnet,** dass es (A) einen glutenfreien Pflanzenproteinanteil zwischen 5 bis 70 Gew.%, bevorzugt von 10 bis 50 Gew.%, bezogen auf Trockensubstanz, (B) einen Kohlenhydratanteil zwischen 5 bis 70 Gew.%, bevorzugt von 10 bis 50 Gew.%, bezogen auf Trockensubstanz, (C) einen Ballaststoff/Pflanzenfaser-Anteil zwischen 3 bis 30 Gew.%, bevorzugt zwischen 5 bis15 Gew.%, bezogen auf Trockensubstanz, (D) einen Fett/Öl-Anteil von 0 bis 30 Gew.%, bevorzugt von 5 bis 10 Gew.%, bezogen auf Trockensubstanz und (D) einen Anteil an nativer Stärke, bevorzugt Kartoffel-, Mais- oder Reisstärke von ≥ 1 bis 5 Gew.% bezogen auf Trockenmasse, beinhaltet, wobei der letztgenannte Anteil bevorzugt aus mittels Gefrier-Tauzyklen vorbehandelter, native Kartoffel-, Mais- oder Reisstärke oder Mischungen solcher zu gleichem Gesamtprozentanteil besteht und als die Gasblasennukleation unterstützende Nukleatorpartikelkomponente fungiert.

### Lösung der Aufgabe betreffend die Verwendung

Diese Aufgabe wird durch **Patentanspruch 16** gelöst, der die Verwendung eines geschäumten, teig- oder pastenbasierten Produkts beschreibt, als Basis für Dauerbackwaren, bevorzugt (A) verzehrfertige glutenfreie Dauer- oder Frischbackwaren, (B) als Basis für frische oder vorgebackene und anschließend tiefgekühlte/gefrorene Backwaren, (C) in gebackener bzw. durch andere thermische Behandlung in Folge Proteindenaturierung stabilisierter Form als stückige Einschlusskomponente in ein Schokoladenkonfekt, Eiscreme oder in ein anderes Dessertprodukt oder in ein Gemüse- oder Fleischpasteten-Produkt und/oder (D) als Hüll-, Deck- oder Oberflächendekorations-Komponente von Produkten aus den Bereichen Schokoladenkonfekt, Speiseeis, andere Desserts, Käse/Frischkäse, Fleischprodukte, fleischbasierte/fleischlose (vegetarische oder vegane) Pasteten.

### Einige Vorteile

Einige bislang hergestellte Teig- oder Pastenprodukte waren in ihrer Formulierung durch notwendige Berücksichtigungen hinsichtlich Verträglichkeits- und Gesundheitsaspekten eingeschränkt, um optimale schaumartig lockere Strukturen, welche sensorisch bevorzugt sind, zu erzeugen. Letztgenannte Strukturen bieten in Dauerbackwaren den maßgeblichen Vorteil der reduzierten Härte sowie die Möglichkeit der verbesserten Durchdringung mit anderen Produktkomponenten wie zum Beispiel Füllmassen oder Fluiden, was neue Entwicklungsbereiche hinsichtlich sensorischer und nutritiver Optimierung adressieren lässt.

Die Verwendung von Produkten, die gemäß der Erfindung hergestellt sind als Produktteilkomponenten, betrifft insbesondere Composite-Produkte im Lebensmittelbereich. In Produktkategorien wie Schokoladen-Confectionery, bei denen häufig gebackene Waffeln/Waver oder Biskuit-Strukturen eingebettet werden sollen ist die stabile Verbindung solcher Einschlusskomponenten zum Beispiel in Riegeln ein wichtiges Qualitätsmerkmal. Vergleichbares gilt für solche erfindungsgemäß hergestellten Inklusionskomponenten auf Backwarenbasis in Eiscreme oder in Pasteten. Für letztere sind auch Umhüllungen mit erfindungsgemäß hergestellten Teigschaumbasierten Komponenten von Belang.

In den Diagrammen und Skizzen ist die Erfindung - teils schematisch - beispielsweise veranschaulicht. Es zeigen:
- Fig. 1: eine Einrichtung gemäß der Erfindung mit einer als Stetigförderer/Extruder ausgebildeten motorisch angetriebenen Förderschnecke, teils in schematischer Explosionsdarstellung;
- Fig. 2: eine als Gegendruckventil ausgebildete Ventilvorrichtung aus Fig. 1, im Längsschnitt, im größeren Maßstab;
- Fig. 3: eine Dosierventilvorrichtung aus Fig. 1, teils im Schnitt, teils in der Ansicht, abgebrochen dargestellt, in größerem Maßstab;
- Fig. 4: eine Einzelheit aus Fig. 3 in größerem Maßstab, teils im Schnitt, teils abgebrochen dargestellt;
- Fig. 5: eine Darstellung entsprechend Fig. 3 mit einer anderen Hubstellung des Dosierventilkolbens, ebenfalls teils im Schnitt, teils in der Ansicht, teils abgebrochen dargestellt;
- Fig. 6: eine Einzelheit aus Fig. 5, in größerem Maßstab, teils im Schnitt, teils abgebrochen dargestellt;
- Fig. 7: einen Schaltplan für die Steuerung/Regelung der aus Fig. 1 ersichtlichen Einrichtung;
- Fig. 8: eine Diagrammdarstellung des beispielhaft gemessenen Zusammenhanges zwischen der sich in der Gasdispergier-/-lösezone (30) unter Gleichgewichtsbedingungen einstellenden, in-line gemessenen elektrischen Leitfähigkeit eines Teiges unter definiertem statischem Druck (hier 30 bar) als Funktion der zudosierten Gasmenge (hier CO₂);
- Fig. 9: eine als Blockschaltbild ausgebildete schematische Darstellung des "Feedback-Regelkreises" zur definierten Einstellung des Aufschäumgas-Lösungsgrades unter dem in der Gasdispergier-/-lösezone wirksamen statischen Druck, basierend auf der in dieser Zone in-line gemessenen elektrischen Leitfähigkeit κ.;
- Fig. 10: schematische Diagrammdarstellung der zeitlichen Zusammenhänge zwischen den physikalischen Prozessgrößen bei der Einstellung des statischen Druckes pₛₜₐₜ in der Gasdispergier-/-lösezone während der Dosiervorbereitungsphase unter Einsatz der in dieser Phase als Stellglied agierenden Gegendruckventilvorrichtung;
- Fig. 11: schematische Diagrammdarstellung der zeitlichen Zusammenhänge zwischen den physikalischen Prozessgrößen bei Umschaltung zwischen Gegendruckventilvorrichtung (Dosiervorbereitungsphase) und Dosierventilvorrichtung (Dosierphase);
- Fig. 12: äußere Form/Struktur eines erfindungsgemäß hergestellten Teigproduktes (hier Modellkuchen mit 30 Gew.% Proteinanteil (Rezeptur M1));
- Fig. 13: äußere Form/Struktur eines erfindungsgemäß hergestellten Teigproduktes (hier Modellkuchen mit 24 Gew.% Proteinanteil (Rezeptur M2);
- Fig. 14: innere Schaumstruktur eines erfindungsgemäß hergestellten Teigproduktes (hier Modellkuchen mit 30 Gew.% Proteinanteil (Rezeptur M1)) unter Dosierung von 0.2 Gew.% CO₂ als Schäumungsgas;
- Fig. 15: innere Schaumstruktur eines erfindungsgemäß hergestellten Teigproduktes (hier Modellkuchen mit 24 Gew.% Proteinanteil (Rezeptur M2)) unter Dosierung von 0.2 Gew.% CO₂ als Schäumungsgas;
- Fig. 16: innere Schaumstruktur eines erfindungsgemäß hergestellten Teigproduktes (hier Modellkuchen mit 30 Gew.% Proteinanteil (Rezeptur M1)) unter Dosierung von 0.3 Gew.% CO₂ als Schäumungsgas;
- Fig. 17: innere Schaumstruktur eines erfindungsgemäß hergestellten Teigproduktes (hier Modellkuchen mit 24 Gew.% Proteinanteil (Rezeptur M2)) unter Dosierung von 0.3 Gew.% CO₂ als Schäumungsgas;
- Fig. 18: innere Schaumstruktur eines Teigproduktes (hier Modellbrot mit 10 Gew.% Proteinanteil, Rezeptur M3) OHNE Dosierung von Schäumungsgas;
- Fig. 19: innere Schaumstruktur eines Teigproduktes (hier Modellbrot mit 10 Gew.% Proteinanteil, (Rezeptur M3)) unter Dosierung von 0.5 Gew.% CO₂ als Schäumungsgas;
- Fig. 20: (identisch mit Fig. 19, wiederholt zum verbesserten direkten Strukturvergleich) innere Schaumstruktur eines Teigproduktes (hier Modellbrot mit 10 Gew.% Proteinanteil, (Rezeptur M3)) unter Dosierung von 0.5 Gew.% CO₂ als Schäumungsgas;
- Fig. 21: innere Schaumstruktur eines Teigproduktes (hier Modellbrot mit 10 Gew.% Proteinanteil, (Rezeptur M3)) unter Dosierung von 0.8 Gew.% CO₂ als Schäumungsgas, und
- Fig. 22: experimentell ermittelter funktionaler Zusammenhang zwischen dem in ein Teig-/Pastensystem (hier glutenfreier Brotteig) unter erhöhtem statischen Druck eingebrachten Gasanteil und dem resultierenden Produkt-Aufschäumungsgrad.

In der Zeichnung ist die Erfindung in Anwendung auf eine insgesamt mit dem Bezugszeichen 1 bezeichnete Einrichtung dargestellt, die mindestens einen als Förderschnecke 2 ausgebildeten Stetigförderer, bevorzugt zwei co-rotierende kämmende Förderschnecken, aufweist, die durch einen Motor 3 oder mehrere Motoren, beispielsweise jeweils einen steuer- oder regelbaren Servomotor oder Asynchronmotor, ggf. über ein Getriebe oder über einen Getriebemotor, angetrieben sind. Bevorzugt wird man mehrere Förderschnecken 2 mit unterschiedlichen Schneckengeometrien bestückbar wählen, da diese prozess- und materialkonsistenzspezifisch nicht nur einen stetigen Transport, sondern auch eine gute Durchmischung und/oder mechanische Druck-/Scherbeanspruchung des zu transportierenden Gutes gewährleisten lassen.

Die Förderschnecke 2 ist in einem Gehäuse 4 angeordnet und fördert eine teig- oder pastenbildende Pulvermischung in Richtung X. Die schütt- oder rieselfähige Pulvermischung (zum Beispiel Teigmischung, nicht dargestellt) wird zum Beispiel einem Trichter 5 aus einer nicht dargestellten Quelle, zum Beispiel aus einem Silo, zugeführt. Der Trichter 5 kann mit einer geeigneten gravimetrischen oder volumetrischen Steuer- oder Regeleinrichtung versehen sein, um den jeweils gewünschten Pulvermassenstrom zu bestimmen.

Die trockene schütt- oder rieselfähige Pulvermischung oder dergleichen wird der Aufgabestelle 6 zugegeben und durch die Förderschnecke 2 zunächst im trockenen, rieselfähigen Zustand um ein vorbestimmtes Maß in Richtung X transportiert und dabei im Schneckenkanal (bevorzugt Doppelschneckenkanal) verdichtet, bevor der Pulvermischung oder dergleichen über eine Fluidzuführvorrichtung-1 7 und eine Leitung 8, die mit einer Fluidversorgungsvorrichtung-1 9 leitend verbunden ist, gesteuert oder geregelt rezepturspezifisch ein Fluid, beispielsweise Wasser und/oder ein mehrphasiges Fluidsystem, beispielsweise eine Emulsion, zugegeben wird. Die Fluidversorgungsvorrichtung-1 9 ist über eine Leitung 10 an eine Fluidversorgungsquelle, beispielsweise an eine Wasserleitung oder zum Beispiel an einen Tank mit einer Emulsion, fluidleitend angeschlossen. Bei der Fluidversorgungsvorrichtung-1 9 kann es sich um eine motorisch angetriebene, steuer- oder regelbare Pumpe handeln, die durch einen Elektromotor (nicht dargestellt) angetrieben ist.

Durch die über die Fluidzuführvorrichtung-1 7 zugeführte Fluidmenge wird die trockene Pulvermischung oder dergleichen benetzt oder durchfeuchtet und zu einer relativ hochviskosen, zähen Teig-/Pastenmasse mittels der/den sich drehenden Förder-/Extruderschnecke(n) 2 durchgemischt. Diese hochviskose Teig- oder Pastenmasse bildet eine Art sich in Förderrichtung X stets abbauenden, aber entgegengesetzt zur Förderrichtung X sich stetig erneuernden Abdichtungspfropfen, der den im Wesentlichen einem Schneckenkanal bzw. Doppelschneckenkanal entsprechenden Innenraum 11 des Gehäuses 4 zur Aufgabestelle 6 hin und damit nach außen fortlaufend gasdicht abdichtet.

Im axialen Abstand zur Fluidzuführvorrichtung-1 7 ist eine zweite Fluidzuführvorrichtung-2 12 angeordnet, der über eine Leitung 13 durch eine zweite Fluidversorgungsvorrichtung-2 14 Fluid in vorbestimmter Menge zugeführt wird.

Die zweite Fluidversorgungsvorrichtung-2 14 erhält über eine Leitung 13 das Fluid, zum Beispiel ebenso wie die erste Fluidzuführvorrichtung 7 Wasser oder eine geeignete andere Flüssigkeit oder ein fluides Mehrphasensystem, zum Beispiel eine Emulsion, zugeführt. Bei der Fluidversorgungsvorrichtung-2 14 kann es sich ebenso wie bei der ersten Fluidversorgungsvorrichtung-1 9 um eine steuer- oder regelbare Pumpe handeln, die ebenso wie bei 9 über einen regel- oder steuerbaren Elektromotor angetrieben ist.

Im axialen Abstand zu der zweiten Fluidzuführvorrichtung-2 12 ist eine Druckgaszuführvorrichtung 15 angeordnet, durch die ein Gas in den als Prozessraum 11 des Gehäuses 4 unter Überdruck eingebracht wird.

Das Bezugszeichen 16 bezeichnet ein Rückschlagventil, während mit 17 eine Druckgasleitung bezeichnet ist, der über eine steuer- oder regelbare Ventilvorrichtung 17a Druckgas, beispielsweise Druckluft oder ein anderes Gas, zuführbar ist.

Mit 18 ist eine nur schematisch angedeutete Druckgasquelle bezeichnet.

Im Endbereich des Gehäuses 4 der Einrichtung 1 ist eine Messvorrichtung 19 angeordnet, die zum Beispiel als Leitfähigkeitssensor ausgebildet ist, um zu messen, wie weit das in den Innenraum 11 des Gehäuses 4 über die Druckgasleitung 17 eingebrachte Druckgas in den Teig oder die Paste, das durch die Förderschnecke 2 in Richtung X gefördert wird, gelöst ist.

Bei 20 ist ein Drucksensor angeordnet, der den Druck im Innenraum 11 des Gehäuses 4 misst.

Mit dem Bezugszeichen 21 ist ein Auslassstutzen und mit 22 eine Endplatte bezeichnet, an die der Auslassstutzen 21 pasten-/teigleitend angeschlossen ist.

Mit dem Auslassstutzen 21 steht eine Bypassleitung 23 teig-/pastenleitend in Verbindung, der eine Gegendruckventilvorrichtung 24 zugeordnet ist, die steuer- oder regelbar ausgebildet ist.

Die Einrichtung 1 weist in Förderrichtung X mehrere prozesstechnisch definierte Zonen auf.

Mit dem Bezugszeichen 25 ist eine als Verdichtungszone ausgebildete Pulvermaterialaufnahmezone bezeichnet, während mit 26 eine Fluidzuführzone-1 bezeichnet ist.

Das Bezugszeichen 27 bezeichnet eine Mischzone und 28 eine weitere Fluidzuführzone-2.

Eine Zone 29 ist als Druckgaszuführzone ausgebildet, während 30 eine Gasdispergier- und -lösezone darstellt.

Mit 31 ist eine Gaslösungsmess- und Extruderaustrittszone bezeichnet.

Die Bezugszeichen 32 bis 36 bezeichnen als statische Drucksensoren ausgebildete Messvorrichtungen, welche den Druckaufbau über die Länge der Einrichtung 1 in den verschiedenen Strömungszonen messen und fortlaufend anzeigen.

An dem Auslassstutzen 21 ist außerdem eine als Dosierleitung ausgebildete Leitung 37 angeschlossen, der eine Dosierventilvorrichtung 38 zugeordnet ist.

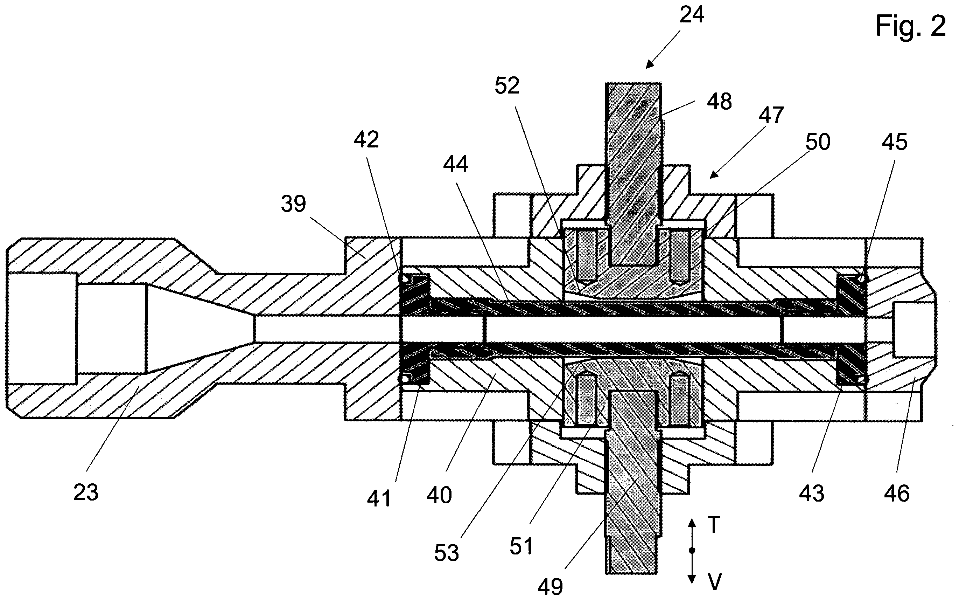

Die Gegendruckventilvorrichtung 24 ist im Einzelnen in Fig. 2 dargestellt. Die Bypassleitung 23 ist als Anschlussnippel ausgebildet, der an den Auslassstutzen 21 angeordnet ist, und beispielsweise mit dem Auslassstutzen 21 durch eine Schraubverbindung oder dergleichen (nicht dargestellt) dichtend, lösbar, gekuppelt ist.

Die Bypassleitung 23 ist mit einem Flansch 39 ausgestattet und mittels Schrauben oder dergleichen lösbar mit einer Quetschventilvorrichtung 40 dichtend verbunden. Letztere enthält als zentrales Bauelement einen flexiblen Hochdruckschlauch 44, welcher beidseitig mit Hochdruckschlauchanschlussteilen 41, 43 verbunden und mittels O-Ring-Hochdruckdichtungen 42, 45 abgedichtet ist.

Wie aus Fig. 2 ersichtlich ist, bilden die Bypassleitung 23, Hochdruckschlauchanschlussteile 41, 43 und der Hochdruckschlauch 44 einen im Querschnitt konstanten Strömungskanal, zu dem orthogonal eine Querschnittsverstellvorrichtung 47 angeordnet ist. Diese Querschnittsverstellvorrichtung 47 weist diametral einander gegenüberliegende Verstellkolben 48 und 49 auf, die in Richtung T bzw. V in entgegengesetzten Richtungen stufenlos, aber synchron verstellbar angeordnet sind. Den Verstellkolben 48 und 49 ist jeweils ein Verstellkopf 50 bzw. 51 zugeordnet. Die Verstellköpfe 50 und 51 sind mit den zugeordneten Verstellkolben 48 bzw. 49 bei der dargestellten Ausführungsform formschlüssig, aber lösbar, beispielsweise durch Schraubgewinde, somit funktionell einstückig, verbunden.

Wie aus Fig. 2 ersichtlich ist, sind die Verstellköpfe 50, 51 an ihren einander zugekehrten Oberflächen 52 und 53 ballig ausgebildet und wirken auf die äußere Umfangsfläche des flexiblen Hochdruckschlauches 44 entgegengesetzt, aber verformend synchron, ein. Zu diesem Zweck werden die Verstellkolben 48 und 49 durch einen gemeinsamen Antrieb oder auch durch getrennte Antriebe, beispielsweise durch abwechselnd beidseitig zu beaufschlagende Kolben-Zylinder-Einheiten, in Richtung T bzw. V verstellt, um den Durchflussquerschnitt durch den Hochdruckschlauch 44 entsprechend zu verändern. Die Verstellkolben 48 und 49 können auch selbst Teil einer Kolben-Zylinder-Einheit sein, wobei deren Endabschnitte jeweils abgedichtet in einen zugeordneten Zylinderraum axial verstellbar eingreifen, wobei auf gegenüberliegenden Seiten gesteuert Druckmittel, zum Beispiel eine Hydraulikflüssigkeit oder Druckluft, unter Druck zuführbar ist, um die Verstellkolben 48 und 49 in Richtung T bzw. V synchron und mit gleichbleibender Geschwindigkeit entweder voneinander weggerichtet oder gegeneinander anzutreiben, um dadurch den Durchflussquerschnitt des Hochdruckschlauches 44 entweder zu verkleinern oder zu vergrößern.

Durch die ballige Ausbildung der Oberfläche 52 bzw. 53 der Verstellköpfe 50 bzw. 51 werden einerseits Beschädigungen der Oberfläche des Hochdruckschlauches 44 vermieden, andererseits kritische mehrachsige Spannungszustände weitestgehend ausgeschlossen.

Die Dosierventilvorrichtung 38 weist einen Anschlussstutzen 54 auf, der Teil eines Gehäuses 55 ist. Durch einen Eintrittskanal 56 des Anschlussstutzens 54 strömt die mit gelöstem/feindispergierten Druckgas angereicherte Teig- oder Pastenmasse hindurch in eine Ventilkammer 57, in die ein Dosierkolben 58 orthogonal zur Längsachse des Anschlussstutzen 54 abgedichtet eingreift. Der Dosierkolben 58 ist in Richtung A bzw. B stufenlos hubverstellbar angeordnet und über Dichtungen 59, 60 von einer Ventilauslasskammer 61 und vom Ventilkopfraum 62 liquid und gasdicht getrennt.

Die Ventilkammer 57 ist als zylindrischer Ringraum ausgebildet, der einerseits durch die Innenwand des Gehäuses 55 und andererseits durch die äußere Mantelfläche des Dosierkolbens 58 umfangsseitig begrenzt ist.

Beim Hub in Richtung B oder A des Dosierkolbens 58 wird der im thermodynamischen Quasi-Gleichgewichtszustand hinsichtlich Gasdispersion/Gaslösung stehende, die zylindrische Ventilkammer 57 füllende Teig oder die Paste aus dieser zwischen dem unteren Ende des Dosierkolbens 58 und der ringförmig ausgebildeten unteren als Dosierkolbendichtung ausgebildeten Dichtung 60 freigegebene Ringspalt 63 in die Ventilauslasskammer 61 und von dort weiter durch den Ventilauslasskanal 65 in die Umgebung, zum Beispiel in eine Backform, überführt. Das Bezugszeichen 59 bezeichnet eine Dichtung und 62 einen Ventilkopfraum. Dies wird dadurch begünstigt, dass das untere Ende des zylindrischen Dosierkolbens 58 im geschlossenen Ventilzustand bis zum Anschlag in die Ventilauslasskammer 61 hineinragt, wobei mit der ebenfalls zylindrischen Ventilauslasskammer 61 ein enger Ringspalt von zum Beispiel ≤ 2 mm gebildet wird und beim Öffnen des Ventils durch einen relativ kleinen Hub des Dosierkolbens 58 ein schmaler Strömungsspalt von ≤ 2 mm gebildet wird, der eine nach innen gerichtete radiale Strömung erzeugt und der Ventilauslasskanal 65 von bevorzugt zum Beispiel ≤ 15 mm und einem Durchmesser von zum Beispiel ≤ 3 bis 5 mm so kurz und schmal wie möglich gehalten ist, grundsätzlich aber an die Teigviskosität, also rezepturspezifisch, angepasst wird. Hierzu kann das betreffende Bauteil auswechselbar sein.

Diese erfindungsgemäße Anpassung der Vorrichtung erfolgt, um ein Aufreißen des dosierten Teig- oder Pastenstranges beim Erreichen einer überkritischen Volumenausdehnungsrate zur umgebenden Atmosphäre zu vermeiden.

In einer besonderen Ausführungsform des erfindungsgemäßen Dosierkolbens 58 weist dieser einen in den Ventilauslasskanal 65 hineinragenden zylindrischen Fortsatz 66 auf, der den Strömungsquerschnitt in diesem Kanal bis kurz vor dessen Ende weitergehend verengt hält und in der Dosierstellung eine ringförmige, relativ kleine zylindrische Expansionskammer am Ende des Ventilauslasskanals bildet. Der Fortsatz 66 ist der Stirnseite 64 des Dosierkolbens 58 zugeordnet und bei der dargestellten Ausführungsform mit dem Dosierkolben 58 funktionell oder materialmäßig einstückig verbunden und bei der dargestellten Ausführungsform etwa nadelförmig gestaltet, kann aber auch einer anderen Ausführungsform entsprechen. Mit 67 ist insgesamt eine Ventildüsenspitze oder ein Ventildüsenende bezeichnet.

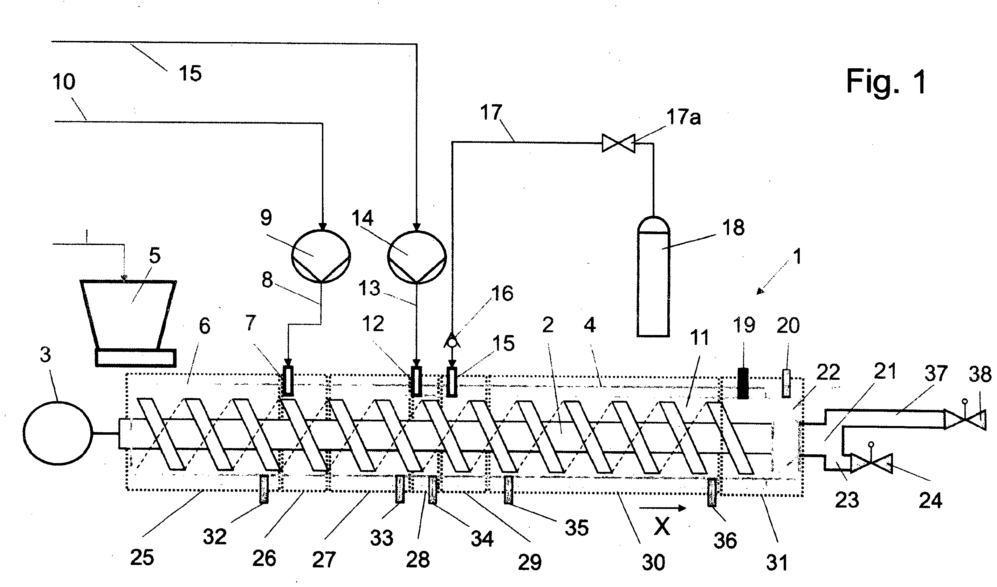

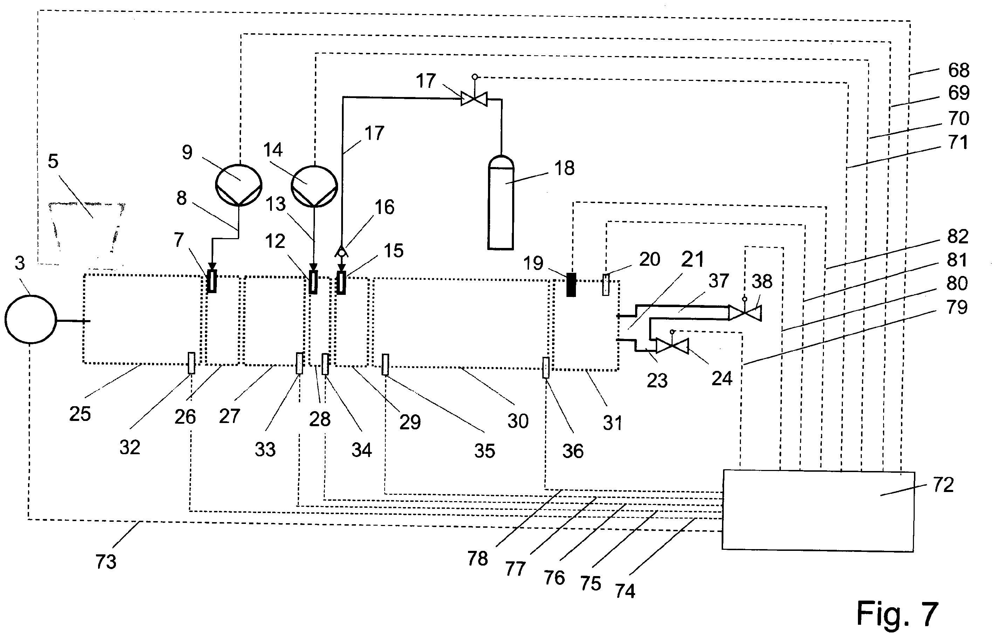

Fig. 7 zeigt ein Schaltschema für die Anlage gemäß Fig. 1. Mit 68 bis 71 sowie 73 bis 82 sind Signalleitungen bezeichnet, die zu den einzelnen Sensoren, Ventilen, dem Dosierorgan am Trichter 5, der Druckgasquelle 18 oder dem Schneckenantriebsmotor 3 der Anlage führen.

Das Bezugszeichen 72 bezeichnet eine zentrale Datenverarbeitungsanlage mit einer Steuer- und/oder Regelungsanlage, zum Beispiel einer Rechnereinheit mit Datenspeicher, in der auch Daten für verschiedene Rezepturen, also Backmischungen, und die jeweils zuzuführenden Fluidmengen, rezepturspezifisch erfasst sind und für die verschiedenen Teig- oder Pastenzusammensetzungen und Teig- oder Pastenmengen, insbesondere digital, abgerufen werden können.

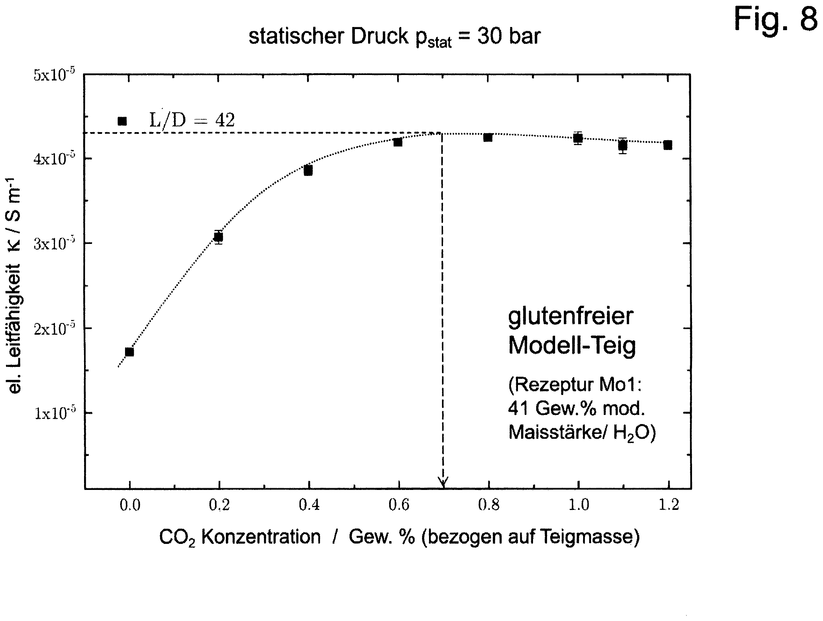

In Fig. 8 ist eine Messcharakteristik der als Leitfähigkeitssensor ausgebildeten Messvorrichtung 19, beispielsweise für die Verwendung von CO₂ als Schäumgas, das dem Teig oder der Paste in der Einrichtung 1 zugeführt werden soll, dargestellt. Für das Beispiel eines glutenfreien Modellteiges lässt sich der Leitfähigkeitsanstieg von ca. einem Faktor 3 zwischen keinem und 0,7 Gewichtsprozenten zudosiertem und gelöstem CO₂ ableiten. Daraus folgt, dass unterhalb dieses Gleichgewichtszustandes, der bei Umgebungsdruck einem Gasanteil am Produktvolumen von ca. 75 % und einem Aufschlag von ca. 300 % entspricht, der Gehalt an gelöstem Gas mit der erfindungsgemäßen Regeleinrichtung über das typische Maß für Gasanteile in aufgeschäumten Lebensmittel-/Teig- oder Pastensystemen hinaus gut gemessen und geregelt werden kann.

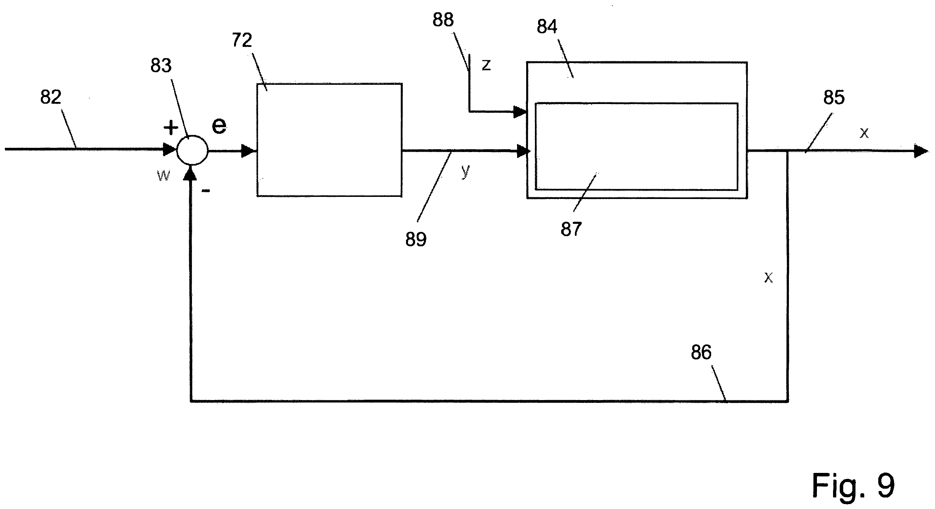

Fig. 9 zeigt das Regelkreisschema als Blockschaltbild für eine Feedback-Regelung der aus Fig. 1 ersichtlichen Anlage. Die Leitfähigkeit κ des Teiges gemessen durch die Messvorrichtung 19 ist die bevorzugte Regelgröße x, die bei 83 auf einen Referenzwert w 82 eingeregelt wird, welcher einer rezepturspezifischen dispergierten/gelösten Gaskonzentration c*_{GAS,1} im Pasten-/Teigsystem entspricht, die sich im Quasi-Gleichgewicht unter dem entsprechend anzuwendenden statischen Druck p_{stat,1} nach bestimmter Verweilzeit t_{V,1} und bestimmter Gaskonzentration c_{GAS} im gut durchmischten/dispergierten Fluid-Gas-System bei bestimmter Temperatur einstellt. Die Prozesstemperatur wird erfindungsgemäß und teigrezepturspezifisch bevorzugt bei einem Wert zwischen 40 bis 60°C konstant gehalten.

Der entsprechende Zusammenhang κ = f (p_{stat,1}, t_{V,1}, c_{CO2}) wird erfindungsgemäß im Laborversuch in einem Hochdruck-Batch-Rührreaktor mit dem entsprechenden Pasten-/Teigsystem unter vergleichbaren Strömungsbedingungen ermittelt, wie sie in der Gasdispergier- und -lösezone 30 der Einrichtung 1 (typischerweise Doppelschneckenextruder bestimmter Schneckengeometrie, repräsentative Schergeschwindigkeit γ._{R} ≈ 200 s⁻¹) vorliegen. Bevorzugt werden in der Gasdispergier- und -lösezone 30 hinreichend lange Verweilzeiten von 30 bis 200 s angestrebt, um einen Gas-Dispergier-/Lösungs-Gleichgewichtszustand zu erreichen. Für diesen Fall wird dann direkt mit Gleichgewichtsfunktionen κ = f(p_{stat,1}, c_{CO2}), wie beispielsweise in Fig. 8 dargestellt, gearbeitet.

Als Stellgröße y 89 (Stellgröße) dient bei vorgegebenem Gasdosiermassenstrom (dm/dt)_{GAS} der in der Gasdispergier- und -lösezone 30 einzustellende statische Druck pₛₜₐₜ₍₃₀₎. Als Stellglieder 87 zur Einstellung von pₛₜₐₜ₍₃₀₎ dienen bei vorgegebenem dosierten Produktmassenstrom (dm/dt)_{Produkt} erfindungsgemäß der Gasdosierdruck p_{GAS}, und/oder die Ventilöffnungsquerschnitte A_{Vi} der Gegendruckventilvorrichtung 24 beim Anfahren des Prozesses bzw. der Dosierventilvorrichtung 38 beim regulären Dosiervorgang.

Die Regelgröße x in der Kontrolleinheit 85 wird mit der Führungsgröße (Sollwert) in der Signalleitung bei 82 über die Rückführung 86 im Eingang 83 mit dem Referenzwert (Führungsgröße w) verglichen und die Regeldifferenz e wird dem als Datenverarbeitungsanlage 72 ausgebildeten Regler (z.B. PLC) zugeführt, der entsprechend dem im PLC abgelegten Regelalgorithmus eine definierte Verstellung der Stellgröße y 89 ausgibt. Störgrößen z 88 sowie weitere mögliche Stellglieder 87 wirken auf den Ausgang der Regelstrecke. Mit w ist die Führungsgröße (Referenzvorgabe, Sollwert) bezeichnet. Die Regelabweichung e bestimmt über den in der Kontrolleinheit 72 abgelegten Regelalgorithmus die Intensität der resultierend über das (die) Stellglied(er) 87 ergriffene(n) Maßnahme(n) im kontrollierten Prozess. Mit 83 ist der Vergleich des aktuellen Inline-Messwert x mit dem Referenzwert (Führungsgröße w = hier el. Leitfähigkeit zur Erreichung eines bestimmten Teigaufschäumgrades) bezeichnet.

Die Störgrößen z wirken auf die Regelstrecke 84, und nehmen auf einen stationären "eingeregelten" Betriebszustand Einfluss. Typische Störgrößen sind (a) Rohstoffschwankungen und (b) Dosiermengenschwankungen.

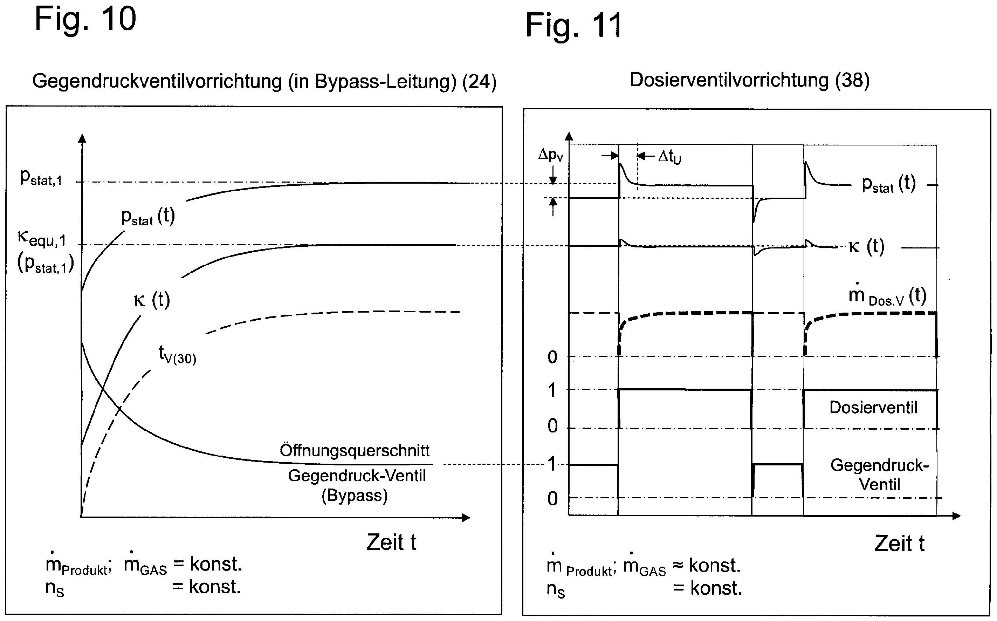

Fig. 10 beschreibt schematisch typische zeitliche Verläufe der physikalischen Prozessparameter beim Anfahren des Prozesses und Einsatz der Gegendruckventilvorrichtung 24 in der Bypass-Leitung 23. Die schrittweise, stufenlose Verengung des Hochdruckschlauches 44 in der Gegendruckventilvorrichtung bewirkt einen korrelierten Anstieg des statischen Druckes pₛₜₐₜ₍₃₀₎ in der Gasdispergier- und -lösezone 30. Dies zieht eine teig- und pastensystemspezifische Veränderung der elektrischen Leitfähigkeit des Stoffsystems nach sich. Im Falle erhöhter Gaslösung und Dissoziation, wie bei CO₂ als Aufschäumgas, erfolgt eine charakteristische Erhöhung der elektrischen Leitfähigkeit κ. Im Falle nicht dissoziierender gelöster bzw. feindispergierter Gase reduziert sich die elektrische Leitfähigkeit in aller Regel. Laborversuche geben hierzu quantitativen Aufschluss.

In Fig. 11 sind die zeitlichen Verläufe der maßgeblichen physikalischen Prozessparameter bei Umschaltung von der Gegendruckventilvorrichtung 24 (Anfahrvorgang) auf die Dosierventilvorrichtung(en) 38 schematisch dargestellt. Beim Anfahren mittels Gegendruckventilvorrichtung 24 wird darauf geachtet, dass der statische Druck pₛₜₐₜ₍₃₀₎ in der Gasdispergier- und -lösezone 30 durch Verengung des Ventilquerschnittes einen Wert erreicht, welcher nach Umschaltung auf Dosierbetrieb dem stationären Druckwert beim Dosierbetrieb mittels Dosierventilvorrichtung(en) 38 entspricht, d.h. eine Druckabweichung Δp_{V} vernachlässigbar klein ist.

Beim Umschalten von Anfahr- auf Dosierbetrieb ist eine kurzfristige (< ca. 0.5 s) peakartige Erhöhung von pₛₜₐₜ₍₃₀₎ möglich, was jedoch schnell abklingt und gemessen an der Dauer eines Dosierzeitintervalls zu vernachlässigen ist. Umgekehrt ist bei Rückumschaltung von Dosier- auf Bypass-(Anfahr-)Betrieb eine kurzfristige Absenkung von pₛₜₐₜ₍₃₀₎ möglich. In der industriellen Anwendung wird nach Beendigung eines Dosierzyklus einer Dosierventilvorrichtung in aller Regel auf eine zweite im Tandem betriebene Dosierventilvorrichtung umgeschaltet.

Bei den beschriebenen Umschaltvorgängen infolge der auftretenden kurzzeitigen Druckschwankungen, kann es gegebenenfalls zu Schwankungen in der Regelgröße elektrische Leitfähigkeit κ kommen, was im Regelalgorithmus, zum Beispiel durch Anpassung der Messzeitintervalle nach Umschaltvorgängen, zu berücksichtigen oder zu kompensieren ist.

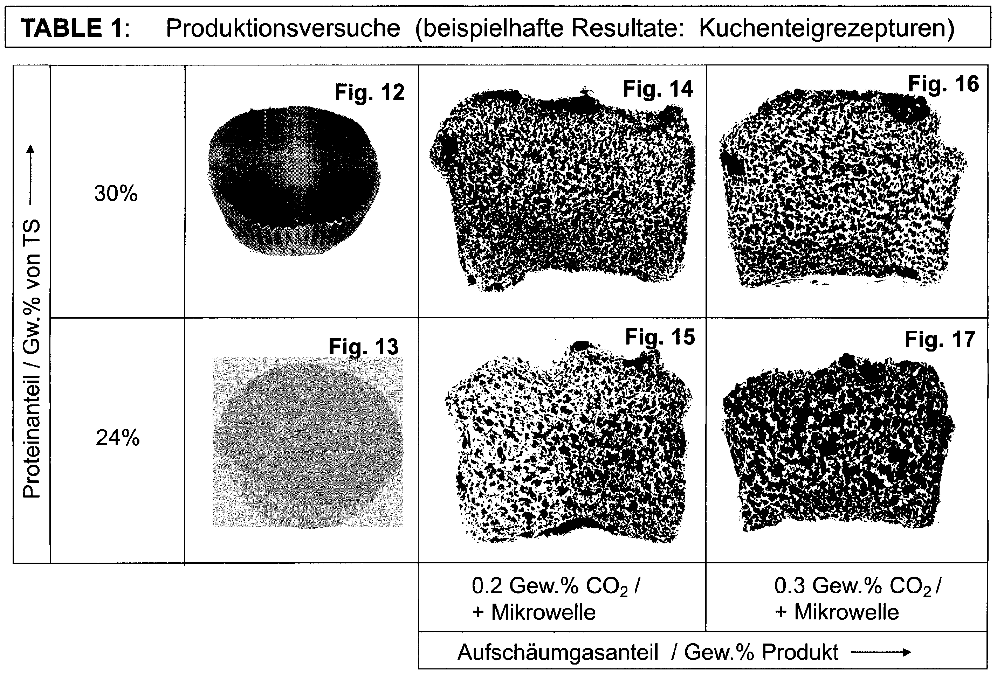

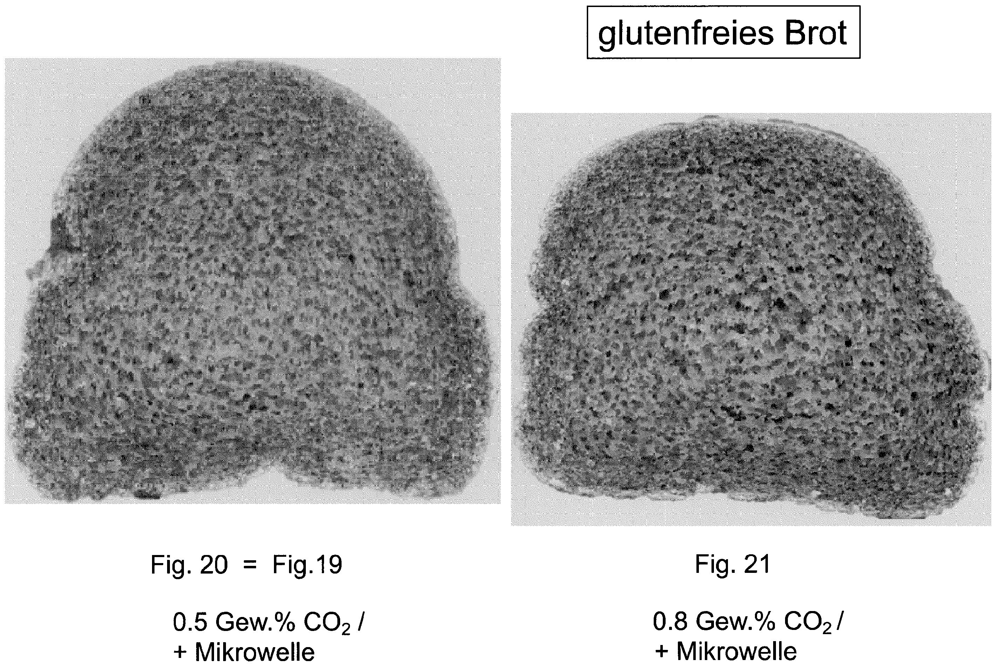

Fig. 12 bis 21 beschreiben mittels des erfindungsgemäßen Verfahrens beispielhaft hergestellte aufgeschäumte Teig- oder Pastenprodukte nach Strukturfixierung in Backprozessen.

Fig. 12 bis 17 demonstrieren in tabellarisch angeordneter Darstellung (Tabelle 1) für beispielhaft ausgewählte Kuchenteigrezepturen mit variablen Proteingehalten die Möglichkeit der Schaumstrukturbeeinflussung über den Proteingehalt der Rezeptur als auch über die CO₂ Gasmengendosierung. Die zugehörigen Rezepturkomponenten sind in Tabelle 2 aufgelistet.

Alle diese Rezepturen wurden mit dem erfindungsgemäßen Verfahren erfolgreich hergestellt, allerdings mit unterschiedlichen Ergebnissen hinsichtlich der resultierenden Produktdichte und Schaumstrukturen.

Wie Tabelle 1 (Fig. 12 bis 17) zu entnehmen ist, führt ein erhöhter Proteingehalt zu einer verbesserten Stabilisierung der Mikroschaumstruktur mit kleineren Blasengrö-ßen und erniedrigter Dichte (Fig. 14 und 16). Eine Erhöhung des Schaumgasgehaltes bis 0.2g CO2/100g Produkt wirkt sich verbessernd auf die Schaumstruktur aus [erhöhter Aufschlag = erniedrigte Dichte, kleine Blasendurchmesser (≤ 100 Micrometer), enge Blasengrößenverteilungsbreite (SPAN ≈ 1.5)] . Bei weitergehender Erhöhung des Schäumgasanteils (Fig. 16 und 17 mit 0.3g / 100 g) resultiert eine Vergröberung der Schaumblasen und Volumenteilverlust (ca. 10 bis 15 %).

**Tabelle 2: Beispielhaft verarbeitete Kuchen-Produkte (Rezeptur-/Verarbeitungsdaten)**

| | | | Masse in g / 100g aufgeschäumtem Teigprodukt | | | | |
|---|---|---|---|---|---|---|---|
| **Rezept** | **Protein** | **CO₂** | **Zucker** | **Gluten** | **Mehl** | **Kakao** | **H2O** |
| | | | | | | | |
| 1 | 30 | 0.2 | 11 | 4 | 9 | 3 | 43 |
| | | | | | | | |
| 2 | 30 | 0.3 | 11 | 4 | 9 | 3 | 43 |
| | | | | | | | |
| 3 | 24 | 0.2 | 11 | 4 | 9 | 3 | 49 |
| | | | | | | | |
| 4 | 24 | 0.3 | 11 | 4 | 9 | 3 | 49 |
| | | | | | | | |

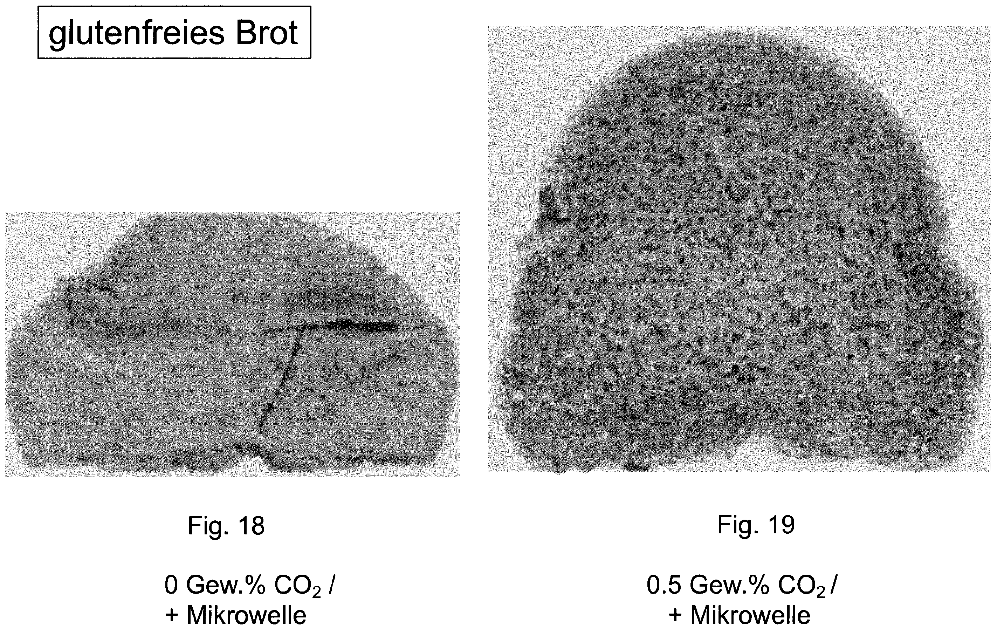

Für eine glutenfreie Brotrezeptur zeigen die Fig. 18 bis 21 den inneren Schaumstrukturvergleich bei unterschiedlicher Gasdosierung (hier CO2 mit 0, 0.5 und 0.8 Gew.% Anteilen bezogen auf Produktgesamtmasse). Aus den Fig. 18 und 19 wird die besondere Effizienz des erfindungsgemäßen Verfahrens bei der Anwendung auf glutenfreie Backwaren deutlich. Der Aufschlag (Produktvolumenvergrößerung durch stabil inkorporierten Gasvolumenanteil) bei 0.5 Gew.% Gasdosierung (bezogen auf Gesamtmasse) vergrößert sich um ca. Faktor 3 gegenüber dem nicht geschäumten Produkt gleicher Rezeptur. Bei Überdosierung der Aufschäumgasmenge (hier 0.8 Gew. % CO₂) entwickeln sich vermehrt zur Produktoberfläche hin offene und miteinander im Produktinnern verbundene Gasporen, was zum partiellen Gasaustritt und Volumenverlust des Produktes führt.

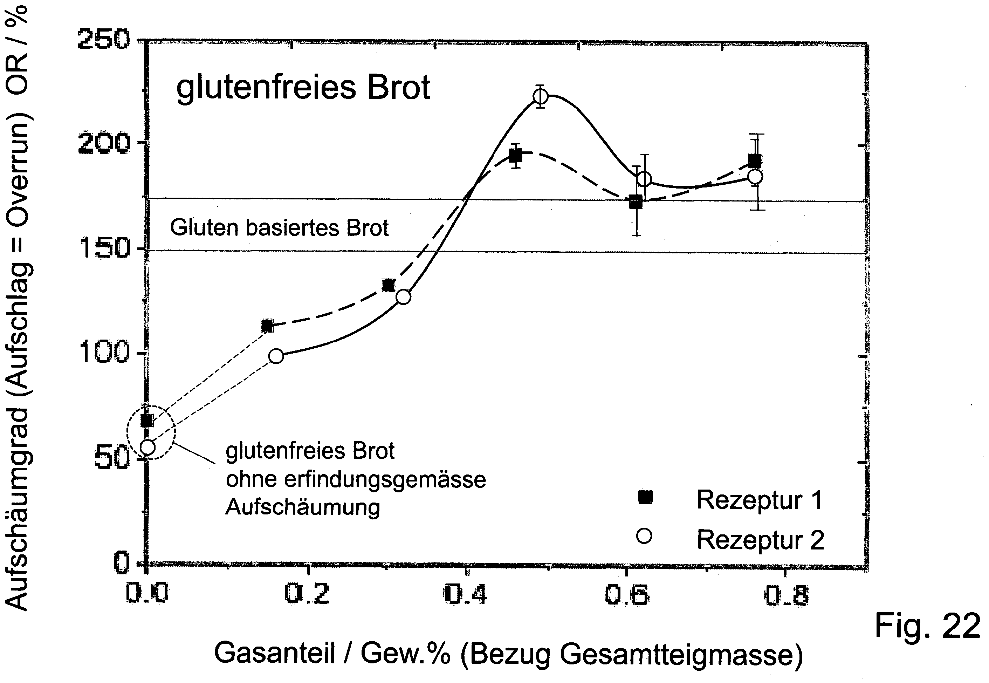

Figur 22 zeigt für das glutenfreie Brot den Zusammenhang zwischen dosiertem Gasanteil und resultierendem Overrun (= Volumenvergösserungsanteil gegenüber dem reinen Teigfluidvolumen) nach dem Backprozess (Endprodukt) mit Zwischenstufen für die Gasdosiermenge. Die dargestellten Messwerte entsprechen Mittelwerten aus fünf analysierten Proben. Die Mess-Standardabweichungen sind ebenfalls dargestellt bzw. liegen innerhalb der Größe der Symbole.

Die in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Einrichtung, Vorrichtung, Extrudereinrichtung
- 2: Förderschnecke, Stetigförderer, Extruderschnecke
- 3: Motor, Extruderschnecken-Antriebsmotor
- 4: Gehäuse
- 5: Trichter
- 6: Aufgabestelle
- 7: Fluidzuführvorrichtung-1
- 8: Leitung
- 9: Fluidversorgungsvorrichtung-1
- 10: Leitung
- 11: Innenraum, Extruderschneckenkanal, Verarbeitungsraum, Prozessraum
- 12: Fluidzuführvorrichtung-2
- 13: Leitung
- 14: Fluidversorgungsvorrichtung-2
- 15: Druckgaszuführvorrichtung
- 16: Rückschlagventil
- 17: Druckgasleitung
- 17a: Ventilvorrichtung
- 18: Druckgasquelle
- 19: Messvorrichtung (dispergierter/gelöster Gasanteil) - el. Leitfähigkeitsmessung
- 20: Drucksensor
- 21: Auslassstutzen
- 22: Endplatte
- 23: Bypassleitung
- 24: Gegendruckventilvorrichtung
- 25: Pulvermaterialaufnahmezone, Verdichtungszone
- 26: Fluidzuführzone-1
- 27: Mischzone
- 28: Fluidzuführzone-2
- 29: Druckgaszuführzone
- 30: Gasdispergier- und -lösezone
- 31: Gaslösungsmess- und Extruderaustrittszone
- 32: Messvorrichtung, Sensor (stat. Druck)
- 33: " , ". (stat. Druck)
- 34: " , ". (stat. Druck)
- 35: " , ". (stat. Druck
- 36: " , " (stat. Druck)
- 37: Dosierleitung, Leitung
- 38: Dosierventilvorrichtung
- 39: Flansch
- 40: Quetschventilvorrichtung
- 41: Hochdruckschlauchanschlussteil
- 42: O-Ring-Hochdruckdichtung
- 43: Hochdruckschlauchanschlussteil
- 44: Hochdruckschlauch, flexibler
- 45: O-Ring, Hochdruckdichtung
- 46: Bauteil
- 47: Querschnittsverstellvorrichtung (Gehäuse)
- 48: Verstellkolben
- 49: "
- 50: Verstellkopf
- 51: "
- 52: Verstellkopfoberfläche
- 53: "
- 54: Anschlussstutzen
- 55: Gehäuse
- 56: Eintrittskanal
- 57: Ventilkammer
- 58: Dosierkolben
- 59: Dichtung
- 60: "
- 61: Ventilauslasskammer
- 62: Ventilkopfraum
- 63: Ringspalt
- 64: Stirnseite (Ventilkolben)
- 65: Ventilauslasskanal
- 66: Fortsatz, zylindrischer
- 67: Ventildüsenspitze
- 68: Signalleitungen
- 69: "
- 70: "
- 71: "
- 72: Datenverarbeitungsanlage, zentrale Steuer-/ Regelungs-Kontrolleinheit (PLC, PC)
- 73: Signalleitung
- 74: "
- 75: "
- 76: "
- 77: "
- 78: "
- 79: "
- 80: "
- 81: "
- 82: Signalleitung (Leitfähigkeitssensor) in Figur 7 und in Figur 9 Eingang für Referenzwerte der Führungsgrösse w (Gleichgewichtswerte und Kinetik der Gleichgewichtswerteinstellung für die el. Leitfähigkeit bei stat. Druckvorgabe, off-line gemessen für verschiedene Aufschäumgase und Teigrezepturen, Laborversuch)
- 83: Vergleich aktueller Inline-Messwert x mit Referenzwert w (el. Leitfähigkeit zur Erreichung eines bestimmten Teigaufschäumgrades) und Ermittlung der Regelabweichung e
- 84: Regelstrecke
- 85: Regelgrösse (Istwert; hier: Leitfähigkeit κ)
- 86: Rückführung (Feed Back Loop)
- 87: Stellglied/Stellglieder (zur Veränderung des statischen Druckes in der Gasdispergier- und -Lösezone (31) = Druckventil für dosiertes Gas, Motor für Extruderschneckendrehzahl, Feststoff- (Pulver) und Fluid-Dosiereinheiten)
- 88: Störgrössen-"Einkopplung" in Regelstrecke
- 89: Manipulierte Variable y; Änderungssignal über PLC Signal zum Stellglied 87 (Aktuator) zur Einflussnahme (z. B. auf auf die gemessene Leitfähigkeit (x) über die Verstellung des statische Druckes (y) in der Gasdispergier- und -lösezone (30)) auf Schwankungen der Materialeigenschaften und/oder des Massenstroms und/oder der Teigviskosität)
- A: Hubrichtung des Dosierkolbens 58
- B: Hubrichtung des Dosierkolbens 58
- X: Förderrichtung der Teigmischung und des daraus geformten Teiges
- T: Verstellrichtung der Verstellkolben 48, 49
- V: " " " " "
- L: Förderschneckenlänge oder Kanallänge
- D: Durchmesser einer Förderschnecke
- A1: Querschnittsfläche des maximalen Strömungsquerschnitts in der Dosierventilvorrichtung
- A2: Querschnittsfläche des minimalen Strömungsquerschnitts in der Dosierventilvorrichtung
- OR: Overrun (= Volumenvergrößerung durch eingearbeitetes Schäumungsgas im aufgeschäumten Teig nach Dosierung)
- e: Regelabweichung
- z: Störgröße
- y: Stellgröße
- x: Aktueller Inline-Messwert der Regelgröße x (el. Leitfähigkeit)
- w: Referenzwert
- SPAN: Maß für die Blasengrößenverteilungsbreite (x90,3-x10,3)/x50,3, wobei x90,3 der 90% percentile, x10,3 der 10% percentile und x50,3 der 50% percentile der volumenbezogenen Durchmesserverteilung der im Produkt resultierenden Schaumphasen entsprechen
- bar: Druckeinheit (= 10^⁵ Pa)
- Vol.%: Volumenanteil
- Gew.%: Gewichtsanteil
- η: dynamische Viskosität (in Pas)
- η₁: dynamische Viskosität des hochviskosen einen Dichtungspfropf bildenden Teig oder Pastensystems nach Zudosierung einer ersten Fluidmenge mittels Fluidzuführvorrichtung-1 9, gemessen bei einer Schergeschwindigkeit von 100 s⁻¹ in einem Viskosimeter/Rheometer
- n₂: dynamische Viskosität des niedrigviskosen Teig- oder Pastensystems nach Zudosierung einer zweiten Fluidmenge mittels Fluidzuführvorrichtung-2 14 gemessen bei einer Schergeschwindigkeit von 200 s⁻¹ in einem Viskosimeter/Rheometer
- κ: elektrische Leitfähigkeit (in Millisiemens mS)
- κ,: elektrische Leitfähigkeit (in Millisiemens mS)
- κ_{equ}: elektrische Leitfähigkeit (in Millisiemens mS) im Gleichgewicht mit dispergierter bzw. gelöster Gasphase
- κₛₑₜₚₒᵢₙₜ: elektrische Soll-Leitfähigkeit (in Millisiemens mS) bei Erreichung eines bestimmten Anteils an dispergierter bzw. gelöster Gasphase
- Pas: Pascal-Sekunde (Einheit der dynamischen Viskosität)
- s: Sekunde (Zeiteinheit)
- s⁻¹: Einheit der Schergeschwindigkeit (= Scherbeanspruchung bei dynamischer Viskositätsmessung)
- γ.: Symbol für Schergeschwindigkeit
- φ_{G,v}: Symbol für Volumenanteil der Gasphase
- pₛₜₐₜ.: statischer Druck
- tv: Verweilzeit (z.B. in einer bestimmten Prozesszone)
- (dV/dt)_{T}: Volumenstrom
- A_{GDV}: Strömungsquerschnitt im Dosierventil
- (dm/dt)_{T}: Massenstrom
- m_{G}: zudosierte Gasmasse
- m_{G,max}: maximal zudosierte Gasmasse

### Literaturverzeichnis

/1/ Sciarini, L. S., P. D. Ribotta, A. E. Leon, and G. T. Perez: Effect of hydrocol-loids on gluten-free batter properties and bread quality. International Journal of Food Science and Technology, 45(11):2306-2312, 2010.
/2/ Foste, M., C. Verheyen, M. Jekle, and T. Becker: Fibres of milling and fruit processing by-products in gluten-free bread making: A review of hydration properties, dough formation and quality-improving strategies, 2 2020.
/3/ Kiumarsi, M., M. Shahbazi, S. Yeganehzad, D. Majchrzak, O. Lieleg, and B. Winkeljann: Relation between structural, mechanical and sensory properties of gluten-free bread as affected by modified dietary fibers. Food Chemistry, 277:664-673, 3 2019.
/4/ Riemsdijk, L. E. van, A. J. Van der Goot, R. J. Hamer, and R. M. Boom: Preparation of gluten-free bread using a meso-structured whey protein particle system. Journal of Cereal Science, 53(3):355-361, 5 2011.
/5/ Lammers, V. R. G. and E. J. Windhab: Foamed, dough-based food and apparatus and method for production thereof and use of the apparatus; (2015); Int. patent application WO 2017/081271 A1; Publication date 18.05.2017
/6/ Desjardins-Lavisse, i; Gillet, G.; Gressin, I. (2016); food dough and method for producing such a dough; Int. Patent application WO 20171068271 A1; Publication date: 18.10.2016
/7/ Chauvet M., Sauceau M., Fages J. (2017); Extrusion assisted by supercritical CO2: a review on its application to biopolymers: Review; Journal of Supercritical Fluids, Elsevier, 2017, Special Issue - 11th International Symposium on Supercritical Fluids, 120 (Part 2), pp.408-420; 10.1016/j.supflu.2016.05.043
/8/ Combrzyński M., Mościcki L., Mitrus M., Kupryaniuk K., Oniszczuk A. (2018); Application of extrusion-cooking technique for foamed starch-based materials; BIO Web Conf. 10 01004 (2018); DOI: 10.1051/bioconf/20181001004
/9/ Ryuzo U. et al. (2004); Dough for foam type baked product and method for making the baked product; US Patent application US 2004/0067295 A1; publication date: 08.04.2004
/10/ Ream R. L. et al. (2002); Shelf-stable cookie dough confection, product, packaging apparatus and process; US Patent application US 2002/0142081 A1; publication date: 02.10.2002
/11/ Evseev N. V. et al. (2011); Method for production of bread from foamed dough; Canadian Patent application CA 2841349 C; publication date: 02.07.2013
/12/ Renock S. M. et al. (2016); Concentrated shampoo dosage of foam designating hair conditioning benefits; Int. Patent application WO 2018/075846 A1; publication date: 26.04.2018
/13/ Jank R. (2013); Method and device for the process control of a plant for the continuous production of foams; European Patent application EP 3 096 931 B1; publication date: 05.03.2015
/14/ Prud'Homme R. K., Khan 5 S. A (1996); Experimental Results on Foam Rheology; Bookchapter in Book entitled "Foams"; 1st Edition Published 1996 Imprint Routledge; eBook ISBN 9780203755709
/15/ Hanselmann W.; Windhab E. (1999); Flow Characteristics and Modelling of Foam Generation in a Continuous Rotor/Stator Mixer; Journal of Food Engineering 38 (1999) 393-405
/16/ Murray, B. (2020); Recent developments in food foams; Current Opinion in Colloid & Interface Science 50; DOI 10.1016/j.cocis.2020.101394
/17/ Dhrupad Parikha et a. (2019); The coupled dynamics of foam generation and pipe flow; International Journal of Heat and Fluid Flow 79 (2019) 108442
/18/ Fischer P., Windhab E. J. (2011); Rheology of food materials; Current Opinion in Colloid & Interface Science; Volume 16, Issue 1, February 2011, Pages 36-40
/19/ J. S. Colton, N. P. Suh; Nucleation Of Microcellular Foam: Theory And Practice; Polymer Engineering And Science, April 1987, Vol. 27, No. 7
/20/ Center for Food Safety and Applied Nutrition. Labeling & Nutrition-Label Claims for Conventional Foods and Dietary Supplements. Accessed on 30 November 2018 https://www.fda.gov/food/labelingnutrition/ucm111447.htm
/21/ The Food and Drug Administration. A Food Labeling Guide. https://www.fda.gov/downloads/Food/GuidanceRegulation/GuidanceDocumentsRegulat orylnformation/UCM265446.pdf, Accessed on 30 November 2018.
/22/ The Food and Drug Administration. Protein. https://www.accessdata.fda.gov/scripts/InteractiveNutritionFactsLabel/factsheets/Protei n.pdf, Accessed on 30 November 2018.

## Patentansprüche

1. Verfahren zum kombinierten, kontinuierlichen Mischen und Dosieren von unter statischem Druck gasangereicherten Teigen oder Pasten zur Herstellung aufgeschäumter Produkte, bevorzugt Backwaren, weitergehend bevorzugt glutenfreien Backwaren, bei dem eine fließfähige oder rieselfähige, trockene Pulvermischung für Teige oder Pasten mit einem Gehalt an Pflanzenprotein im Bereich von 5 bis 70 Gew. %, bezogen auf die Trockensubstanz, in den langgestreckten Prozessraum eines motorisch angetriebenen Extruders eingebracht wird, in welchem
(i) durch eine als Fluidzuführvorrichtung-1 (7) zur Herstellung eines hochviskosen Teiges oder einer hochviskosen Paste mit einer dynamischen Viskosität von η (γ.) ≥ 10 Pas, gemessen in einem Rotationsrheometer bei einer Schergeschwindigkeit von γ. = 100 s⁻¹, Fluid zugesetzt und so ein sich kontinuierlich aufbauender, gegen Rückströmungseffekte von Fluid oder Gas dichtender Teig- oder Pastenpfropfen gebildet wird,
(ii) die Viskosität des hochviskosen Teig- oder Pastenpfropfens durch Zudosieren einer zusätzlichen fluiden Komponentenfraktion an mindestens einer weiteren in Förderrichtung (X) von der ersten Fluidzuführvorrichtung-1 (7) beabstandeten Fluidzufuhrstelle um ≥ 20%, bevorzugt ≥ 50% reduziert wird,
(iii) wonach durch eine in axialer Förderrichtung (X) angeordnete Druckgaszuführvorrichtung (15) eine Gaskomponente unter Druck zugeführt und in der Teig- oder Pastenfluidphase feindispergiert und/oder gelöst wird, und
(iv) wobei auf der Austragsseite des als Prozessraum ausgebildeten Verarbeitungsraums mindestens ein als Dosierventilvorrichtung (38) ausgebildetes Teig- oder Pastenaustrags- und Dosierelement angeordnet ist,
(v) dessen Austrittsöffnung in ihrem Querschnitt geregelt oder gesteuert wird, um den für die Gaslösung im Prozessraum erforderlichen statischen Druck aufrechtzuerhalten, und wobei
(vi) eine Messvorrichtung (19) den Gaslösungsgrad zwischen der Druckgaszuführvorrichtung und der Dosierventilvorrichtung (38) kontinuierlich misst,
(vii) und aufgrund einer Druckregelung bis zum Ende der Dosierventilvorrichtung (38) das im Teig oder in der Paste enthaltene Gas in Lösung bzw. Feindispersion gehalten und erst beim Austritt aus einem Ventilauslasskanal (65) der Dosierventilvorrichtung (38) unterstützt durch native Stärkepartikeln, welche eine sekundäre, heterogene Gasblasennukleation initiieren, unter Druckabsenkung die Schaumbildung eingeleitet wird, und
(viii) wobei die anschließende Teig- oder Pastenschaumexpansion zu mindestens ≥ 20 Vol.%, bevorzugt ≥ 50 Vol.%, unterstützt durch die Teig- oder Pastenviskosität erst nach Austritt des Teiges oder der Paste aus der Dosierventilvorrichtung (38) erfolgt.

2. Verfahren nach Anspruch 1, **dadurch gekennzeichnet, dass** der Teig oder die Paste in einem oder mehreren Extrudern mit jeweils mindestens einer, bevorzugt zwei motorisch angetriebenen, zonenweise unterschiedlich mit Förder- und/oder Misch- und/oder Dispergierelementen bestückten Extruderschnecke(n) transportiert wird, wobei der/die betreffende(n) Extruder während des Förderprozesses an beiden Enden gasdicht verschlossen wird/werden, sodass durch die Zugabe von Gas unter Druck in den zur Gasdispergierung und/oder Gaslösung ausgebildeten Teil des betreffenden Extruderschneckenkanals im Prozessraum kein Gasverlust auftritt, und das Gas im Teig oder in der Paste innerhalb dieses Teilbereiches des Extruderschneckenkanals (11) unter erhöhtem statischen Druck kontrolliert vollständig fein dispergiert und/oder gelöst wird und keine Schaumbildung bis unmittelbar vor der Austrittsöffnung der Dosierventilvorrichtung (38) initiiert wird.

3. Verfahren nach Anspruch 2, **dadurch gekennzeichnet, dass** ein rieselfähiges, trockenes Pulver oder eine rieselfähige Pulvermischung zur Herstellung eines Teiges oder einer Paste in den Extruderschneckenkanal (11) mindestens einer oder mehrerer, motorisch angetriebenen Extruderschnecke(n) (2) eingebracht und dieser rieselfähigen Pulvermischung oder dem rieselfähigen Pulver am Anfang des Extruderschneckenkanals (11) ein wasser- und/oder öl-basiertes Fluidsystem zugesetzt wird zur Herstellung eines hochviskosen Teigs oder einer hochviskosen Paste mit einer dynamischen Viskosität von η (γ.) ≥ 10 Pas, gemessen in einem Rotationsrheometer bei einer Schergeschwindigkeit von γ. = 100 s⁻¹, der bzw. die im vorderen Bereich des Extruderschneckenkanals (11) als fluid- und gasdichter Verschlusspfropfen verwendet wird, und im Abstand davon im Extruderschneckenkanal zur Herstellung eines verdünnten, niedrig viskosen Teiges oder einer niedrig viskosen Paste mit um ≥ 20%, bevorzugt ≥ 50% reduzierten dynamischen Viskosität, diesem bzw. dieser ein weiterer Anteil eines wasser- und/oder öl-basierten Fluidsystems zugesetzt wird, und diesem niedrig viskosen Teig oder dieser niedrig viskosen Paste anschließend Gas unter Druck zugesetzt wird, und dieses Gas unter überlagerter Scherung im Extruderschneckenkanal (11) im Spalt zwischen co-rotierenden Förderschnecken (2) erzeugten Strömungsschichten in einen Lösungs- bzw. Mikrodispersionszustand mit Gasbläschen im Durchmesserbereich ≤ 10 Mikrometer, bevorzugt ≤ 4 Mikrometer im Teig- oder Pastensystem überführt wird, sowie unter Vermeidung von Schaumbildung dieser Lösungs-/Dispersionszustand erhalten bleibt, bis in dem gashaltigen Teig oder in der gashaltigen Paste kurz vor Austritt aus einer oder mehreren Austrags-/Dosiervorrichtungen durch sekundäre, heterogene Gasblasennukleation und Druckabsenkung die Blasenkeimbildung eingeleitet und verstärkt wird.

4. Verfahren nach Anspruch 1 oder einem oder mehreren der darauffolgenden Ansprüche, **dadurch gekennzeichnet, dass** die Regelung der Fluidzufuhr an den zwei oder mehreren Fluidzuführvorrichtungen (7, 12) im Extruderschneckenkanal (11) in Abhängigkeit der Teig- oder Pastenviskosität vorgenommen wird, wobei in einer Mischzone (27) Dichtungsbedingungen gegen Fluid- und Gasrückströmungen aus den in Strömungsrichtung der Mischzone (27) nachgeordneten Fluidzuführzone-2 (28) sowie der Druckgaszuführzone (29) durch die Ausbildung eines den Extruderschneckenkanal (11) dynamisch abdichtenden Teig- oder Pastenpfropfens hoher dynamischer Viskosität von η (γ.) ≥ 10 Pas, gemessen in einem Rotationsrheometer bei einer Schergeschwindigkeit von γ. = 100 s⁻¹ realisiert werden, und durch diese dynamische Abdichtung statische Drucke in der Gasdispergier- und -lösezone (30) zwischen 5 bis 100 bar und damit Gaslösungs- und/oder Mikro-Dispergierbedingungen für die Gasphase in dem Teig oder in der Paste bei Verweilzeiten in dieser Gasdispergier- und -lösezone (30) zwischen 10 bis 120 Sekunden, bevorzugt zwischen 30 bis 60 Sekunden, bereitgestellt werden, wobei der axiale Abstand zwischen den Fluidzuführvorrichtungen (7, 12) stufenlos eingestellt sowie letztere in jeweils vorbestimmten, auf die Teig- oder Pastenrezeptur abgestimmten Positionen arretiert werden, und der mit ≥ 10 Vol% bezogen auf den entspannten Zustand unter Atmosphärendruck mit Gas angereicherte Teig oder die Paste in einen Behälter, eine Gieß- oder Backform, eine Verpackung oder auf ein Förderband über ein oder mehrere als Dosierventilvorrichtung(en) (38) ausgebildete Austrags-/Dosierelemente ausgetragen werden, wobei eine statische Drucksteuerung/Druckführung die Einstellung des Grades an Gas-Mikrodispergierung und/oder Gaslösung im Teig oder in der Paste bewirkt, sowie für den gelösten Gasanteil die Gasblasenkeimbildung und die Einleitung der Blasenexpansion an das Austrittsende der als Dosierventilvorrichtung(en) (38) ausgebildeten Austrags-/Dosierelemente verlegt und die weitere Blasenexpansion und Schaumbildung zu mindestens ≥ 20 %, bevorzugt ≥ 50% in dem bereits dosierten Teig oder in der Paste vollzogen wird, womit eine strömungsmechanisch ungestörte räumlich gleichmäßige Gasblasenexpansion mit resultierender enger Blasengrößenverteilung beschrieben durch SPAN-Werte (SPAN = (x_{90,3}-x_{10,3})/x_{50,3},) für den dosierten, geschäumten Teig oder die dosierte geschäumte Paste im Bereich von ≤ 1.5, bevorzugt ≤ 1.2, und weitergehend bevorzugt von ≤ 1, sowie Schaumblasen- bzw. Porendurchmesser x_{50,3} (A) von 4 bis 200 Mikrometern, bevorzugt von 20 bis 100 Mikrometern, für den extrudierten, aufgeschäumten Teig oder die Paste, sowie (B) von 10 bis 250, bevorzugt von 20 bis 150 Mikrometern für den aus geschäumtem Teig oder der Paste durch Nachbehandlung in Backprozessen erzeugte Produkte, erzielt werden, und wobei zur Regelung der mittleren Blasen-/Porendurchmesser (x50,3) sowie deren Größenverteilungsbreite (SPAM) eine oder mehrere der folgenden Systemparameter als Stellgrößen verwendet werden:
(a) Teig- oder Pastenviskosität,
(b) Anzahldichte der dem Teigsystem hinzugefügten Blasenkeimbildungs-**Nukleator-Partikeln,**
(c) Teig- oder Pasten Massenstrom,
(d) eingetragener, Gesamtmasse-bezogener Gasanteil
(e) Drehzahl der Extruderschnecken,
(f) Öffnungsquerschnittsflächen der Dosierventile, welche in Abhängigkeit von (a) bis (e) die räumlichen und zeitlichen Druckentspannungsgradienten festlegen, wobei letztere mit den entsprechenden räumlichen und zeitlichen Gasblasen-Nukleations- und Expansionsgradienten direkt korrelieren.

5. Verfahren nach Anspruch 1 oder einem oder mehreren der darauffolgenden Ansprüche, **dadurch gekennzeichnet, dass** die Zufuhr eines wasser- und/oder öl-basierten Fluidsystems, und Gas in Abhängigkeit von der Teig- oder Pastenrezeptur gesteuert oder geregelt eingestellt wird, wobei (A) die erste Fluiddosierung mittels der Fluidzuführvorrichtung-1 (7) bei einer in Förderrichtung gemessenen axialen Extruderschneckenlänge L1 erfolgt, die dem 2- bis 8-fachen des Extruderschneckendurchmessers D entspricht (L/D = 2 bis 8), und dass die zweite Fluiddosierung mittels der Fluidzuführvorrichtung-2 (12) bei einer axialen Extruderschneckenlänge L2 aufgebracht wird, die mindestens dem 10- bis 14-fachen des Extruderschneckendurchmessers D entspricht (L/D = 10 bis 14), und (B) die Dosierung des Schäumungsgases über die Druckgaszuführvorrichtung (15) in Form von CO₂ oder N₂ oder N₂O₂ oder Luft oder Mischungen daraus unter einem statischen Druck von 5 bis 100 bar, vorzugsweise unter einem Druck von 15 bis 35 bar, mit einem Gasvolumenanteil zwischen 5 bis 70 Vol.-%, bezogen auf den druckentspannten Umgebungszustand des Teiges bzw. der Paste, im Extruder bei einer axialen Extruderschneckenlänge L3 erfolgt, die mindestens dem 12- bis 16-fachen des Extruderschneckendurchmessers D (L/D = 12 bis 16) entspricht, während für den Längenbereich der Gasdispergier- und -lösungszone (30) mindestens 12 ≤ L/D < 20, vorzugsweise 14 ≤ L/D < 26, bei Verwendung eines Extruders mit einer Gesamtlänge von 28D gilt, wohingegen diese und alle zuvor angegebenen L/D-Längenskalen mit dem Faktor (L/D)ₘₐₓ/28 multipliziert werden bei Verwendung eines Extruders mit (L/D)ₘₐₓ verschieden von 28.

6. Verfahren nach Anspruch 1 oder einem oder mehreren der darauffolgenden Ansprüche, **dadurch gekennzeichnet, dass** das Verfahren bei einer Temperatur unter 160°C, bevorzugt unter 100°C und weitergehend bevorzugt unter 60°C durchgeführt wird, und der geschäumte Teig oder die geschäumte Paste nach dem Austragen in einen Behälter, eine Gieß- oder Backform, ein Verpackungsmittel oder auf ein Förderband entweder gebacken wird mittels Konvektionsbackprozess oder kombinierten Mikrowellen-Konvektionsbackprozess oder im frisch extrudierten oder teilweise gebackenen Zustand gekühlt oder eingefroren wird.

7. Steuer- und/oder Regelungsvorrichtung für ein Verfahren nach Anspruch 1 oder einem oder mehreren der darauffolgenden Ansprüche, mit einer oder mehreren motorisch angetriebenen Extruderschnecke(n) (2), die durch eine als Trichter (5) mit Austragsorgan ausgebildeten Pulver- oder Schüttgutdosiervorrichtung beschickt werden, wobei in einer Fluidzuführzone-1 (26) mittels Fluidzuführvorrichtung-1 (7) einer rieselfähigen Teig- oder Pasten- oder Pulvermischung eine rezeptspezifisch festgelegte Menge einer wasser- und/oder öl-basierten Flüssigkeit zugeführt wird, um in einer nachgeschalteten Mischzone (27) einen Teig oder eine Paste hoher dynamischer Viskosität von η₁ (γ.) ≥ 10 Pas, gemessen in einem Rotationsrheometer bei einer Schergeschwindigkeit von γ. = 100 s⁻¹ η₁ zu erzielen, und wobei diesem Teig oder dieser Paste in einer Fluidzuführzone-2 (28) mittels Fluidzuführvorrichtung-2 (12) rezeptspezifisch eine zusätzliche Fluidmenge zudosiert wird, um den Teig oder die Paste bei einer bestimmten um ≥ 10 %, bevorzugt ≥ 50% reduzierten Viskosität η₂ < η₁ einzustellen, und ferner Gas nachfolgend in einer Druckgaszuführzone (29) mittels Druckgaszuführvorrichtung (15) stromaufwärts im axialen Abstand von der Fluidzuführvorrichtung-2 (12) unter Druck kontrolliert zudosiert wird, um im Endprodukt eine reduzierte Dichte durch Schaumbildung zu erzielen, wobei anschließend das eingebrachte Gas unter kontrolliert eingestelltem, statischen Druck zwischen 5 und 100 bar gelöst oder homogen mikrodispergiert wird, während ein die elektrische Leitfähigkeit messender Sensor den Lösungs- bzw. Mikrodispersionsgrad dieses Gases in der wässrigen Teig- oder Pastenphase ermittelt, um den Grad der Erreichung eines Gleichgewichtswertes der Gaslösung/Mikrodispergierung während einer vorgegebenen Teig- oder Pastenverweilzeit am Ende der Gasdispergier und -lösezone VI (30) in dem als Gaslösungsmess- und Extruderaustrittszone VII (31) bezeichneten Bereich der Vorrichtung (1) anzuzeigen, wobei auf dieser Messung basierend die geregelte Einstellung des Anteils an dispergiertem bzw. gelösten Gases mittels einer Feedback-Schleifen-Regelung unter Einsatz von Stellgliedern erreicht wird, welche entweder (a) eine als Bypass-Gegendruckventil ausgebildete Gegendruckventilvorrichtung (24) in einer Vorbereitungsphase des Dosierprozesses oder (b) mindestens eine Dosierventilvorrichtung (38) in der aktivierten Dosierphase des Prozesses sind, und wobei der Öffnungsgrad dieser Ventile den statischen Druck in der Gasdispergier- und -lösezone VI (30) bestimmt, und somit die Dispergier- und/oder Lösungskinetik und die Anteile des gelösten bzw. mikrodispergierten Gases bzw. Gasgemisches im Teig- oder in der Paste regelt, was durch Erreichen eines in-line gemessenen Leitfähigkeitswertes κ angezeigt wird.

8. Steuer- und/oder Regelungsvorrichtung nach Anspruch 7, **dadurch gekennzeichnet, dass** die kontrollierte Einstellung der Teig- oder Pastenscherviskosität A: in der Fluidzuführzone-1 (26) auf einen Wert von 10 ≤ η₁ < 1000 Pas, bevorzugt 50 ≤ η₁ < 200 Pas, erfolgt, der die Abdichtung durch den Teig oder die Paste im Extruderschneckenkanal (11) gegenüber Gas oder Fluidrückfluss aus der Fluidzuführzone-2 IV (28) bzw. der Druckgaszuführzone V (29) stromaufwärts gewährleistet, wobei die Viskosität η₁ das nicht-Newtonsche Fließverhalten des Teigs berücksichtigt, indem sie sich auf eine repräsentative Schergeschwindigkeit von 100 s⁻¹ bezieht, die in der Mischzone III (26) wirkt und die zugehörige Viskositätsfunktion η(γ.) offline durch Teig- oder Pastenrheometrie mittels Hochdruckkapillarrheometer oder Rotationsrheometer bestimmt wird, - sowie:
B: in der Fluidzuführzone-2 (28) auf einen Wert von 1 Pas ≤ η₂ < 20 Pas, bevorzugt 5 Pas ≤ η₂ < 10 Pas, erfolgt und in der somit gegenüber η₁ viskositätserniedrigten fluiden Teig- oder Pastenphase nach Druckgaszufuhr in der Druckgaszuführzone (29) in der zu dieser nachfolgend angeordneten Gasdispergier- und -lösezone VI (30) innerhalb einer Verweilzeit von 30 bis 300 s, bevorzugt 50 bis 120 s, Gas mikrodispergiert und/oder gelöst wird, um einen Schäumungsgrad im Endprodukt, ausgedrückt als Gasvolumenanteil ϕ_{G,v} am Gesamtproduktvolumen, im Bereich 10 ≤ ϕ_{G,v} < 75 Vol.-%, bevorzugt 20 ≤ ϕ_{G,v} < 50 Vol.-%, und damit verbunden eine entsprechend reduzierte Dichte im Endprodukt zu erzielen, wobei die Viskosität η₂ das nicht-Newtonsche Fließverhalten des Teigs oder der Paste berücksichtigt, indem sie sich auf eine repräsentative Schergeschwindigkeit von 200 s⁻¹ bezieht, welche in der Gasdispergier- und -lösezone VI (30) wirkt, wobei die, zugehörige Viskositätsfunktion η(γ.) offline mittels Hochdruckkapillarrheometrie oder Rotationsrheometrie bestimmt wird.

9. Steuer- und/oder Regelungsvorrichtung nach den Ansprüchen 7 und 8, **dadurch gekennzeichnet, dass** die Einstellung des statischen Druckes in der Gasdispergier- und -lösezone VI (30) in Abhängigkeit des in der anschließenden Gaslösungsmess- und Extruderaustrittszone VII (31) gemessenen elektrischen Leitfähigkeitswertes κ erfolgt, wobei der Grad der Erreichung eines druckabhängigen Gleichgewichtswertes für die elektrische Leitfähigkeit κ_{equ} (p_{stat.}) Maß für den Grad des Gas-Teig-Stoffüberganges ist, welcher während der Teig- oder Pastenverweilzeit im Extruderschneckenkanal (2) innerhalb der Gasdispergier- und -lösezone VI (30) erreicht wird, und somit die Konzentration des dispergierten und/oder gelösten Gases im Teig oder in der Paste c_{GAS} nach Maßgabe des in-line gemessenen Leitfähigkeitswertes κ rezepturspezifisch eingestellt wird, wobei die relevante Kombination aus Verweilzeit t_{V(30)} bzw. Teig- oder Pastenvolumenstrom (dV/dt)_{Produkt} und statischem Druck pₛₜₐₜ₍₃₀₎ in der Gasdispergier- und -lösezone VI (30) auf Basis einer Kalibrierfunktion κ = f(pₛₜₐₜ₍₃₀₎, tv) eingestellt wird, welche in einem Vorversuch mittels Extruder (2) / Gegendruckventilvorrichtungs (24) - Kopplung ermittelt wird, und wobei in diesem Vorversuch unter Variation der freien Strömungsquerschnittsfläche A_{GDV} in der Gegendruckventilvorrichtung (24) für gewählte Extruderschneckendrehzahl ns und Teig- oder Pastenmassenstrom (dm/dt)_{Produkt}, der statische Druck Pₛₜₐₜ₍₃₀₎ am Ende der Gasdispergier- und -lösezone VI (30), sowie die elektrische Leitfähigkeit κ in der anschließenden Gaslösungsmess- und Extruderaustrittszone VII (31) ermittelt werden, woraus für die reguläre Prozessführung mit kontinuierlicher Dosierung übertragbare Kombinationen der genannten Prozessgrößen nach Maßgabe des im dosierten Teig zu erreichenden Aufschäumgrades abgeleitet und in einer Datenbank gespeichert werden.

10. Steuer- und/oder Regelungsvorrichtung nach Anspruch 7 oder einem oder mehreren der darauffolgenden Ansprüche, **dadurch gekennzeichnet, dass** bei vorgegebenen Teig- oder Pastenmassenstrom (dm/dt)_{Produkt} und rezepturbedingter Teig- oder Pastenviskosität eine Feedbackschleifen-Regelung mit einer vorgegebenen elektrischen Leitfähigkeit κₛₑₜₚₒᵢₙₜ als Führungsgröße w angewendet wird, wobei der statische Druck pₛₜₐₜ₍₃₀₎ in der Gasdispergier- und -lösezone VI (30) als indirekte Stellgröße y sowie die in der Gaslösungsmess- und Extruderaustrittszone VII (31) gemessene elektrische Leitfähigkeit κ als Regelgröße einbezogen werden, und wobei ferner als Stellglieder entweder eine Gegendruckventilvorrichtung (24) in einer Bypass-Leitung (23), oder mindestens eine Dosierventilvorrichtung (38), und/oder eine Druckgaszuführvorrichtung (15) und/oder eine mit dem Extruderschnecken-Antriebsmotor (3) gekoppelte Drehzahlverstelleinrichtung für die Extruderschneckendrehzahl ns verwendet werden, um den statischen Druck in der Gasdispergier- und -lösezone (30) definiert einzuregeln, wobei eine Gegendruckventilvorrichtung (24) in einer Bypassleitung (23) in einem Vorbereitungslauf (A) zum regulären Dosierprozess eingesetzt wird zur Ermittlung des statischen Druckes pₛₜₐₜ₍₃₀₎ in der Gasdispergier- und -lösezone VI (30), welcher unter den hinsichtlich Teig- oder Pastenmassenstrom (dm/dt)_{Produkt}, Gasmassenstrom (dm/dt)_{Gas} und Schneckendrehzahl ns eingestellten Prozessbedingungen unter Vorgabe von Produktrezeptur und Schneckengeometrien erzielt wird, und welcher den Gaslösungs- bzw. Mikrodispersionsgrad (dm/dt)_{Gas(L,D)} / (dm/dt)_{Gas}, gemessenen über die elektrische Leitfähigkeit κ [(dm/dt)_{Gas(L,D)} / (dm/dt)_{Gas}] bestimmt, der sich in der zugeordnet realisierten Verweilzeit tv(30) in der Gasdispergier- und -lösezone VI (30), einstellt, wobei (dm/dt)_{Gas} den Gesamtmassenstrom an zudosiertem Gas und (dm/dt)_{Gas(L,D)} die Massenströme des in Lösung gegangenen (dm/dt)_{Gas(L)} bzw. des micro-dispergierten nicht in Lösung gegangenen Gasanteils (dm/dt)_{Gas(D)} bezeichnen, wobei letztere beiden Größen zusätzlich von der verwendeten Gasart abhängen, und wobei beim Umschalten von diesem im Bypass (23) mit Gegendruckventilvorrichtung (24) vorgenommenem Vorbereitungslauf (A) auf den regulären Dosierprozess (B), bei welchem ein oder mehrere angeschlossene Dosierventilvorrichtungen (38) aktiviert werden, diese durch Einstellung der (des) Dosierventil-Öffnungsgrade(s) gewährleisten, dass der statische Druck und der damit eingestellte, über die elektrische Leitfähigkeit des Teiges oder der Paste gemessene, Gaslösungs- bzw. Gasdispergierungsgrad in der Gasdispergier- und -lösezone VI (30) auf gleichem Niveau wie im Vorbereitungstestlauf mittels Gegendruckventilvorrichtung (24) in der Bypass-leitung (23), vorliegen, und dass für den regulären Verlauf des Dosierprozesses (B) 2n Dosierventilvorrichtungen (38) mit n = 1 bis 20, n die halbe Anzahl der eingesetzten Dosierventilvorrichtungen (38) bezeichnend, in zwei Gruppen mit jeweils n Dosierventilvorrichtungen alternierend dosieren, und damit das statische Druckniveau in der Gasdispergier- und -lösezone VI (30) beim Umschalten zwischen den zwei hinsichtlich Strömungsdruckverlusten gleich ausgelegten Dosierventilvorrichtungs-Halbgruppen, abgesehen von vernachlässigbar kurzzeitigen (< 0.5 s) Druckschwankungen beim Umschaltvorgang, konstant bleibt.

11. Vorrichtung zum Durchführen des Verfahrens nach Anspruch 1 oder einem oder mehreren der darauffolgenden Ansprüche zur kombinierten, kontinuierlichen Mischung und Dosierung von unter statischem Druck gasangereicherten Teigen oder Pasten, zur Herstellung aufgeschäumter Produkte, bevorzugt Backwaren, und weitergehend bevorzugt glutenfreier Backwaren unter Verwendung einer oder mehrerer motorisch angetriebener Extruderschnecken (2), jeweils mit einem Einfülltrichter (5) für rieselfähiges, trockenes Pulver oder rieselfähige trockene Schüttgutmischungen, mindestens zwei in Längsachsrichtung des betreffenden Extruders angeordneten Fluidzuführvorrichtungen (9, 12), mittels derer über Ventile gesteuert oder geregelt unterschiedliche Fluidmengen dem Extruderschneckenkanal (11) zugeführt werden, einer Druckgaszuführvorrichtung (15), über die Gas unter Druck von 5 bis 100 bar in den Extruderschneckenkanal (11) eingeleitet wird und in Förderrichtung (X) dem Extruderschneckenkanal (11) in prozesspezifischen Zonen I bis VII (25 bis 31) zugeordneten Mess- oder Sensorvorrichtungen (32 bis 36), die den statischen Druck bzw. die statische Druckentwicklung entlang des Extrusions-Prozessraumes und den gelösten bzw. mikrodispergierten Gasanteil (19) im Teig oder in einer Paste nach der Gasdispergier- und -lösezone VI (30) messen, sowie einem in einer Bypassleitung (23) angeordneten, als Gegendruckventilvorrichtung (24) ausgebildeten Teig- oder Pastenaustrags-Staudruckventilelement, dessen Austrittsquerschnitt zum Aufbauen eines statischen Gegendrucks im Extruderschneckenkanal (11) in Folge Verwendung eines mittels zweier Verstellkolben (48, 49) in seinem Querschnitt einstellbaren flexiblen Hochdruckschlauches (44) stufenlos veränderbar und in der jeweiligen Einstellposition arretierbar ist, sowie mindestens einer als Teig- oder Pastenaustrags-Dosierventilelement ausgebildeten Dosierventilvorrichtung (38), welche eine oder mehrere Dosierdüsen aufweist, letztere angeordnet in Gruppen mit auswechselbarer oder auf Dosierdruck, Fluidviskosität und Dosiermassenstrom abgestimmt einstellbaren Düsenendausströmquerschnitten.

12. Vorrichtung nach Anspruch 11, **dadurch gekennzeichnet,** mit mindestens einer als Austrags-Dosierventil-Element ausgebildeten Dosierventilvorrichtung (38), die durch einen Verstellkolben (48) verschließbar ist, welcher im geöffneten Zustand dieser Dosierventilvorrichtung den Austrittsdüsenquerschnitt frei gibt und eine Strömungsquerschnittsfläche A1 bis zur Ventilauslasskammer (61) aufweist sowie nachfolgend auf einer Länge von 1 bis 40 mm, bevorzugt 5 bis 15 mm im Ventilauslasskanal (67) einen verengten Strömungskanalquerschnitt mit Querschnittsfläche A2 aufweist, wobei A2 ≤ 0.01 bis 0.5 A1 und bevorzugt A2 ≤ 0.05 bis 0.3 A1 gilt, und im Dosierfalle (a) einerseits ein Gegendruck von ≥ 2 bar, bevorzugt ≥ 5 bar und weitergehend bevorzugt ≥ 10 bar vor der Dosierventilvorrichtung (38) aufgebaut wird, welcher bis in die Gasdispergier- und -lösezone (30) rückwirkt, und dort ein eingestelltes Maß an Gas-Lösung und/oder Gas-Mikrodispergierung erzielt sowie (b) andererseits erst im Dosierdüsenaustrittskanal (65) eine statische Druckabsenkung erfolgt, welche zu Gasblasennukleation und beginnender Gasblasenexpansion führt, und wobei der mittels Verstellkolben (48) dichtend verschließbare Austrittsquerschnitt bevorzugt einen sich konisch verengenden Ringquerschnitt des Strömungskanals aufweist, der Hub dieses Verstellkolbens manuell oder motorisch kontrolliert einstellbar ist, und bei vergrößertem Hub somit ein in der Querschnittsfläche vergrößerter ringförmiger sich konisch verjüngender Strömungsquerschnitt für die zu dosierende Teig- oder Pastenmasse freigebbar ist, wobei die mittlere Strömungsquerschnittsfläche dieses konischen Ringkanals über den gesamten Bereich der verstellbaren Hublänge des Ventilstempels um den Faktor ≤ 2, bevorzugt um den Faktor ≤ 10, veränderbar, stufenlos einstellbar ist.

13. Vorrichtung zum Durchführen des Verfahrens nach den Ansprüchen 11 und 12, **dadurch gekennzeichnet, dass** für den geregelten Druckaufbau und die Gaslösung im Teig oder in der Paste ein Extruderschneckenkanal (11) eines co-rotierenden Doppelschneckenextruders, mit einer Länge von L/D = 14 bis 50 (mit L = Schneckenkanallänge und D = Schneckendurchmesser), vorgesehen ist und die Extruderlänge in sieben hinsichtlich prozesstechnisch zugeordneter Funktion und mit Schneckenelementen unterschiedlicher Geometrie bestückten Längensegmentzonen von jeweiliger Segmentlänge zwischen L/D = 2 und L/D = 10 unterteilt ist und diesen sieben Längensegmentzonen folgende prozesstechnischen Funktionen zugeordnet sind:
| | |
|---|---|
| Zone I: | Pulveraufnahme- und Verdichtungszone (25); Dosierung und Verdichtung der Pulvermischung; |
| Zone II: | Fluidzuführzone-1 (26); erste Fluidzuführung |
| Zone III; | Mischzone (27); Mischen/Kneten und Bildung eines hochviskosen den Extruderschneckenkanal gegen Zonen IV und V abdichtenden Teig- oder Pastenpfropfen |
| Zone IV: | Fluidzuführzone-2 (28); Fluideinmischung und Teig- oder Pastenviskositätsabsenkung |
| Zone V: | Druckgaszuführzone (29); Einleitung des Gasanteils unter statischem Druck bis 100 bar. |
| Zone VI: | Gasdispergier- und -lösezone (30); Mikrodispergierung und/oder Lösung des zudosierten Gasanteils |
| Zone VII: | Gaslösungsmess- und Extruderaustrittszone (31); Annäherung an Gasdispergierungs- und/oder Gaslösungsgleichgewichtszustand, Messung von statischem Druck und elektrischer Leitfähigkeit sowie Einlauf in Bypass- oder Dosierdüsenzuleitungen. |
und gemäß den funktionalen Zuordnungen der Zonen I-VII die Bestückung der Extruderschnecken mit Schneckenelementen erfolgt, welche die zugeordneten Funktionen (i) strömungstechnisch, (ii) verweilzeitbezogen und (iii) leistungseintragsbezogen unterstützen, wobei in Abhängigkeit von Rezepturzusammensetzung und teig- oder pastensystemspezifischer Gaslösungs- bzw. Dispergierkinetik eine Veränderung der Extruderzonenlängen (24 bis 31) für die vorgenannten zugeordneten Funktionen um ca. ± 1 bis 2 L/D Segmentlängen derart erfolgt, dass eine Gleichgewichtszustand hinsichtlich der Mikro-Gasdispersion und Gas-lösung in der Zone VI erreicht wird.

14. Produkt, hergestellt nach einem Verfahren gemäß Anspruch 1 oder einem oder mehreren der darauffolgenden Ansprüche 2 bis 6, **dadurch gekennzeichnet, dass** das Produkt glutenfrei ist, einen nicht glutenhaltigen Anteil an Pflanzenproteinen zwischen 5 bis 70 Gew.%, bevorzugt zwischen 5 bis 40 Gew.%, bezogen auf Trockensubstanz, und eine Gasvolumenfraktion im nicht nachbehandelten Teig oder in der Paste von 0.1 bis 0.75, bevorzugt 0.25 bis 0.5 sowie im nachbehandelten oder gebackenen Produkt von 0.2 bis 0.9, bevorzugt 0.3 bis 0.7 aufweist, wobei (A) die derart aufgeschäumten Teige bzw. Pasten mittlere Schaumblasen- bzw. Porendurchmesser x_{50,3} von 4 bis 200 Mikrometern, bevorzugt von 20 bis 100 Mikrometern, sowie charakteristische SPAN-Werte ((x_{90,3}-x_{10,3})/x_{50,3} mit x₁₀,₃, x_{50,3}, x_{90,3} als 10%-, 50%- 90%-Perzentilen der Blasen-bzw. Porendurchmesser Volumensummenverteilung) zur Quantifizierung der Blasen- bzw. Porendurchmesser-Verteilungsbreite von ≤ 2, bevorzugt ≤ 1.5, und weitergehend bevorzugt von ≤ 1, aufweisen, sowie (B) für die aus derartigen Teig- oder Pastensystemen durch Nachbehandlung in Backprozessen erzielte Schaumstrukturen mittlere Blasen- bzw. Porendurchmesser von x_{50,3} = 10 bis 250, bevorzugt von 20 bis 150 Mikrometern und resultierende SPAN-Werte ≤ 2.5, bevorzugt ≤ 1.5, und weitergehend bevorzugt von ≤ 1, aufweisen.

15. Produkt nach Anspruch 14, **dadurch gekennzeichnet, dass** es (A) einen Pflanzenproteinanteil zwischen 5 bis 70 Gew.%, bevorzugt von 10 bis 50 Gew.%, bezogen auf Trockensubstanz, (B) einen Kohlenhydratanteil zwischen 5 bis 70 Gew.%, bevorzugt von 10 bis 50 Gew.%, bezogen auf Trockensubstanz, (C) einen Ballaststoff/Pflanzenfaser-Anteil zwischen 3 bis 30 Gew.%, bevorzugt zwischen 5 bis15 Gew.%, bezogen auf Trockensubstanz, (D) einen Fett/Öl-Anteil von 0 bis 30 Gew.%, bevorzugt von 5 bis 10 Gew.%, bezogen auf Trockensubstanz und (D) einen Anteil an nativer Stärke, bevorzugt Kartoffel-, Mais- oder Reisstärke von ≥ 1 bis 5 Gew.% bezogen auf Trockenmasse, beinhaltet, wobei der letztgenannte Anteil bevorzugt aus mittels Gefrier-Tauzyklen vorbehandelter, native Kartoffel-, Mais- oder Reisstärke oder Mischungen solcher zu gleichem Gesamtprozentanteil besteht und als Gasblasennukleator wirksam ist.

16. Verwendung eines geschäumten, teig- oder pastenbasierten Produkts, das nach dem Verfahren gemäß Anspruch 1 und einem oder mehreren der Ansprüche 2 bis 6 hergestellt ist, als Basis für Dauerbackwaren, bevorzugt (A) verzehrfertige glutenfreie Dauer- oder Frischbackwaren, (B) als Basis für frische oder vorgebackene und anschließend tiefgekühlte/gefrorene Backwaren, (C) in gebackener bzw. durch andere thermische Behandlung in Folge Proteindenaturierung stabilisierter Form als stückige Einschlusskomponente in ein Schokoladenkonfekt, Eiscreme oder in ein anderes Dessertprodukt oder in ein Gemüse- oder Fleischpasteten-Produkt und/oder (D) als Hüll-, Deck- oder Oberflächendekorations-Komponente von Produkten aus den Bereichen Schokoladenkonfekt, Speiseeis, andere Desserts, Käse/Frischkäse, Fleischprodukte, fleischbasierte/fleischlose (vegetarische oder vegane) Pasteten.

## Claims

1. A method for the combined, continuous mixing and metering of doughs or pastes enriched with gas under static pressure for the manufacture of foamed products, preferably baked goods, more preferably gluten-free baked goods, in which a free-flowing or pourable, dry powder mixture for doughs or pastes with a vegetable protein content in the range from 5 to 70% (W/W), based on the dry substance, is introduced into the elongated process space of a motor-driven extruder in which:
(i) fluid is added by a fluid supply device-1 (7) for the manufacture of a high viscosity dough or paste having a dynamic viscosity of η (γ.) ≥ 10 Pas, measured in a rotational rheometer at a shear rate of γ. = 100 s⁻¹, and thereby a dough or paste plug builds up continuously which seals against backflow effects of fluid or gas,
(ii) the viscosity of the high-viscosity dough or paste plug is reduced by ≥ 20%, preferably ≥ 50%, by metering an additional fluid component fraction at at least one further fluid supply point which is spaced apart in conveying direction (X) from the first fluid supply device-1 (7),
(iii) whereinafter a gas component under pressure is supplied and finely dispersed and/or dissolved in the dough or paste fluid phase by a compressed gas supply device (15) arranged in an axial conveying direction (X), and
(iv) wherein at least one dough or paste discharge and metering element configured as a metering valve device (38) is arranged on the discharge side of the processing space configured as a process space,
(v) the outlet opening of which is regulated or controlled in its cross-section in order to maintain the static pressure required for the gas dissolution in the process space, and wherein
(vi) a measuring device (19) continuously measures the degree of gas dissolution between the compressed gas supply device and the metering valve device (38)
(vii) and due to a pressure control, the gas contained in the dough or paste is kept in solution or fine dispersion until the end of the metering valve device (38) and the foam formation is launched under pressure, lowering only when exiting a valve outlet channel (65) of the metering valve device (38) supported by native starch particles, which particles initiate a secondary, heterogeneous gas bubble nucleation, and
(viii) wherein the subsequent dough or paste foam expansion of at least ≥ 20% (V/V), preferably ≥ 50% (V/V), supported by the dough or paste viscosity, occurs only after the dough or paste exits the metering valve device (38).

2. Method according to claim 1, **characterized in that** the dough or the paste is transported in one or a plurality of extruders, each extruder having at least one, preferably two, motor-driven extruder screw(s) equipped zonally in different zones with conveying and/or mixing and/or dispersing elements, wherein the relevant extruder(s) are closed gas-tight at both ends during the conveying process, such that no gas loss occurs in the process space by the addition of gas under pressure into the part of the relevant extruder screw channel configured for gas dispersion and/or gas dissolution, and the gas within this partial area of the extruder screw channel (11) is finely dispersed and/or dissolved completely in the dough or in the paste under increased static pressure in a controlled manner and no foam formation is initiated until immediately before the outlet opening of the metering valve device (38).

3. Method according to claim 2, **characterized in that** a free-flowing, dry powder or a free-flowing powder mixture for the production of a dough or a paste is introduced into the extruder screw channel (11) of at least one or a plurality of motor-driven extruder screw(s) (2) and a water- and/or oil-based fluid system is added to this free-flowing powder mixture or the free-flowing powder at the beginning of the extruder screw channel (11) for the production of a high-viscosity dough or a high-viscosity paste with a dynamic viscosity of η (γ.) ≥ 10 Pas, measured in a rotational rheometer at a shear rate of γ. = 100 s⁻¹, which is used as a fluid- and gas-tight sealing plug in the front area of the extruder screw channel (11), and at a distance therefrom, in the extruder screw channel, a further portion of a water- and/or oil-based fluid system is added to this to produce a diluted, low-viscosity dough or a low-viscosity paste with a dynamic viscosity reduced by ≥ 20%, preferably ≥ 50%, and gas is subsequently added under pressure to this low-viscosity dough or this low-viscosity paste, and this gas is converted, under superimposed shear in the extruder screw channel (11) in the gap in thin flow layers produced between corotating screw conveyors (2) into a solution or alternatively a microdispersion state with gas bubbles in the diameter range ≤ 10 micrometers, preferably ≤ 4 micrometers in the dough or paste system, as well as while avoiding foam formation, this solution/dispersion state is maintained until bubble nucleation is specifically initiated and increased in the gas-containing dough or in the gas-containing paste shortly before discharge from one or more discharge/metering devices by secondary, heterogeneous gas bubble nucleation and pressure reduction.

4. Method according to claim 1 or according to one or more of the subsequent claims, **characterized in that** the control of the fluid supply at the two or more fluid supply devices (7, 12) in the extruder screw channel (11) is carried out as a function of the viscosity of the dough or the paste, wherein in a mixing zone (27) sealing conditions, against fluid and gas backflows from the fluid supply zone-2 (28) downstream in the flow direction from the mixing zone (27) and the compressed gas supply zone (29), are implemented by the formation of a dough or paste plug of higher dynamic viscosity of η (γ.) ≥ 10 Pas, measured in a rotational rheometer at a shear rate of γ. = 100 s⁻¹ , which dynamically seals the extruder screw channel (11), and by this dynamic sealing, static pressures between 5 to 100 bar are provided in the gas dispersion and dissolution zone (30), and thereby gas dissolution and/or micro-dispersion conditions are provided for the gas phase in the dough or in the paste with dwell times in this gas dispersion and dissolution zone (30) between 10 to 120 seconds, preferably between 30 to 60 seconds, wherein the axial distance between the fluid supply devices (7, 12) is continuously adjusted and the fluid supply devices are locked in predetermined positions, positions matched to the dough or paste recipe, and the gas-enriched dough or the paste with ≥ 10% (V/V) based on the relaxed state under atmospheric pressure is discharged in a container, a pouring or baking mold, a package or on a conveyor belt via one or more discharge/dosing elements configured as a metering valve device(s) (38), wherein a static pressure control/pressure conduction brings about the adjustment of the degree of gas microdispersion and/or gas dissolution in the dough or in the paste, as well as for the dissolved gas portion, the gas bubble nucleation and the initiation of bubble expansion is relocated to the outlet end of the discharge/metering elements configured as metering valve device(s) (38) and the further bubble expansion and foam formation are carried out at least ≥ 20%, preferably ≥ 50% in the already metered dough or in the paste, with which a fluidically undisturbed, spatially uniform gas bubble expansion with resulting narrow bubble size distribution is described by SPAN values (SPAN = (x_{90.3}-x_{10.3})/x_{50.3},) for the metered, foamed dough or the paste in the range of ≤ 1.5, preferably ≤ 1.2, more preferably ≤ 1, and foam bubble diameter or pore diameter x_{50.3} (A) from 4 to 200 micrometers, preferably from 20 to 100 micrometers, for the extruded foamed dough or paste, and (B) from 10 to 250, preferably from 20 to 150 micrometers, for the product produced from foamed dough or paste by post-treatment in baking processes, and wherein one or more of the following system parameters are used as control variables for the control of the mean bubble/porous diameters (x50.3) as well as their size distribution width (SPAM):
(a) dough or paste viscosity,
(b) number density of bubble nucleation nucleator particles added to the dough system,
(c) dough or paste mass flow,
(d) total mass-related gas component added,
(e) rotational speed of the extruder screw,
(f) Opening cross-sectional areas of the metering valves, which, as a function of (a) to (e), define the spatial and temporal pressure relief gradients, wherein the pressure relief gradients directly correlate with the corresponding spatial and temporal gas bubble nucleation and expansion gradients.

5. Method according to claim 1 or one or more of the subsequent claims, **characterized in that** the supply of a water- and / or oil-based fluid system and gas is adjusted in a controlled or regulated manner as a function of the dough or paste recipe, wherein (A) the first fluid metering takes place by means of the fluid supply device-1 (7) at an axial extruder screw length L1, measured in conveying direction, which corresponds to 2 to 8 times the extruder screw diameter D (L/D = 2 to 8), and **in that** the second fluid metering is applied by means of the fluid supply device-2 (12) at an axial extruder screw length L2, measured in conveying direction, which corresponds to at least 10 to 14 times the extruder screw diameter D (L/D = 10 to 14), and wherein (B) the metering of the foaming gas takes place by means of the compressed gas supply device (15) in the form of CO₂ or N₂ or N₂O₂ or air or mixtures thereof under a static pressure of 5 to 100 bar, preferably under a pressure of 15 to 35 bar, with a gas volume fraction of between 5 and 70% by volume, based on the pressure-relieved ambient state of the dough or alternatively the paste, in the extruder at an axial extruder screw length L3, which corresponds to at least 12 to 16 times the extruder screw diameter D (L/D = 12 to 16), whereas for the length range of the gas dispersion and dissolution zone (30) at least 12 L/D < 20, preferably 14 L/D < 26, when using an extruder with a total length of 28 D applies, whereas this and all previously specified L/D length scales with the factor (L/D)ₘₐₓ/28 are multiplied when using an extruder with (L/D)ₘₐₓ that is other than 28.

6. A method according to claim 1 or one or more of the subsequent claims, **characterized in that** the process is carried out at a temperature below 160 °C, preferably below 100 °C and more preferably below 60 °C, and the foamed dough or paste after discharge into a container, pouring or baking mold, a packaging means or on a conveyor belt is either baked by means of a convection baking process or a combined microwave-convection baking process or is cooled or frozen in a freshly extruded or partially baked state.

7. Control and/or regulating device for a method according to claim 1 or one or more of the subsequent claims, with one or more motor-driven extruder screw(s) (2), which are supplied by a powder or bulk material metering device configured as a hopper (5) with a discharge element, wherein in a fluid supply zone-1 (26) a free-flowing dough or paste or powder mixture is supplied by means of fluid supply device-1 (7) with a recipe-specific quantity of a water- and/or oil-based liquid in order to achieve, in a downstream mixing zone (27), a dough or a paste of a higher dynamic viscosity of η₁ (γ.) ≥ 10 Pas, measured in a rotational rheometer at a shear rate of γ. = 100 s⁻¹ η1, and wherein this dough or this paste is metered, in a recipe-specific manner, in a fluid supply zone-2 (28) by means of fluid supply device-2 (12) with an additional amount of fluid, in order to adjust the dough or the paste at a specific viscosity η₂ < η₁ reduced by ≥ 10%, preferably ≥ 50%, and wherein, furthermore, gas is subsequently metered, in a controlled manner, in a compressed gas supply zone (29) by means of a compressed gas supply device (15) that is upstream at an axial distance from the fluid supply device-2 (12) under pressure, in order to achieve a reduced density in the final product through foam formation, wherein the introduced gas is subsequently dissolved or homogeneously microdispersed under a controlled, static pressure between 5 and 100 bar, whereas a sensor measuring the electrical conductivity determines the degree of dissolution or alternatively microdispersion of this gas in the aqueous dough or paste phase, in order to indicate the degree to which an equilibrium value of the gas dissolution/microdispersion is achieved during a predetermined dough or paste dwell time at the end of the gas dispersion and dissolution zone VI (30) in the region of the device (1) designated as gas dissolution measuring and extruder outlet zone VII (31), wherein based upon this measurement, the controlled adjustment of the proportion of dispersed or alternatively dissolved gas is achieved by means of a feedback loop control using actuators, which are either (a) a back pressure valve device (24) configured as a bypass back pressure valve in a preparation phase of the metering process or (b) at least one metering valve device (38) in the activated metering phase of the process, and wherein the degree of opening of these valves determines the static pressure in the gas dispersion and dissolution zone VI (30), and thereby controls the dispersion and/or dissolution kinetics and the proportions of the dissolved or microdispersed gas or alternatively gas mixture in the dough or in the paste, which is confirmed by achieving an appropriately measured in-line conductivity value κ.

8. Control and/or regulating device according to claim 7, **characterized in that** the controlled adjustment of the dough or paste shear viscosity
A: takes place in the fluid supply zone-1 (26) to a value of 10 ≤ η₁ < 1000 Pas, preferably 50 ≤ η₁ < 200 Pas, which ensures sealing upstream by the dough or paste in the extruder screw channel (11) against gas or fluid backflow from fluid supply zone-2 IV (28) or the compressed gas supply zone V (29), wherein the viscosity η₁ takes into account the non-Newtonian flow behavior of the dough by referring to a representative shear rate of 100 s⁻¹, which acts in the mixing zone **III** (26) and wherein the related viscosity function η(γ.) is determined offline by dough or paste rheometry, by means of high pressure capillary rheometer or rotational rheometry, - as well as:
B: takes place in the fluid supply zone-2 (28) to a value of 1 Pas ≤ η₂ < 20 Pas, preferably 5 Pas ≤ η₂ < 10 Pas, and in the thereby viscosity-reduced fluid dough or paste phase compared to η₁, after the compressed gas supply in the compressed gas supply zone (29) in the gas dispersion and dissolution zone VI (30) arranged downstream of the latter, gas is microdispersed and/or dissolved in the compressed gas supply zone within a dwell time of 30 to 300 s, preferably 50 to 120 s, in order to achieve a degree of foaming in the end product, expressed as the gas volume fraction φ_{G,v} of the total product volume, in the range 10 ≤ φ_{G,v} < 75% (V/V), preferably 20 ≤ φ_{G,v} < 50% (V/V), and connected therewith a correspondingly reduced density in the final product, wherein the viscosity η₂ takes into account the non-Newtonian flow behavior of the dough or of the paste by relating to a representative shear rate of 200 s⁻¹ which acts in the gas dispersion and dissolution zone VI (30), wherein the related viscosity function η(γ.) offline is determined by means of high pressure capillary rheometry or rotational rheometry.

9. Control and/or regulating device according to claim 7 and claim 8, **characterized in that** the adjustment of the static pressure in the gas dispersion and dissolution zone VI (30) is carried out as a function of the electrical conductivity value κ measured in the subsequent gas dissolution measuring and extruder outlet zone VII (31), wherein the degree of attainment of a pressure-dependent equilibrium value for the electrical conductivity κ_{equ} (p_{stat.}) is a measure of the degree of gas-dough mass transfer achieved during the dough or paste dwell time in the extruder screw channel (2) within the gas dispersion and dissolution zone VI (30), and thereby the concentration of the dispersed and/or dissolved gas in the dough or in the paste c_{GAS} is adjusted in a recipe-specific manner in accordance with the conductivity value κ measured in-line, wherein the relevant combination of dwell time t_{V(30)} or dough or alternatively paste volume flow (dV/dt)_{Product} and static pressure pₛₜₐₜ₍₃₀₎ in the gas dispersion and dissolution zone VI (30) is adjusted on the basis of a calibration function κ = f(pₛₜₐₜ₍₃₀₎, tv), which is determined in a preliminary test by means of extruder (2)/back pressure valve device (24) coupling, and wherein the static pressure Pₛₜₐₜ₍₃₀₎ at the end of gas dispersion and dissolution zone VI (30), as well as the electrical conductivity κ in of the subsequent gas dissolution measuring and extruder outlet zone VII (31) are determined in this preliminary test, while varying the free cross-sectional flow area A_{GDV} in the back pressure valve device (24) for a selected rotational speed n_{S} of the extruder screw and dough or paste mass flow (dm/dt)_{Product}, from which transferable combinations of the above process variables with continuous metering are derived according to the degree of foaming to be achieved in the metered dough and stored in a database for regular process control.

10. Control and/or regulating device according to claim 7 or one or more of the subsequent claims, **characterized in that** for a given dough or paste mass flow (dm/dt)_{Product} and recipe-related dough or paste viscosity, a feedback loop control is applied with a given electrical conductivity κₛₑₜₚₒᵢₙₜ as reference variable w, wherein the static pressure pₛₜₐₜ₍₃₀₎ in the gas dispersion and dissolution zone VI (30) is integrated as indirect manipulated variable y, and the electrical conductivity κ measured in the gas dissolution measuring and extruder outlet zone VII (31) is integrated as a controlled variable, and wherein either a back pressure valve device (24) in a bypass line (23), or at least one metering valve device (38), and/or a compressed gas supply device (15) and/or a rotational speed-adjustment apparatus for the rotational speed n_{S} of the extruder screw coupled to the extruder screw drive motor (3), are used to adjust the static pressure in the gas dispersion and dissolution zone (30) in a defined manner, wherein a back pressure valve device (24) is used in a bypass line (23) in a preparation run (A) to the regular metering process to determine the static pressure pₛₜₐₜ₍₃₀₎ in the gas dispersion and dissolution zone VI (30), which is achieved under the process conditions set with regard to dough or paste mass flow (dm/dt)_{Product}, gas mass flow (dm/dt)_{Gas} and rotational speed n_{S} of the screw under specification of product recipe and screw geometries, and which degree of gas dissolution or microdispersion (dm/dt)_{Gas(L,D)}/ (dm/dt)_{Gas} is determined, measured via the electrical conductivity κ [(dm/dt)_{Gas(L,D)}/ (dm/dt)_{Gas}], which adjusts in the dwell times t_{V(30)} realized in the gas dispersion and dissolution zone VI (30), wherein (dm/dt)_{Gas} designates the total mass flow of gas added and (dm/dt)_{Gas(L,D)} designates the mass flow of the dissolved (dm/dt)_{Gas(L)} and the micro-dispersed non-dissolved gas component (dm/dt)_{Gas(D)}, wherein the latter two variables additionally depend on the type of gas used, and wherein, when switching over from this preparatory run (A) carried out in bypass mode (23) with back pressure valve device (24) to the regular metering process (B), in which one or more connected metering valve devices (38) are activated, these ensure, by adjusting the degree(s) of opening of the metering valve(s), that the static pressure and the thereby set degree of gas dissolution or gas dispersion in the gas dispersion and dissolution zone VI (30), measured via the electrical conductivity of the dough or of the paste, are at the same level as in the preparation test run using the back pressure valve device (24) in the bypass line (23), and that, for the regular course of the metering process (B), 2n metering valve devices (38) with n = 1 to 20, n denoting half the number of metering valve devices (38) used, are alternately metering in two groups with n metering valve devices each, and thereby that the level of static pressure in the gas dispersion and dissolution zone VI (30) remains constant when switching between the two metering valve device half-groups, which are configured in a similar manner with respect to flow pressure losses, apart from negligible short-term (< 0.5 s) pressure fluctuations during the switching process.

11. Device for carrying out the method according to claim 1 or one or more of the subsequent claims for the combined, continuous mixing and metering of doughs or pastes enriched with gas under static pressure, for the manufacture of foamed products, in particular, preferably baked goods, more preferably gluten-free baked goods, using one or a plurality of motor-driven extruder screws (2), each with a feed hopper (5) for free-flowing dry powder or for free-flowing dry bulk material mixtures, at least two fluid supply devices (9, 12) arranged in the longitudinal axial direction of the extruder concerned, by means of which different fluid quantities are supplied to the extruder screw channel (11) in a controlled or regulated manner via valves, a compressed gas supply device (15) via which gas is introduced into the extruder screw channel (11) under pressure of 5 to 100 bar and in measuring or sensor devices (32 through 36) assigned to the extruder screw channel (11) in process-specific zones I to VII (25 through 31) in the conveying direction (X), which measure the static pressure or alternatively the static pressure development along the extrusion process space and measure the dissolved or microdispersed gas content (19) in the dough or in a paste after the gas dispersion and dissolution zone VI (30), as well as a dough or paste discharge back pressure valve element arranged in a bypass line (23) and configured as a back pressure valve device (24), the outlet cross section of which can be continuously varied to build up a static back pressure in the extruder screw channel (11) by using a flexible high pressure hose (44) the cross section of which can be adjusted by means of two adjusting pistons (48, 49), as well as at least one metering valve device (38) configured as a dough or paste discharge metering valve element, which has one or more metering nozzles, the latter arranged in groups with nozzle end discharge cross sections that can be exchanged or adjusted to metering pressure, fluid viscosity and metering mass flow.

12. Device according to claim 11, **characterized by** at least one metering valve device (38) configured as a discharge metering valve element, which can be closed by an adjusting piston (48), which, in the open state of this metering valve device, frees the outlet nozzle cross-section and comprises a cross-sectional flow area A1 all the way to the valve outlet chamber (61) as well as subsequently over a length of 1 mm to 40 mm, preferably 5 to 15 mm, in the valve outlet channel (67), which has a distinctly narrowed flow channel cross-section with cross-sectional area A2, wherein A2 ≤ 0.01 to 0.5 A1 and preferably A2 ≤ 0.05 to 0.3 A1 applies, and in the metering case (a), on the one hand, a back pressure of ≥ 2 bar, preferably ≥ 5 bar and further preferably ≥ 10 bar is built up upstream of the metering valve device (38), which back pressure has an impact all the way into the gas dispersion and dissolution zone (30), and there achieves a set level of gas dissolution and/or gas microdispersion, as well as (b) on the other hand, a static pressure reduction only takes place in the metering nozzle outlet channel (65), which reduction leads to gas bubble nucleation and incipient gas bubble expansion, and wherein the outlet cross-section, which can be closed in a sealing manner by means of adjusting pistons (48), preferably comprises a conically narrowing annular cross-section of the flow channel, wherein the stroke of this adjusting piston is adjustable in a manually or motor-controlled manner and, thereby, with an increased stroke, an annular flow cross-section tapering conically in the cross-sectional area can be released for the dough or paste mass to be metered, wherein the mean cross-sectional flow area of this conical annular channel is variable, preferably continuously adjustable, by a factor of ≤ 2, preferably by a factor of ≤ 10, over the entire range of the adjustable stroke length of the valve plunger.

13. Device for carrying out the method according to claims 11 and 12, **characterized in that** an extruder screw channel of a co-rotating twin screw extruder, with a length of L/D = 14 to 50 (where L = screw channel length and D = screw diameter) is provided for the regulated pressure build-up and the gas dissolution in the dough or in the paste, and the extruder length is subdivided into seven length segment zones of respective segment length between L/D = 2 and L/D = 10, equipped with screw elements of different geometry with regard to assigned process-technical functions, and the following process-technical functions are assigned to these seven length segment zones:
| | |
|---|---|
| Zone I: | powder receiving and compression zone (25); metering and compression of the powder mixture; |
| Zone II: | fluid supply zone-1 (26); first fluid supply. |
| Zone III: | mixing zone (27); mixing/kneading and formation of a high-viscosity |
| | |
|---|---|
| | dough or paste plug sealing the extruder screw channel against zones IV and V |
| Zone IV: | fluid supply zone-2 (28); fluid mixing and reduction of the dough or paste viscosity |
| Zone V: | compressed gas supply zone (29); introduction of gas component under static pressure up to 100 bar. |
| Zone VI: | gas dispersion and dissolution zone (30); microdispersion and/or dissolution of the admixed gas component. |
| Zone VII: | gas dissolution measuring and extruder outlet zone (31); approach to gas dispersion and/or gas dissolution equilibrium condition, measurement of static pressure and electrical conductivity as well as inlet into bypass or metering nozzle supply lines. |
and in accordance with the functional assignments of zones I-VII, the extruder screw is equipped with screw elements which optimally support the assigned functions (i) in terms of flow, (ii) in terms of dwell time and (iii) in terms of power input, wherein, as a function of recipe composition and dough- or paste-system-specific gas dissolution or alternatively dispersion kinetics, a change of the extruder zone lengths (24 to 31) for the aforementioned assigned functions by approximately ± 1 to 2 L/D segment lengths takes place in such a way that a state of equilibrium with regard to the micro-gas dispersion and gas dissolution in zone VI is achieved.

14. Product produced according to a method according to claim 1 or one or more of the subsequent claims 2 through 6, **characterized in that** the product is gluten-free, comprising a non-gluten-containing proportion of plant proteins of between 5 and 70% (W/W), preferably between 5 and 40% (W/W), based on dry substance, and a gas volume fraction in the untreated dough or paste of 0.1 to 0.75, preferably 0.25 to 0.5, and in the post-treated or baked product of 0.2 to 0.9, preferably 0.3 to 0.7, wherein (A) the doughs or alternatively pastes foamed in this way comprise mean foam bubble or alternatively pore diameters x_{50.3} of 4 to 200 micrometers, preferably of 20 to 100 micrometers, as well as characteristic SPAN values ((x_{90.3}-x_{10.3})/x_{50.3} with x_{10.3}, x_{50.3}, x_{90.3} as 10%-, 50%-90% percentiles of bubble or alternatively porous diameter volume distribution) for quantification of the bubble or alternatively porous diameter distribution width of ≤ 2, preferably ≤ 1.5, more preferably of ≤ 1, as well as (B) for the foam structures obtained from such dough or paste systems by post-treatment in baking processes, comprise mean bubble or alternatively pore diameters of x_{50.3} = 10 to 250, preferably of 20 to 150 micrometers and resulting SPAN values ≤ 2.5, preferably ≤ 1.5, and more preferably of ≤ 1.

15. Product according to claim 14, **characterized in that** it contains (A) a vegetable protein content from 5 to 70% (W/W), preferably from 10 to 50% (W/W), in relation to dry mass, (B) a carbohydrate content from 5 to 70% (W/W), preferably from 10 to 50% (W/W), in relation to dry mass, (C) a dietary fiber/plant fiber content of from 3 to 30% (W/W), preferably from 5 to 15% (W/W), in relation to dry mass, (D) a fat/oil content of from 0 to 30% (W/W), preferably from 5 to 10% (W/W), in relation to dry mass, and (D) contains a native starch content, preferably potato, corn or rice starch of ≥ 1 to 5% (W/W), in relation to dry mass, wherein the last-mentioned content preferably consists of native potato, corn or rice starch or mixtures thereof at the same total percentile content pretreated by means of freezing-thawing cycles to equal total percentages and is effective as a gas bubble nucleator.

16. Use of a foamed, dough or paste-based product, which is produced by the method according to claim 1 and one or more of claims 2 through 6, as a base for long-life baked goods, preferably (A) ready-to-eat gluten-free long-life or fresh baked goods, (B) as a base for fresh or pre-baked and subsequently frozen baked goods, (C) in baked form or alternatively, as a result of protein denaturation, in other thermally stabilized form, as a chunky inclusion component in a chocolate confectionery, ice cream or in another dessert product or in a vegetable or meat pie product, and/or (D) as a coating, covering or surface decoration component of products in chocolate confectionery, ice cream, other desserts, cheese/fresh cheese, meat products, meat-based/meatless (vegetarian or vegan) pies.

## Revendications

1. Procédé - pour le mélange et le dosage combinés et continus de différentes pâtes enrichies en gaz sous pression statique destinées à la fabrication de produits moussés, de préférence des produits de boulangerie/pâtisserie, de façon particulièrement préférentielle des produits de boulangerie/pâtisserie sans gluten - au cours duquel un mélange pulvérulent sec, coulant ou ruisselant destiné à donner différentes pâtes présentant une teneur en protéines végétales située dans une plage de 5 à 70 % en poids référés à la substance sèche, est introduit dans le volume processuel longiligne d'une extrudeuse motorisée, volume processuel dans lequel
(i) la pâte est ajoutée à travers un dispositif d'amenée de fluide-1 (7) pour la fabrication de différentes pâtes haute viscosité présentant une viscosité dynamique η (γ.) ≥ 10 Pascals (Pas) mesurée dans un rhéomètre rotatif, à une vitesse de cisaillement γ. = 100 s⁻¹, et dans lequel est ainsi continuellement formé un bouchon de différentes pâtes étanchant contre les effets de reflux du fluide ou du gaz,
(ii) la viscosité du bouchon de différentes pâtes haute viscosité est réduite de ≥ 20 %, de préférence de ≥ 50 % par l'ajout dosé d'une fraction fluide supplémentaire d'ingrédient en au moins un point supplémentaire d'amenée de fluide distant, dans le sens du transport (X), du premier dispositif d'amenée de fluide-1 (7),
(iii) sachant qu'ensuite un dispositif d'amenée de gaz sous pression (15) disposé dans le sens de transport axial (X) ajoute un ingrédient gazeux sous pression et le disperse et/ou le dissout finement dans la phase fluide des différentes pâtes, et
(iv) sachant que sur le côté déversement du volume de transformation configuré en volume processuel est disposé au moins un élément de déversement et de dosage des différentes pâtes configuré comme un dispositif à vanne de dosage (38),
(v) élément dont la section de l'orifice de sortie est régulée ou pilotée pour maintenir la pression statique nécessaire pour la solution gazeuse dans le volume processuel, et
(vi) sachant qu'un dispositif de mesure (19) mesure continuellement le degré de dissolution du gaz entre le dispositif d'amenée du gaz sous pression et le dispositif à vanne de dosage (38), et
(vii) qu'en raison d'une régulation de la pression, le gaz en solution ou dispersion fine est maintenu dans les différentes pâtes jusqu'à l'extrémité du dispositif à vanne de dosage (38), et que c'est seulement à la sortie d'un canal de sortie à vanne (65) du dispositif à vanne de dosage (38) que la formation de mousse - formation soutenue par des particules d'amidon natives qui déclenchent une nucléation secondaire hétérogène des bulles de gaz - est entamée accompagnée d'une réduction de la pression, et
(viii) sachant que l'expansion subséquente - d'au moins ≥ 20 % en vol., de préférence de ≥ 50 % en vol. - de la mousse des différentes pâtes, expansion qui est soutenue par la viscosité des différentes pâtes, a lieu seulement après que les différentes pâtes sont sorties du dispositif à vanne de dosage (38).

2. Procédé selon la revendication 1, **caractérisé en ce que** les différentes pâtes sont transportées dans une ou plusieurs extrudeuse(s) équipée(s) d'au moins une, de préférence de deux vis sans fin d'extrudeuse motorisée(s) équipée(s) différemment selon les zones avec des éléments transporteurs et/ou mélangeurs et/ou de dispersion, sachant que l'/les extrudeuse(s) concernée(s) est/sont obturée(s) de façon étanche au gaz aux deux extrémités pendant le processus de transport, de sorte que l'ajout de gaz sous pression dans la partie - configurée pour la dispersion et/ou la dissolution du gaz - du conduit d'extrudeuse à vis sans fin concerné n'entraîne pas de perte de gaz dans le volume processuel, et que le gaz dans les différentes pâtes est finement et entièrement dispersé et/ou dissous de façon contrôlée, sous une pression statique accrue, à l'intérieur de cette zone partielle du conduit d'extrudeuse à vis sans fin (11), et qu'aucune formation de mousse n'est déclenchée jusqu'à immédiatement avant l'orifice de sortie du dispositif à vanne de dosage (38).

3. Procédé selon la revendication 2, **caractérisé en ce qu'**une poudre sèche ruisselante ou un mélange de poudres ruisselantes, destiné(e) à la fabrication de différentes pâtes est introduit(e) dans le conduit d'extrudeuse à vis sans fin (11) d'au moins une ou plusieurs vis sans fin (2) d'extrudeuse motorisée(s), et qu'à ce mélange de poudres ruisselantes ou à cette poudre ruisselante est ajouté au début du conduit d'extrudeuse à vis sans fin (11) un système de fluides à base d'eau et/ou d'huile pour fabriquer différentes pâtes haute viscosité présentant une viscosité dynamique η (γ.) ≥ 10 Pas mesurée dans un rhéomètre rotatif à une vitesse de cisaillement de γ. = 100 s⁻¹, lesquelles différentes pâtes sont utilisées pour servir de bouchon d'obturation étanche au fluide et au gaz dans la zone avant du conduit d'extrudeuse à vis sans fin (11), et **en ce qu'**à une certaine distance de là dans le conduit d'extrusion à vis sans fin, une part supplémentaire d'un système de fluides à base d'eau et/ou à base d'huile est rajoutée à ce mélange de poudres ou à cette poudre pour fabriquer différentes pâtes basse viscosité présentant une viscosité dynamique réduite de ≥ 20 %, de préférence de ≥ 50 %, et qu'à ces différentes pâtes basse viscosité est ensuite ajouté du gaz sous pression, et que ce gaz est transféré - sous cisaillement en superposition dans le conduit d'extrudeuse à vis sans fin (11), dans l'interstice entre couches de flux générées entre les vis sans fin transporteuses (2) co-rotatives - dans un état de dissolution et/ou de microdispersion avec bulles de gaz dans une plage de diamètres ≤ 10 micromètres, de préférence ≤ 4 micromètres dans le système de différentes pâtes, et qu'en évitant la formation de mousse cet état de dissolution/dispersion est maintenu jusqu'à ce que dans les différentes pâtes contenant du gaz, peu avant de sortir d'un ou de plusieurs dispositifs de déversement/de dosage, la formation de germes de bulles soit déclenchée et amplifiée par une nucléation secondaire hétérogène des bulles de gaz et une diminution de pression.

4. Procédé selon la revendication 1 ou l'une ou plusieurs des revendications suivantes, **caractérisé en ce que** la régulation de l'amenée de fluide est effectuée sur deux ou plusieurs dispositifs d'amenée de fluides (7, 12) dans le conduit d'extrusion à vis sans fin (11) en fonction de la viscosité des différentes pâtes, sachant que dans une zone de mélange (27) sont réalisées - des conditions d'étanchéité vis-à-vis des reflux de fluide et de gaz provenant de la zone d'amenée de fluide-2 (28) située en aval de la zone de mélange (27) dans le sens d'écoulement du flux et provenant de la zone d'amenée de gaz sous pression (29) - par la configuration d'un bouchon de différentes pâtes étanchant dynamiquement le conduit d'extrudeuse à vis sans fin (11), bouchon qui présente une haute viscosité dynamique η (γ.) ≥ 10 Pas mesurée dans un rhéomètre rotatif à une vitesse de cisaillement γ. = 100 s⁻¹, et que du fait de cette étanchéité dynamique sont fournies des pressions statiques dans la zone de dispersion et de dissolution du gaz (30) comprises entre 5 et 100 bars, et ainsi des conditions de dissolution du gaz et/ou de microdispersion pour la phase gazeuse dans les différentes pâtes, avec des temps de séjour dans cette zone de dispersion du gaz et de dissolution du gaz (30) compris entre 10 et 120 secondes, de préférence entre 30 et 60 secondes, sachant que l'écart axial entre les dispositifs d'amenée de fluides (7, 12) sont réglés en continu et que ces derniers sont retenus sur des positions respectivement prédéterminées, harmonisées avec la recette des différentes pâtes, et que les différentes pâtes enrichies de gaz à raison de ≥ 10 % en vol. référés à l'état détendu à la pression atmosphérique sont déversées dans un récipient, un moule de coulée ou de cuisson au four, un emballage ou un tapis convoyeur via un ou plusieurs élément(s) déverseur(s)/de dosage configuré(s) sous forme d'un ou plusieurs dispositif(s) à vanne de dosage (38), sachant qu'un pilotage/guidage statique par la pression permet de régler le degré de microdispersion du gaz et/ou de dissolution du gaz dans les différentes pâtes, et déplace, pour la part de gaz dissoute, la formation des germes de bulles de gaz et le déclenchement de l'expansion des bulles vers l'extrémité de sortie des éléments de déversement/dosage configurés sous forme de dispositif(s) à vanne de dosage (38), et que la suite de l'expansion des bulles et la formation de mousse est accomplie à raison d'au moins ≥ 20 %, de préférence ≥ 50 % dans les différentes pâtes déjà dosées, faisant qu'est décrite une expansion des bulles de gaz - non perturbée sur le plan de la mécanique des fluides et uniforme sur le plan spatial avec une distribution résultante serrée des tailles des bulles - par des valeurs SPAN (SPAN = (x_{90,3}-x_{10,3})/X_{50,3},), pour les différentes pâtes dosées et moussées, comprises dans une plage de ≤ 1,5, de préférence ≤ 1,2, et de façon particulièrement préférentielle ≤ 1, et que sont obtenus des diamètres de bulles d'air et diamètres de pores x_{50.3} (A) compris entre 4 et 200 micromètres, de préférence entre 20 et 100 micromètres, pour les différentes pâtes extrudées et moussées, et des diamètres (B) compris entre 10 et 250 micromètres, de préférence entre 20 et 150 micromètres pour les produits fabriqués à partir des différentes pâtes moussées par post-traitement au cours de processus de cuisson au four, et sachant que pour la régulation des diamètres moyens des bulles/pores (x_{50,3}) ainsi que pour l'amplitude de distribution de leurs tailles (SPAN) un ou plusieurs des paramètres systémiques suivants sont utilisés comme variables d'ajustement:
(a) Viscosité des différentes pâtes,
(b) Densité du nombre de particules de nucléation ajoutées au système de pâtes pour la génération de bulles,
(c) Flux massique des différentes pâtes,
(d) Part de gaz introduite, référée à la masse totale,
(e) Vitesse de rotation des vis sans fin d'extrusion,
(f) Surfaces des sections d'ouverture des vannes de dosage qui fixent - en fonction des variables d'ajustement (a) à (e) - les gradients spatiaux et temporels de détente de la pression, sachant que ces gradients sont en corrélation directe avec les gradients spatiaux et temporels correspondants de nucléation et d'expansion des bulles de gaz.

5. Procédé selon la revendication 1 ou l'une ou plusieurs des revendications suivantes, **caractérisé en ce que** l'amenée d'un système de fluides à base d'eau et/ou d'huile et de gaz est réglée pilotée et régulée en fonction de la recette des différentes pâtes, sachant que (A) le premier dosage de fluide a lieu au moyen du dispositif d'amenée de fluide-1 (7), avec une longueur axiale L1 de vis sans fin d'extrusion mesurée dans la direction du transport, longueur qui correspond à 2 à 8 fois le diamètre D de la vis sans fin d'extrusion (L/D = 2 à 8), et que le deuxième dosage de fluide a lieu au moyen du dispositif d'amenée de fuide-2 (12), avec une longueur axiale L2 de vis sans fin d'extrusion qui correspond à au moins 10 à 14 fois le diamètre D de la vis sans fin d'extrusion (L/D = 10 à 14), et que (B) le dosage du gaz de moussage a lieu dans l'extrudeuse - via le dispositif d'amenée (15) de gaz sous pression, sous la forme de CO₂ ou de N₂ ou de N₂O₂ ou d'air ou de mélange de ces gaz, sous une pression statique comprise entre 5 et 100 bars, de préférence à une pression comprise entre 15 et 35 bars, avec une part volumique de gaz comprise entre 5 et 70 % en vol. référés à l'état environnant des différentes pâtes hors pression - avec une longueur axiale L3 de vis sans fin d'extrusion qui correspond à au moins 12 à 16 fois le diamètre D de la vis sans fin d'extrusion (L/D = 12 à 16), tandis qu'à la plage de longueur de la zone de dispersion et de dissolution du gaz (30) s'applique au moins 12 ≤ L/D < 20, de préférence 14 ≤ L/D < 26 en cas d'utilisation d'une extrudeuse d'une longueur totale de 28D, sachant que par contre cette échelle de longueur L/D et toutes les échelles de longueur indiquées précédemment sont multipliées par le facteur (L/D)ₘₐₓ/28 en cas d'utilisation d'une extrudeuse affectée d'un facteur (L/D)ₘₐₓ différent de 28.

6. Procédé selon la revendication 1 ou l'une ou plusieurs des revendications suivantes, **caractérisé en ce que** le procédé est exécuté à une température inférieure à 160 °C, de préférence inférieure à 100 °C et de façon particulièrement préférentielle inférieure à 60 °C, et que les différentes pâtes moussées sont - après le déversement dans un récipient, un moule de coulée ou de cuisson, un moyen d'emballage ou sur un tapis convoyeur - soit cuites au four au moyen d'un processus de cuisson à convection ou d'un processus de cuisson au four combinant les micro-ondes et la convection, ou refroidies ou congelées à l'état fraîchement extrudé ou en partie cuit au four.

7. Dispositif de commande et/ou régulation pour un procédé selon la revendication 1 ou l'une ou plusieurs des revendications suivantes, comprenant une ou plusieurs vis sans fin d'extrusion motorisée(s) (2), qui sont chargées via un dispositif de dosage de produit pulvérulent ou en vrac configuré en trémie (5) avec organe de déversement, sachant que dans une zone d'amenée de fluide-1 (26) est amenée - au moyen d'un dispositif d'amenée de fluide-1 (7), à un mélange ruisselant pour différentes pâtes ou de poudre - une quantité spécifiquement définie par la recette de liquide à base d'eau et/ou d'huile, afin d'obtenir dans une zone de mélange (27) située en aval, différentes pâtes d'une haute viscosité dynamique η₁ (γ.) ≥ 10 Pas mesurée à l'aide d'un rhéomètre rotatif à une vitesse de cisaillement γ. = 100 s⁻¹ η₁ et sachant qu'à ces différentes pâtes est ajoutée par dosage, dans une zone d'amenée de fluide-2 (28), au moyen d'un dispositif d'amenée de fluide-2 (12) une quantité de fluide supplémentaire spécifique à la recette, afin d'ajuster les différentes pâtes sur une viscosité déterminée réduite de ≥ 10 %, de préférence de ≥ 50 %, de η₂ < η₁, et qu'en outre du gaz est ajouté en aval par dosage contrôlé dans une zone d'amenée de gaz sous pression (29) au moyen d'un dispositif d'amenée de gaz sous pression (15), en amont du flux, à distance axiale du dispositif d'amenée de fluide-2 (12), afin d'obtenir dans le produit fini une densité réduite par la formation de mousse, sachant qu'ensuite le gaz introduit est dissous ou microdispersé de façon homogène sous une pression statique réglée de façon contrôlée entre 5 et 100 bars, tandis qu'un capteur mesurant la conductivité électrique détermine le degré de dissolution et/ou de microdispersion de ce gaz dans la phase aqueuse de ces différentes pâtes afin d'afficher le degré d'atteinte d'une valeur d'équilibre de la solution gazeuse/la microdispersion pendant un temps de séjour spécifié des différentes pâtes à l'extrémité de la zone VI (30) de dispersion/dissolution du gaz dans la zone du dispositif (1) dite zone VII (31) de dissolution du gaz et zone de sortie de l'extrudeuse, sachant que sur la base de cette mesure, l'ajustement régulé de la part de gaz dispersé et/ou dissous est obtenu au moyen d'un circuit de régulation à boucle de rétrosignalisation faisant appel à des organes de réglage qui sont soit (a) un dispositif (24) à vanne de contre-pression configuré sous forme de vanne de contre-pression à bypass dans une phase préparatoire du processus de dosage, soit (b) au moins un dispositif à vanne de dosage (38) dans la phase de dosage activée du processus, et sachant que le degré d'ouverture de ces vannes détermine la pression statique dans la zone VI (30) de dispersion et dissolution du gaz et régule ainsi la cinétique de dispersion et/ou de dissolution et les parts du gaz et/ou mélange gazeux dissous et/ou microdispersé dans les différentes pâtes, ce qui est affiché par l'atteinte d'une valeur de conductivité K mesurée en ligne.

8. Dispositif de commande et/ou de régulation selon la revendication 7, **caractérisé en ce que**
A: le réglage de la viscosité des différentes pâtes a lieu dans la zone d'amenée du fluide-1 (26) est ajustée de façon contrôlée sur une valeur de 10 ≤ η₁ < 1000 Pas, de préférence sur 50 ≤ η₁ < 200 Pas, valeur qui garantit l'étanchéisation en amont du flux, par les différentes pâtes dans le conduit d'extrudeuse à vis sans fin (11), par rapport au reflux du gaz ou du fluide provenant de la zone d'amenée de fluide-2 IV (28) ou de la zone d'amenée de gaz sous pression V (29), sachant que la viscosité η₁ tient compte du comportement d'écoulement non newtonien de la pâte, en ce sens qu'elle se réfère à une vitesse de cisaillement représentative de 100 s⁻¹ qui agit dans la zone de mélange III (26), et que la fonction de viscosité afférente η₁ est déterminée hors ligne par rhéométrie des différentes pâtes au moyen d'un rhéomètre capillaire sous haute pression ou d'un rhéomètre rotatif, ainsi que
B: le réglage contrôlé de la viscosité des différentes pâtes a lieu dans la zone d'amenée de fluide-2 (28) sur une valeur comprise entre 1 Pas ≤ _{η2} < 20 Pas, de préférence entre 5 Pas ≤ _{η2} < 10 Pas, et qu'ainsi dans la phase fluide basse viscosité des différentes pâtes comparé à η₁, après amenée de gaz sous pression dans la zone d'amenée de gaz sous pression (29) dans la zone VI (30) au cours d'un temps de séjour de 30 à 300 s, de préférence de 50 à 120 s, du gaz est microdispersé et/ou dissous pour obtenir un degré de moussage dans le produit fini, exprimé sous forme de part volumique de gaz de φ_{G,V} dans le volume total du produit, dans une plage de 10 ≤ φ_{G,V} < 75 % en vol., de préférence 20 ≤ φ_{G,V} < 50 % en vol., et donc pour obtenir une densité du produit fini diminuée en lien avec ce qui précède, sachant que la viscosité η₂ tient compte du comportement d'écoulement non newtonien des différentes pâtes en ce sens qu'elle se réfère à une vitesse de cisaillement représentative de 200 s⁻¹ qui agit dans la zone VI (30) de dispersion et de dissolution du gaz, sachant que la fonction de viscosité η(γ.) afférente est déterminée hors ligne par rhéométrie capillaire sous haute pression ou par rhéométrie rotative.

9. Dispositif de commande et/ou de régulation selon les revendications 7 et 8, **caractérisé en ce que** le réglage de la pression statique dans la zone VI (30) de dispersion et de dissolution du gaz a lieu en fonction de la valeur de conductivité électrique κ mesurée dans la zone VII (31), située en aval, de mesure de la solution gazeuse et de sortie de l'extrudeuse, sachant que le degré d'atteinte d'une valeur d'équilibre - dépendante de la pression - de la conductivité électrique K_{equ} (p_{stat.}) sert de référentiel pour le degré de transition des substances gaz-pâte, qui est atteint pendant le temps de séjour des différentes pâtes dans le conduit d'extrudeuse à vis sans fin (2) à l'intérieur de la zone VI (30) de dispersion et de dissolution du gaz, et ainsi pour le réglage selon la spécification recette de la concentration c_{GAS} du gaz dispersé et/ou dissous dans les différentes pâtes sur la base déterminante de la valeur de conductivité κ déterminée en ligne, sachant que la combinaison pertinente du temps de séjour tᵥ₍₃₀₎ et/ou du débit volumique des différentes pâtes (dV/dt)_{produit} et de la pression statique pₛₜₐₜ₍₃₀₎ dans la zone VI (30) de dispersion et de dissolution du gaz est réglée sur la base d'une fonction de calibrage κ = f(pₛₜₐₜ₍₃₀₎, tv), fonction qui est déterminée au cours d'un essai préliminaire faisant appel à un couplage Extrudeuse (2) / Dispositif à vanne de contre-pression (24) et sachant qu'au cours de cet essai préliminaire faisant varier la surface libre A_{GDV} de la section du flux dans le dispositif à vanne de contre-pression (24), pour la vitesse choisie nₛ de la vis sans fin d'extrusion et pour le flux massique (dm/dt)_{produit} des différentes pâtes, sont déterminées et enregistrées dans une base de données la pression statique Pₛₜₐₜ₍₃₀₎ à l'extrémité de la zone VI (30) de dispersion et de dissolution du gaz ainsi que la conductivité électrique κ dans la zone suivante VII (31) de mesure du gaz en solution et de sortie de l'extrudeuse, détermination à partir de laquelle sont dérivés - pour le guidage régulier du processus avec dosage continuel - des combinaisons transmissibles des grandeurs processuelles mentionnées, en prenant pour référentiel le degré de moussage à atteindre dans la pâte dosée.

10. Dispositif de commande et/ou de régulation selon la revendication 7 ou l'une ou plusieurs des revendications suivantes, **caractérisé en ce qu'**avec un flux massique spécifié des différentes pâtes (dm/dt)_{produit} et une viscosité des différentes pâtes conditionnée par la recette, une régulation à boucle de rétrosignalisation avec une conductivité électrique spécifiée Kₛₑₜₚₒᵢₙₜ officiant de grandeur de guidage w est utilisée, sachant que sont incluses la pression statique pₛₜₐₜ₍₃₀₎ comme grandeur de régulation indirecte γ dans la zone VI (30) de dispersion et de dissolution du gaz et, comme grandeur de régulation, la conductivité électrique κ mesurée dans la zone VII (31) de mesure de la solution gazeuse et de sortie de l'extrudeuse, et sachant en outre que sont utilisés, comme organes de réglage, soit un dispositif à vanne de contre-pression (24) dans une conduite de bypass (23), ou au moins un dispositif à vanne de dosage (38) et/ou un dispositif d'amenée de gaz sous pression (15) et/ou un dispositif d'ajustement de vitesse couplé avec le moteur (3) entraînant les vis de l'extrudeuse pour obtenir la vitesse ns de vis sans fin d'extrudeuse, afin de stabiliser de manière définie, par régulation, la pression statique régnant dans la zone de dispersion du gaz et de dissolution du gaz (30), sachant qu'est mis en œuvre un dispositif à vanne de contre-pression (24) dans une conduite de bypass (23) au cours d'une séquence préparatoire (A) du processus régulier de dosage, afin de déterminer la pression statique pₛₜₐₜ₍₃₀₎ dans la zone VI (30) de dispersion et de dissolution du gaz, pression qui est obtenue dans les conditions processuelles réglées relativement au flux massique des différentes pâtes (dm/dt)_{produit}, du flux massique de gaz (dm/dt)_{Gaz} et de la vitesse de vis sans fin nₛ, avec spécification de la recette du produit et des géométries de vis sans fin, et pression qui définit le degré de dissolution du gaz et de microdispersion (dm/dt)_{Gaz(L,D)} / (dM/dt)_{Gaz}, mesuré via la conductivité électrique κ \[(dm/dt)_{Gaz(L,D)} / (dm/dt)_{Gaz}], degré qui se stabilise au cours du temps de séjour attribué réalisé tv(30) dans la zone VI (30) de dispersion et de dissolution du gaz, sachant que (dm/dt)_{Gaz} désigne le flux massique total de gaz rajouté dosé et (dm/dt)_{Gaz(L,D)} désigne les flux massiques de la part de gaz transformée en solution (dm/dt)_{Gaz(L)} et de la part de gaz microdispersée (dm/dt)_{Gaz(D)} non transformée en solution, sachant que ces deux dernières grandeurs dépendent en plus du type de gaz utilisé, et sachant que lors de la commutation - de cette séquence préparatoire (A) exécutée dans le bypass (23) avec dispositif à vanne de contre-pression (24) sur le processus de dosage normal (B) - processus au cours duquel est/sont activé(s) un ou plusieurs dispositif(s) à vanne de dosage (38) raccordé(s), ces dispositifs garantissent, par le réglage du(des) degré(s) d'ouverture de la/des vanne(s) de dosage, que la pression statique - et ainsi le degré de dissolution et/ou de dispersion du gaz mesuré via la conductivité électrique dans les différentes pâtes - sont présents au même niveau que dans séquence de test préparatoire au moyen du dispositif à vanne de contre-pression (24) dans la conduite de bypass (23), et que pour le déroulement normal du processus de dosage (B), 2n dispositifs à vanne de dosage (38) (avec n = 1 à 20, n désignant le demi-nombre de dispositifs à vanne de dosage (38)) mis en œuvre dosent en deux groupes alternés comprenant chacun n dispositifs à vanne, et qu'ainsi le niveau de pression statique demeure constant dans la zone VI (30) de dispersion et de dissolution du gaz lors de la commutation entre les deux demi-groupes de dispositifs à vannes de dosage conçus identiques quant aux pertes de pression dans le flux, hormis des fluctuations de pression de courte durée négligeable (< 0,5 s) lors de l'opération de commutation.

11. Dispositif pour exécuter le procédé selon la revendication 1 ou l'une ou plusieurs des revendications suivantes afin de mélanger et doser de manière combinée et continue différentes pâtes enrichies en gaz sous pression statique, pour confectionner des produits moussés, de préférence des produits de boulangerie/pâtisserie, et de préférence des produits de boulangerie/pâtisserie sans gluten en utilisant une ou plusieurs vis sans fin (2) motorisée(s) d'extrudeuse, chacune équipée d'une trémie de remplissage (5) pour une poudre ruisselante sèche ou des mélanges en vrac ruisselants secs, d'au moins deux dispositifs (9, 12) d'amenée de fluide disposés dans la direction de l'axe longitudinal de l'extrudeuse concernée, dispositifs au moyen desquels des quantités de fluide différentes pilotées ou régulées par des vannes sont amenées au conduit d'extrudeuse à vis sans fin (11), d'un dispositif d'amenée du gaz sous pression (15) via lequel du gaz sous pression comprise entre 5 et 100 bars est introduit dans le conduit d'extrudeuse à vis sans fin (11), et de dispositifs de mesure et de détection (32 à 36) - dans le sens du transport (X) - attribués au conduit d'extrudeuse à vis sans fin (11) dans des zones I à VII (25 à 31) spécifiques au processus, dispositifs qui mesurent la pression statique et/ou le développement de la pression statique le long du volume processuel d'extrusion ainsi que la part de gaz (19) dissoute et/ou microdispersée dans les différentes pâtes en aval de la zone VI (30) de dispersion et de dissolution du gaz, ainsi qu'équipée, disposé dans une conduite de bypass (23), d'un élément à vanne de pression statique pour le déversement des différentes pâtes configuré comme un dispositif à vanne de contre-pression (24), élément dont la section de sortie est modifiable en continu - et blocable dans la position de réglage respective - pour générer une contre-pression statique dans le conduit d'extrudeuse à vis sans fin (11) suite à l'utilisation d'un flexible haute pression (44) souple de section réglable au moyen de deux pistons ajustables (48, 49), et équipée d'au moins un dispositif à vanne de dosage (38) configuré comme élément à vanne de dosage pour le déversement des différentes pâtes, dispositif qui présente une ou plusieurs buse(s) de dosage, ces dernières disposées en groupe et présentant des sections de sortie du flux des buses interchangeables ou harmonisées quant à la pression de dosage, la viscosité du fluide et le flux massique de dosage.

12. Dispositif selon la revendication 11, **caractérisé en ce qu'**au moins un dispositif à vanne de dosage (38) configuré comme élément à vanne de dosage de déversement, dispositif qui est obturable par un piston ajustable (48) lequel - lorsque ce dispositif à vanne de dosage se trouve à l'état ouvert - libère la section de la buse de sortie et présente une surface A1 de la section de flux jusqu'à la chambre (61) de sortie de vanne et qui présente, en aval, sur une longueur de 1 à 40 mm, de préférence entre 5 et 15 mm dans le canal de sortie (67) de vanne, une section rétrécie de canal de flux avec surface de section A2, sachant que valent pour A2 ≤ 0,01 à 0,5 A1 et de préférence A2 ≤ 0,05 à 0,3 A1, et qu'en cas de dosage (a) d'une part est générée une contre-pression de ≥ 2 bars, de préférence ≥ 5 bars et de façon particulièrement préférentielle ≥ 10 bars en amont du dispositif à vanne de dosage (38) contre-pression dont l'effet remonte jusque dans la zone (30) de dispersion et de dissolution du gaz et que là un quantum ajusté de gaz en solution et/ou en dispersion est obtenu, et que (b) d'autre part une diminution de la pression statique a lieu seulement dans le canal de sortie (65) à buses de dosage, diminution qui entraîne une nucléation des bulles de gaz et le début de l'expansion des bulles d'air, et sachant que la section de sortie - obturable de façon étanche au moyen d'un piston ajustable (48) - présente de préférence une section annulaire du canal de flux se rétrécissant de forme conique, que la course de ce piston ajustable est réglable de façon contrôlée, manuellement ou de façon motorisée, et qu'ainsi, en présence d'une course augmentée, une section de flux annulaire augmentée se rétrécissant de forme conique est autorisable pour la masse des différentes pâtes à doser, sachant que la section de flux moyenne de ce canal annulaire conique est réglable en continu, de façon variable selon un facteur ≤ 2, de préférence d'un facteur ≤ 10, sur toute la plage de la longueur de course ajustable du coulisseau de vanne.

13. Dispositif pour réaliser le procédé selon les revendications 11 et 12, **caractérisé en ce que** pour la montée en pression régulée et la dissolution du gaz dans les différentes pâtes, est prévu un conduit d'extrudeuse à vis sans fin (11) d'une extrudeuse co-rotative à double vis sans fin, d'une longueur L/D = 14 à 50 (avec L = longueur du canal à vis sans fin et D = diamètre des vis sans fin), et que la longueur de l'extrudeuse est subdivisée en sept zones longues segmentées relativement à la fonction attribuée par la technique du procédé et équipées d'éléments à vis sans fin de géométries différentes présentant une longueur respective de segment comprise entre L/D = 2 et L/D = 10, et que les fonctions techniques du processus suivantes sont attribuées aux sept zones longues segmentées :
| | |
|---|---|
| Zone I: | Zone de réception et de compactage de poudre (25) ; dosage et compactage du mélange pulvérulent ; |
| Zone II: | Zone d'amenée du fluide-1 (26) ; première amenée de fluide |
| Zone III: | Zone de mélange (27) ; mélange/pétrissage et formation d'un bouchon hautement visqueux des différentes pâtes, qui étanche le conduit d'extrudeuse à vis sans fin par rapport aux zones IV et V. |
| Zone IV: | Zone d'amenée du fluide-2 (28) ; incorporation de fluide et diminution de la viscosité des différentes pâtes |
| Zone V: | Zone d'amenée de gaz (29) ; incorporation de la part de gaz sous pression statique jusqu'à 100 bars. |
| Zone VI: | Zone de dispersion et de dissolution du gaz (30) ; microdispersion et/ou dissolution de la part de gaz ajoutée dosée |
| Zone VII: | Zone de mesure de la solution gazeuse et de sortie d'extrudeuse (31) ; approche de l'état d'équilibre de la dispersion de gaz et/ou de la solution gazeuse, mesure de la pression statique et de la conductivité électrique, ainsi qu'introduction dans les conduites de bypass ou dans les conduites d'amenée |
| | |
|---|---|
| | aux buses de dosage. |
et **en ce que** conformément aux attributions fonctionnelles des zones I à VII les vis sans fin d'extrudeuse sont garnies d'éléments pour vis sans fin qui soutiennent - (i) sur le plan de la technique de flux, (ii) relativement au temps de séjour et (iii) relativement à l'apport de puissance - les fonctions attribuées sachant que - en fonction de la composition de la recette, de la cinétique de la solution gazeuse et de la cinétique de dispersion spécifique au système de pâtes - a lieu une modification d'environ ± 1 à 2 LD longueurs de segment des longueurs des zones (24 à 31) d'extrudeuse a lieu pour les fonctions attribuées précitées, de sorte à atteindre un état d'équilibre quant à la microdispersion du gaz et à la solution gazeuse dans la zone VI.

14. Produit, fabriqué selon un procédé conformément à la revendication 1 ou l'une ou plusieurs des revendications suivantes 2 à 6, **caractérisé en ce que** le produit est sans gluten, qu'il présente une part de protéines végétales avec gluten comprise entre 5 et 70 % en poids, de préférence entre 5 et 40 % en poids référés à la substance sèche, et une fraction volumique de gaz dans les différentes pâtes non post-traitées, fraction comprise entre 0,1 et 0,75, de préférence entre 0,25 et 0,5, ainsi que, dans le produit post-traité ou cuit au four, une part comprise entre 0,2 et 0,9, de préférence entre 0,3 et 0,7, sachant que (A) les différentes pâtes moussées de la sorte présentent des diamètres moyens de bulles de mousse et de pores x_{50,3} compris entre 4 et 200 micromètres, de préférence entre 20 et 100 micromètres, ainsi que des valeurs SPAN caractéristiques ((x_{90,3}-x_{10,3})/x_{50,3} avec x_{10,3}, X_{50.3}, X_{90,3} en tant que 10e percentile, 50e percentile, 90e percentile de la répartition des totaux volumiques des diamètres des bulles et pores) pour la quantification de la largeur de distribution des diamètres des bulles et des pores de ≤ 2, de préférence de ≤ 1,5, et de façon particulièrement préférentielle de ≤ 1, et sachant que (B) les structures mousseuses - obtenues par post-traitement de tels systèmes de différentes pâtes dans des processus de cuisson au four - présentent des diamètres moyens de bulles et de pores x_{50,3}= 10 à 250, de préférence entre 20 et 150 micromètres et des valeurs SPAN résultantes de ≤ 2,5, de préférence ≤ 1,5 et de façon particulièrement préférentielle ≤ 1.

15. Produit selon la revendication 14, **caractérisé en ce qu'**il contient (A) une part de protéines végétales comprise entre 5 et 70 % en poids, de préférence entre 10 et 50 % en poids référés à la substance sèche, (B), une part d'hydrates de carbone comprise entre 5 et 70 % en poids, de préférence entre 10 et 50 % en poids référés à la substance sèche, (C) une part de fibres végétales diverses comprise entre 3 et 30 % en poids, de préférence entre 5 et 15 % en poids référés à la substance sèche, (D) une part de graisse/d'huile comprise entre 0 et 30 % en poids, de préférence entre 5 et 10 % en poids référés à la substance sèche et 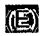 une part d'amidon natif, de préférence de l'amidon de pomme de terre, de maïs ou de riz entre ≥ 1 et 5 % en poids référés à la masse sèche, sachant que la part dernière citée se compose de préférence d'amidon natif de pomme de terre, de maïs ou de riz prétraité au moyen de cycles de congélation/dégel, ou de mélanges totaux de ces amidons en pourcentages égaux et que cette part dernière citée est opérante en tant que moyen de nucléation des bulles de gaz.

16. Utilisation d'un produit moussé, basé sur différentes pâtes, qui est fabriqué selon le procédé conformément à la revendication 1 et l'une ou plusieurs des revendications 2 à 6, comme base d'articles de biscuiterie/biscotterie, de préférence (A) des produits de biscuiterie/biscotterie ou des produits de boulangerie/pâtisserie frais sans gluten prêts à consommer, (B) comme base pour les produits de boulangerie/pâtisserie frais ou précuits et ensuite surgelés/congelés, (C) sous forme cuite au four ou sous forme stabilisée à la suite d'une dénaturation des protéines par un autre traitement thermique, sous forme d'ingrédient en morceaux inclus dans une friandise chocolatée, une crème glacée ou dans un autre produit à consommer comme dessert, ou dans un produit contenant des légumes ou un produit contenant du pâté de viande et/ou (D) comme ingrédient d'enrobage, de couverture ou de décoration superficielle de produits issus des domaines Confiserie chocolatées, Glaces alimentaires, Autres desserts, Fromages/Fromages frais, Produits carnés, Pâtés à base de viande/sans viande (végétariens ou végétaliens).
